(19) Europäisches Patentamt

European Patent Office

Office européen des brevets

(11) **EP 1 285 808 A1**

(12) **EUROPÄISCHE PATENTANMELDUNG**

(43) Veröffentlichungstag:
26.02.2003 Patentblatt 2003/09

(21) Anmeldenummer: 02020597.7

(22) Anmeldetag: 22.12.1997

(51) Int Cl.7: **B60K 31/00**, B60K 41/00, B60K 41/20, G01P 3/42, B60K 31/04, B60K 31/02, B60T 8/00

(84) Benannte Vertragsstaaten:
**DE FR GB IT**

(30) Priorität: **30.12.1996 DE 19654769**

(62) Dokumentnummer(n) der früheren Anmeldung(en) nach Art. 76 EPÜ:
**97954454.1 / 0 946 377**

(71) Anmelder: **Continental Teves AG & Co. oHG**
**60488 Frankfurt (DE)**

(72) Erfinder:
• **Gräber, Johannes**
**32429 Minden (DE)**

• **Eckert, Alfred**
**55129 Mainz-Hechtsheim (DE)**
• **Drumm, Stefan A.**
**55291 Saulheim (DE)**
• **Berthold, Thomas**
**64293 Darmstadt (DE)**
• **Diebold, Jürgen**
**65760 Eschborn (DE)**

Bemerkungen:
Diese Anmeldung ist am 18 - 09 - 2002 als Teilanmeldung zu der unter INID-Kode 62 erwähnten Anmeldung eingereicht worden.

(54) **Verfahren und Vorrichtung zur Fahrzeugsteuerung bzw.-regelung**

(57) Die Erfindung betrifft ein Verfahren und eine Vorrichtung zur Fahrzeugsteuerung bzw. -regelung. Einzelne Aspekte der Erfindung sind ein Verfahren zur Ermittlung einer Sollbeschleunigung aus mehreren Sollbeschleunigungen, zum Einstellen einer vorgegebenen Sollbeschleunigung, zur Fahrzeugfolgeregelung, zur Erzeugung eines hochwertigen Geschwindigkeitssignals, zur Bearbeitung einer Sollgeschwindigkeit, zur Ansteuerung von Bremsventilen, zur günstigen Gestaltung von Übergangszuständen, zur Fahrzeugabstandssteuerung bzw. -regelung, zur Bedienung eines Tempomaten und zur Einstellung der Kurvengeschwindigkeit. Außerdem betrifft die Erfindung eine Vorrichtung zur Durchführung der jeweiligen Verfahren.

Fig. 1

EP 1 285 808 A1

**Beschreibung**

Die vorliegende Anmeldung betrifft Verbesserungen bei der Fahrzeugsteuerung bzw. -regelung. Die in dieser Anmeldung genannten Aspekte können einzeln voneinander oder gemeinsam miteinander zur Anwendung kommen. Bei kombinierter Anwendung ergeben sich besondere Vorteile.

Ein erster Aspekt der vorliegenden Erfindung betrifft ein Verfahren und eine Vorrichtung zum Steuern bzw. Regeln eines Kraftfahrzeuges gemäß den Oberbegriffen der Ansprüche 1 und 10.

In modernen Fahrzeugregelungsverfahren bzw. -systemen gibt es verschiedenen Komponenten, die insbesondere auf die Regelung der Längsdynamik (Beschleunigung bzw. Abbremsen in Fahrtrichtung) Einfluß nehmen können bzw. wollen, um dem Fahrer, der bisher diese Aufgabe alleine zu bewältigen hatte, zu assistieren:

- der vom Fahrer gesteuerte Geschwindigkeitsregler (Tempomat),
- eine Fahrzeugfolgeregelung, mit der Abstände zu vorausfahrenden Fahrzeugen überwacht und eingehalten bzw. eingestellt werden,
- Kurvendynamikregelungen, die auch auf die Geschwindigkeit bzw. Beschleunigung in Fahrtrichtung Einfluß nehmen,
- Motor/Getriebe-Regelungen, die einen Motor unter technisch/ökonomisch/ökologischen Gesichtspunkten regeln,
- Bremsenregelungen z. B. abstandsgestützter Bremsassistent, analoger Bremsassistent.

Die obige, auch derzeit sicher nicht abschließende Aufzählung von Systemkomponenten geben jeweils nach ihren Kriterien ermittelte Sollwerte für entweder Beschleunigung oder Geschwindigkeit des Fahrzeugs vor. Es ergibt sich somit die Notwendigkeit, die verschiedenen Sollwertquellen zu koordinieren, um Motor und Bremse geeignet steuern zu können.

Ein bekanntes Beispiel einer solchen Koordination ist das Zusammenspiel zwischen Fahrerwunsch (Gaspedal), Tempomat und Fahrzeugfolgeregelung. Dabei gibt die Fahrzeugfolgeregelung, falls notwendig, dem Tempomaten geeignete Sollgeschwindigkeiten vor, damit die Fahrzeugfolgeregelung ihr Regelungsziel erreichen kann. Damit ist die Fahrzeugfolgeregelung seriell zum Tempomaten geschaltet. Der Fahrerwunsch in Form der Fahrpedalbetätigung wird dabei üblicherweise so in das System eingebunden, daß er die automatisch erzeugten Signale überschreibt. Bei einer Bremsung schaltet das Längsdynamikregelsystem ab.

Das obige System bzw. Verfahren hat den Nachteil, daß das dynamische Verhalten der Folgeregelung nicht besser als das des Tempomaten sein kann. Es hat sich gezeigt, daß das dynamische Verhalten nicht ausreicht.

Aufgabe dieses Aspekts der Erfindung ist es, ein Verfahren und eine Vorrichtung für die Fahrzeugregelung anzugeben, mit denen geeignete Führungsgrößen für die Fahrzeugregelung ermittelt werden können.

Diese Aufgabe wird mit den Merkmalen der Ansprüche 1 und 10 gelöst. Abhängige Ansprüche sind auf bevorzugte Ausführungsformen der Erfindung gerichtet.

Um eine ausreichende Dynamik zu erzielen, erfolgen erfindungsgemäß die Regeleingriffe nicht über den Umweg Geschwindigkeitsregler sondern direkt, vergleichbarzu den Fahrereingriffen Bremsen und Gasgeben. Diese Fahrereingriffe verändern als Regelgröße die Längebeschleunigung des Fahrzeugs; die Längsbeschleunigung wird als Regelgröße gewählt.

Nachfolgend werden Bezug nehmend auf die Zeichnungen einzelne Ausführungsformen der Erfindung beschrieben, es zeigen:

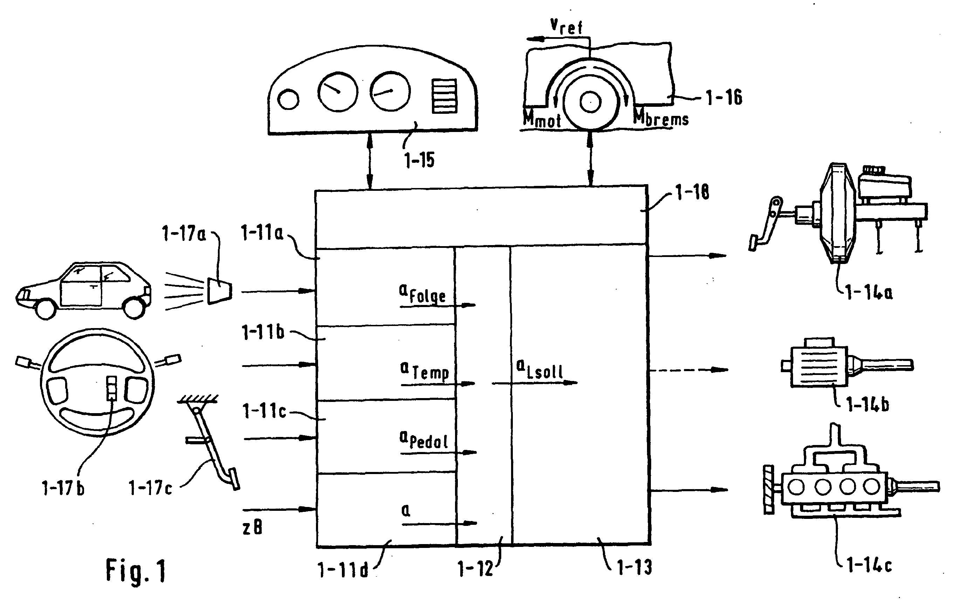

Fig. 1 eine erste erfindungsgemäße Ausführungsform.

Bezug nehmend auf Fig. 1 wird nachfolgend eine erfindungsgemäße Ausführungsform beschrieben.

Beispielhaft zeigt Fig. 1 verschiedene Quellen für Sollwertvorgaben. Mit 1-17a - c sind verschiedene Sensoren bezeichnet, nach deren Maßgabe Sollbeschleunigungen erzeugt werden. 1-17a bezeichnet einen Abstandssensor, mit dem der Abstand zum vorausfahrenden Fahrzeug bestimmt wird. Nach Maßgabe des Signals vom Sensor 1-17a bestimmt eine Fahrzeugfolgeregelung 11a eine für die Fahrzeugfolgeregelung geeignete Fahrzeugbeschleunigung $a_{Folge}$. Mit 1-17b sind Tasten symbolisiert, die sich am Lenkrad befinden, oder ein Lenkstockschalter, mit denen bzw. dem der Tempomat beeinflußt werden kann. Die Tastatur kann Tasten zum Setzen, Erhöhen, Erniedrigen oder Wiederaufnehmen einer bestimmten Sollgeschwindigkeit aufweisen. Nach Maßgabe der über solche Tasten eingegebenen Befehle bzw. sonstiger Betriebsbedingungen ermittelt der Tempomat 1-11b eine zur Erreichung seines Regelungsziels gewünschte Beschleunigung $a_{Temp}$. Über Pedale 1-17c (Bremspedal und Gaspedal, ggf. Kupplung) kann ein Fahrer das Fahrzeug wunschgemäß direkt beeinflussen. Eine geeignete Regelung 1-11c ermittelt aus diesen Größen sowie aus sonstigen Betriebsbedingungen eine Beschleunigung $a_{Pedal}$. Bezugsziffer 1-11d symbolisiert weitere Quellen für Beschleunigungzwischenwerte, beispielsweise eine Kurvengeschwindigkeitsanpassung oder eine Fahrstabilitätsregelung.

Erfindungsgemäß wird vorgeschlagen, die verschiedenen Einzelsollbeschleunigungen durch die jeweils "zuständigen" Komponenten 1-11a - 1-11d funktionell parallel zu erzeugen, die so erzeugten Einzelsollängsbeschleunigungen parallel einer Koordinationseinrichtung 1-12 zuzuführen und in dieser Koordinationseinrichtung in geeigneter Weise daraus eine resultierende Sollängsbeschleunigung $a_{Lsoll}$ zu ermitteln.

Diese Beschleunigung $a_{Lsoll}$ wird einem Beschleunigungsregler 1-13 eingegeben, der nach dieser Maßgabe die verschiedenen Fahrzeugaktoren wie Bremse 1-14a und/oder Getriebe 1-14b und/ oder Motor 1-14c betätigt.

Die Koordinatoreinrichtung 1-12 kann verschiedene Ausgestaltungen erfahren. In einem einfachen Fall ist die Koordinationseinrichtung 1-12 so ausgelegt, daß sie den kleinsten aller ihr eingegebenen Werte als Sollwert $a_{Lsoll}$ an den Beschleunigungsregler 1-13 ausgibt. Dabei ist "der kleinste Wert" im mathematischen Sinne zu verstehen, d. h. unter Berücksichtigung des Vorzeichens. Die Koordinationseinrichtung 1-12 kann aber auch ein gewichtetes Mittel aus den von ihr empfangenen Werten bilden, wobei die Gewichtungen ggf. situativ angepaßt bzw. verschoben werden können. Die Zustandsgrößen im Fahrzeug und um das Fahrzeug herum werden durch Sensoren 1-16 und 1-17a - c erfaßt. Die von diesen Sensoren gelieferten Werte können zur Steuerung der Gewichtung bzw. der Auswahl einzelner, der Koordinatoreinrichtung 1-12 eingegebener Einzelsollbeschleunigungswerte herangezogen werden.

Die einzelnen Sollwerte erzeugenden Komponenten 1-11a - d liegen und arbeiten damit funktionell parallel zueinander. Damit ist es möglich, den einzelnen Komponenten verschiedene Charakteristika zu geben, ohne daß solche Charakteristika durch nachfolgende Komponenten wieder verwischt würden. Beispielsweise ist es möglich, den Tempomaten auf "weich" einzustellen, während die Abstandsfolgeregelung auf "unmittelbar" eingestellt werden kann. Im erfindungsgemäßen System kann die Koordinatoreinrichtung 1-12 dann beispielsweise bei konkurrierend auftretenden Signalen aus Tempomat 1-11b und Fahrzeugfolgeregelung 1-11a die von der Fahrzeugfolgeregelung 1-11a ausgegebene Beschleunigung $a_{Folge}$ auswählen und als Beschleunigung $a_{Lsoll}$ dem Beschleunigungsreg-ler 1-13 zuführen, ohne daß die "unmittelbare" Charakteristik der Fahrzeugfolgeregelung durch die "weiche" Charakteristik des Tempomaten 1-11b wieder verwischt würde. Im eingangs beschriebenen bekannten Beispiel wäre es dagegen so, daß das Ausgangsergebnis der Fahrzeugfolgeregelung durch den nachgeschalteten Tempomaten bewertet und damit ggf. verwaschen würde.

Die die Sollwerte erzeugenden Komponenten 1-11a - 1-11d sind nicht auf die obigen Beispiele beschränkt. Im Zuge der Fortentwicklung der Fahrzeugregelung können weitere Komponenten hinzukommen, die individuell Sollwerte erzeugen. Sie können parallel zu den übrigen schon vorhandenen Komponenten geschaltet werden und in die Koordinierung durch die Koordinatoreinrichtung 1-12 miteinbezogen werden.

Das gesamte System wird durch eine Kontroll- und Sicherheitslogik 1-18 überwacht, die den Regelablauf sicherstellt und bei Ausfall einzelner Komponenten entsprechende Maßnahmen wie Teilabschaltung, Vollabschaltung o.ä. ergreift. Eine Adaption verschiedener Kennlinien auf verschiedene Fahrerklassen über die Beobachtung des Fahrerverhaltens, der Fahrzeugreaktion und der Umfeldverhältnisse ist ebenfalls möglich. Die Kontroll- und Sicherheitslogik 1-18 überwacht auch die Benutzerschnittstelle 1-15, indem ihr geeignete Signale zugeführt und von ihr die empfangenen Signale empfangen werden.

Ein weiterer Aspekt der vorliegenden Erfindung betrifft ein Verfahren und eine Vorrichtung für die Fahrzeugfolgeregelung.

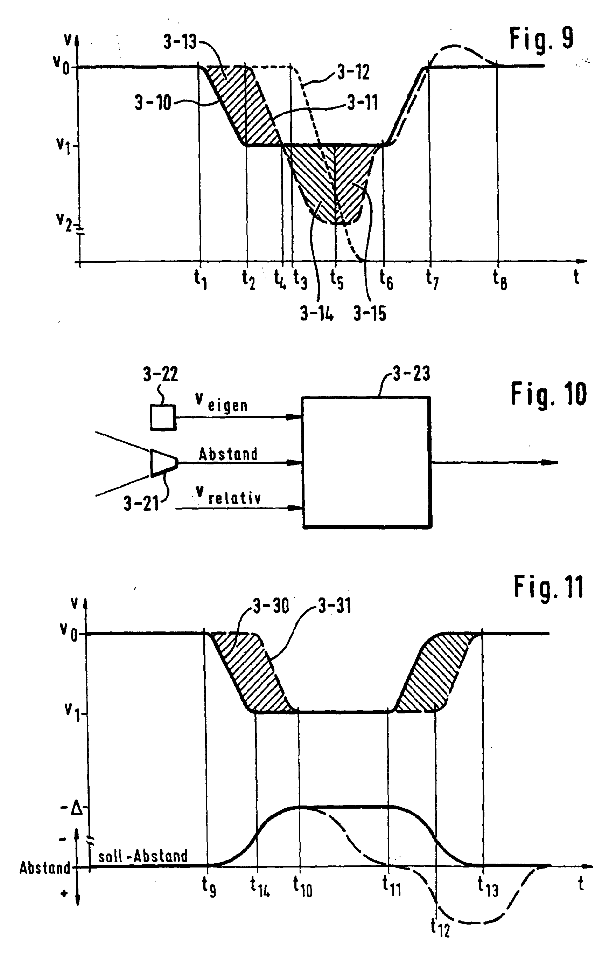

Ein im modernen Straßenverkehr immer wieder auftretendes Problem ist das Auftreten von Staus auf dicht befahrenen Straßen ohne ersichtlichen Anlaß. Solche Staus treten insbesondere bei Kolonnenfahrten auf, also dann, wenn viele Fahrzeuge hintereinander herfahren, wobei ihre individuelle Geschwindigkeit nicht durch jeweils den freien Willen des jeweiligen Fahrers, sondern durch die Geschwindigkeit des vorausfahrenden Fahrzeugs bestimmt ist. Anhand Fig. 9 wird das Auftreten solcher Staus erklärt.

Fig. 9 zeigt Geschwindigkeitsverläufe verschiedener Fahrzeuge. Kurve 3-10 zeigt die Geschwindigkeit eines vorausfahrenden Fahrzeugs, Kurve 3-11 die Geschwindigkeit eines unmittelbar folgenden Fahrzeugs. Ausgegangen wird nun vom stationären Zustand, in dem die beiden Fahrzeuge mit konstanter Geschwindigkeit $v_0$ hintereinander herfahren. Es wird dann angenommen, daß das vorausfahrende Fahrzeug zum Zeitpunkt $t_1$ abbremst und danach mit verminderter Geschwindigkeit $v_1$ weiterfährt. Kurve 3-10 zeigt somit ab dem Zeitpunkt $t_1$ ein Abfallen der Geschwindigkeit von $v_0$ bis $v_1$. Damit stellt sich ein Zustand ein, daß die Geschwindigkeit des folgenden Fahrzeugs (Kurve 3-11) ab dem Zeitpunkt $t_1$ höher ist als die Geschwindigkeit des vorausfahrenden Fahrzeugs (Kurve 3-10). Um das Auffahren zu verhindern, muß das folgende Fahrzeug früher oder später ebenfalls abbremsen. Nun kann das folgende Fahrzeug der Geschwindigkeitsänderung des vorausfahrenden Fahrzeugs nicht unmittelbar folgen. Zumindest die Reaktionszeit des Fahrers des nachfolgenden Fahrzeugs verstreicht, bis zum Zeitpunkt $t_2$ das folgende Fahrzeug ebenfalls seine Geschwindigkeit verringert. Bis zum Zeitpunkt $t_4$, an dem sich die Geschwindigkeit des folgenden Fahrzeugs derjenigen des vorausfahrenden Fahrzeugs angeglichen hat, ist die Geschwindigkeit des folgenden Fahrzeugs höher als die des vorausfahrenden. Deshalb verringert sich bis zum Zeitpunkt $t_4$ der Abstand zwischen beiden Fahrzeugen. Die Abstandsverringerung entspricht dabei der Fläche (Integral) zwischen den beiden Kurven. Bis zum Zeitpunkt $t_4$ hat sich damit der Abstand zwischen den beiden Fahrzeugen verringert. Um diese Verringerung auszugleichen, wird das folgende Fahrzeug weiter abgebremst. Üblicherweise geschieht dies so, daß die Geschwindigkeit solange verringert wird, bis der ursprüngliche Abstand bzw. ein der neuen Geschwindigkeit entsprechender Abstand zwischen den beiden Fahrzeugen wieder hergestellt ist. In Fig. 9 wird dies zum Zeitpunkt $t_5$ angenommen. Zwischen dem Zeitpunkt $t_4$ und $t_5$ ist die Geschwindigkeit des folgenden Fahrzeugs geringer als die des vorausfahrenden Fahrzeugs, so daß sich der Abstand zwischen beiden wieder erhöht. Die Fläche 3-14 zwischen den beiden Kurven 3-10 und 3-11 entspricht dann der Abstandsvergrößerung. Wenn der ursprüngliche Abstand wieder hergestellt ist, beginnt der Beschleunigungsvorgang, um die Geschwindigkeit des vorausfahrenden Fahrzeugs wieder aufzunehmen. Da ab dem Zeitpunkt $t_5$ die Geschwindigkeit des folgenden Fahrzeugs immer noch niedriger ist als die des vorausfahrenden Fahrzeugs, wird sich der Abstand zwischen beiden weiter erhöhen, bis sie zum Zeitpunkt $t_6$ die gleiche Geschwindigkeit haben. Die weitere Abstandszunahme entspricht der Fläche 3-15. Um diesen Betrag ist der Abstand zum Zeitpunkt $t_6$ größer als vor dem Zeitpunkt $t_1$. Er kann später (etwa zwischen den Zeitpunkten $t_7$ und $t_8$) wieder aufgeholt werden, indem das folgende Fahrzeug schneller fährt als das vorausfahrende Fahrzeug.

Somit ergibt sich, daß es Zeiträume gibt, in denen die Geschwindigkeit des folgenden Fahrzeugs niedriger ist als diejenige des vorausfahrenden Fahrzeugs. Im erläuterten Beispiel ist dies zwischen den Zeitpunkten $t_4$ und $t_6$ der Fall. Wenn hinter dem folgenden Fahrzeug ein weiteres, drittes Fahrzeug fährt, werden sich zwischen diesen beiden letztgenannten Fahrzeugen ähnliche Vorgänge abspielen wie zwischen den beiden anfänglich betrachteten Fahrzeugen. Dies führt dazu, daß das dritte Fahrzeug eine Minimalgeschwindigkeit einnimmt, die geringer sein wird als die geringste Geschwindigkeit des zweiten Fahrzeugs. In Fig. 9 ist dies schematisch durch die Kurve 3-12 angedeutet. Somit kann sich der Vorgang aufschaukeln, so daß es zum völligen Verkehrsstillstand kommt.

Dabei spielt es keine Rolle, ob die Fahrzeuge frei von ihrem jeweiligen Fahrer geführt werden oder ob eine ICC-Regelung (Intelligent Cruise Control) stattfindet. Auch eine ICC-Regelung weist Reaktionszeiten auf, die dazu führen, daß sich Abstände zwischen hintereinander fahrenden Fahrzeugen verringern, wenn das vorausfahrende Fahrzeug abbremst. Solche Abstandsverringerungen werden durch Abbremsen des folgenden Fahrzeugs bis unter die Mindestgeschwindigkeit des vorausfahrenden Fahrzeugs ausgeglichen, wie bezugnehmend auf Fig. 9beschrieben.

Aufgabe dieses Aspekts der Erfindung ist es, ein Verfahren und eine Vorrichtung zur Fahrgeschwindigkeitsregelung anzugeben, mit der Auswirkungen von Reaktions- bzw. Verzögerungszeiten verringert bzw. vermieden werden.

Diese Aufgabe wird gemäß den Merkmalen der unabhängigen Ansprüche 43, 44, 47 und 48 gelöst, davon abhängige Ansprüche sind auf bevorzugte Ausführungsformen dieses Aspekts der Erfindung gerichtet.

Bezugnehmend auf die Zeichnungen werden nun einzelne Ausführungsformen dieses Aspekts der Erfindung beschrieben, es zeigen:

Fig. 9 ein Zeitdiagramm zur Erläuterung des Zustandekommens mens spontaner Staus,

Fig. 10 schematisch einen Abstandsregler, und

Fig. 11 Verläufe von Geschwindigkeiten und Abstand bei Regelung gemäß einer erfindungsgemäßen Ausführungsform.

Fig. 10 zeigt einen Abstandsregler. Er empfängt Eingangssignale, die von einer vergleichsweise hochentwikkelten Sensorik geliefert werden. Unter anderem empfängt er Signale, die den Abstand und die Relativgeschwindigkeit des eigenen Fahrzeugs von bzw. gegenüber einem vorausfahrenden Fahrzeug angeben. Darüber hinaus kennt der Regler die eigene Geschwindigkeit. Der Regler ist dazu ausgelegt, aus zumindest den obigen Eingangssignalen Steuersignale für das eigene Fahrzeug zu erzeugen. Diese Steuersignale können Steuersignale umfassen, die sowohl zu einer Beschleunigung als auch zu einem Abbremsen des Fahrzeugs führen. Eine Beschleunigung des Fahrzeugs kann erreicht werden, indem der Abstandsregler Signale ausgibt, die beispielsweise den digitalisierten Signalen eines Gaspedals entsprechen. Diese Ausgabesignale werden dann von einer nachfolgenden Motorregelung in geeigneter Weise verarbeitet. Genausogut sind direkte Ansteuersignale für die Drosselklappe denkbar, gegebenenfalls in Verbindung mit Signalen für die Einspritzdauer, um die Geschwindigkeit direkt zu erhöhen. Über Gaspedal- und Drosselklappensignale kann auch eine Verminderung der Fahrzeuggeschwindigkeit bewirkt werden (Motorbremse). Darüber hinaus kann der ICC-Regler Signale ausgeben, die zu einer aktiven Abbremsung des Fahrzeugs führen, indem das Bremssystem direkt oder indirekt angesteuert wird.

Das anhand Fig. 9 beschriebene Problem des Auftretens spontaner Staus bei Kolonnenfahrt kann dadurch verringert werden, daß im Falle, daß zwei Fahrzeuge hintereinander herfahren, die Geschwindigkeit des hinteren Fahrzeugs so geregelt wird, daß entweder die Geschwindigkeit des vorausfahrenden Fahrzeugs nicht unterschritten wird, oder daß der für eine gegebene Geschwindigkeit angemessene Sicherheitsabstand erst mit zeitlicher Verzögerung eingestellt wird. Zwischenzeitlich wird ein verringerter Abstand zwischen den Fahrzeugen in Kauf genommen. Es ergibt sich dann beispielsweise ein Geschwindigkeits- und Abstandsverlauf wie in Fig. 11 gezeigt. Kurve 3-30 zeigt die Geschwindigkeit des vorausfahrenden Fahrzeugs, Kurve 3-31 die Geschwindigkeit des folgenden Fahrzeugs. Kurve 3-30 entspricht qualitativ der Kurve 3-10. Nicht zu vermeiden ist auch bei moderner Technik eine Verzögerungszeit zwischen Bremsbeginn des vorausfahrenden Fahrzeugs und Bremsbeginn des folgenden Fahrzeugs. Die ICC-Regelung kann aber geeignete Regelungsziele vorgeben, um negative Auswirkungen, wie sie in Fig. 9 auftreten, zu vermeiden. Fig. 11 zeigt den Fall, daß die ICC-Regelung die Geschwindigkeit des nachfolgenden Fahrzeugs (Kurve 3-31) so regelt, daß auf das Abbremsen des vorausfahrenden Fahrzeugs hin zeitversetzt ebenfalls abgebremst wird, aber die Geschwindigkeit des vorausfahrenden Fahrzeugs nicht unterschritten wird. Ein anderes Regelungsziel kann es sein, beim Erkennen des Abbremsens des vorausfahrenden Fahrzeugs zeitweise kürzere Abstände zwischen vorausfahrendem Fahrzeug und folgendem Fahrzeug zuzulassen als dies im stationären Zustand der Fall wäre.

Fig. 11 zeigt das Regelungsziel, die Geschwindigkeit des nachfolgenden Fahrzeugs nicht unter die Geschwindigkeit des vorausfahrenden Fahrzeugs absinken zu lassen. Zwischen den Zeitpunkten $t_9$ und $t_{10}$ ist die Geschwindigkeit des folgenden Fahrzeugs (Kurve 3-31) höher als die Geschwindigkeit des vorausfahrenden Fahrzeugs (Kurve 3-30). Somit verringert sich zwischen den genannten Zeitpunkten der Abstand zwischen den beiden Fahrzeugen. Die Abstandsverringerung entspricht dem Integral über der Relativgeschwindigkeit. Die Abstandsverringerung ist im unteren Teil der Fig. 11 gezeigt. Im oberen Teil entspricht die Abstandsverringerung bildlich der Fläche zwischen den Kurven 3-30 und 3-31, im unteren Teil ist der Wert als -$\Delta$ gekennzeichnet. Um diesen Wert -$\Delta$ hat sich der Abstand zwischen den beiden Fahrzeugen zwischen $t_9$ und $t_{10}$ verringert. Wenn dann ab dem Zeitpunkt $t_{10}$ die Geschwindigkeit der beiden Fahrzeuge gleich ist, wird dieser Abstand konstant eingehalten. Dadurch ist vorläufig der negative Effekt aus Fig. 9 vermieden. Die Geschwindigkeit des folgenden Fahrzeugs sinkt nicht unter die Geschwindigkeit des vorausfahrenden Fahrzeugs, so daß der Effekt sich insbesondere bei vielen aufeinanderfolgenden Fahrzeugen nicht aufschaukeln kann.

Im weiteren zeitlichen Verlauf sind verschiedene Maßnahmen denkbar. Fig. 11 zeigt den Fall, daß das vorausfahrende Fahrzeug wieder beschleunigt (Zeitpunkt $t_{11}$). Für diesen Fall kann die ICC-Regelung so ausgelegt sein, daß sie der Beschleunigung des vorausfahrenden Fahrzeugs nicht unmittelbar folgt, sondern zeitverzögert erst zum Zeitpunkt $t_{12}$. Danach wird das nachfolgende Fahrzeug solange beschleunigt, bis es die Geschwindigkeit des vorausfahrenden Fahrzeugs zum Zeitpunkt $t_{13}$ wieder eingenommen hat. Vorzugsweise ist dann der Abstand der gleiche wie vor dem Zeitpunkt $t_9$. Vorzugsweise ist der Zeitversatz $t_{12} - t_{11}$ zwischen eigener Beschleunigung und Beschleunigung des vorausfahrenden Fahrzeugs genauso groß wie der Zeitversatz zwischen Beginn des Abbremsens des vorausfahrenden Fahrzeugs und Beginn des Abbremsens des folgenden Fahrzeugs.

Wenn das vorausfahrende Fahrzeug zum Zeitpunkt $t_{11}$ nicht beschleunigt, sondern mit konstanter Geschwindigkeit weiterfährt, kann die ICC-Regelung so ausgelegt sein, daß sie die Sollgeschwindigkeit des nachfolgenden Fahrzeugs so vorgibt, daß sie geringfügig unter der Geschwindigkeit $v_1$ des vorausfahrenden Fahrzeugs liegt. Vorzugsweise wird diese etwas verringerte Geschwindigkeit erst nach Ablauf einer bestimmten Zeitspanne nach Einnehmen der geringeren konstanten Geschwindigkeit $v_1$ (Zeitpunkt $t_{10}$) vorgegeben. Diese verringerte Vorgabegeschwindigkeit wird solange eingehalten, bis der für die Geschwindigkeit $v_1$ gewünschte Abstand zwischen den Fahrzeugen erreicht ist.

Wenn als Regelungsziel "Geschwindigkeit des folgenden Fahrzeugs nicht unter der Geschwindigkeit des vorausfahrenden Fahrzeugs" vorgegeben ist, kann überprüft werden, ob während des Abbremsens des folgenden Fahrzeugs (vor dem Zeitpunkt $t_{10}$ in Fig. 11) der Abstand zwischen den beiden Fahrzeugen unter einen gegebenenfalls geschwindigkeitsabhängigen Mindestwert fällt, der nicht unterschritten werden darf. Wenn er unterschritten wird, kann die Bremskraft erhöht werden und gegebenenfalls auch das obengenannte Regelungsziel verlassen werden, so daß in diesem Falle die Geschwindigkeit des folgenden Fahrzeugs doch unter die Geschwindigkeit des vorausfahrenden Fahrzeugs fällt. Damit ist sichergestellt, daß die ICC-Regelung bei der Verhinderung von Kollisionen assistierend eingreifen kann.

Die ICC-Regelung kann auch so ausgelegt sein, daß sie im Falle, daß ein Abbremsen des vorausfahrenden Fahrzeugs erkannt wird, kurzzeitig vergleichsweise geringere Abstände als im stationären Zustand zwischen den beiden Fahrzeugen zuläßt. Dieses Zulassen kürzerer Abstände kann auch noch für einen Zeitraum übernommen werden, in dem das vorausfahrende Fahrzeug nach dem Abbremsen eine konstante geringere Geschwindigkeit eingenommen hat. In Fig. 11 wäre das die Geschwindigkeit $v_1$ ab dem Zeitpunkt $t_{14}$. Die im stationären Zustand zugelassenen Mindestabstände bzw. die in dynamischen Übergangszuständen zuzulassenden Mindestabstände können geschwindigkeitsabhängig sein und in Tabellen bzw. Kennfeldern abgelegt sein. Ähnlich wie bei der weiter oben genannten Ausführungsform kann nach Ablauf einer weiteren Zeitspanne der für stationäre Zustände eigentlich vorgesehene Abstand eingestellt werden, indem das eigene Fahrzeug geringfügig abgebremst wird, bis der für den stationären Zustand - und gegebenenfalls für die entsprechende Geschwindigkeit passende - Abstand zwischen den beiden Fahrzeugen wieder eingestellt ist. Danach kann beschleunigt werden, bis die beiden Fahrzeuge die gleiche Geschwindigkeit haben.

Die oben beschriebene Regelung kann durch einen geeignet programmierten Rechner implementiert werden, der die oben erwähnten Eingangsgrößen aufnimmt und die ebenfalls beschriebenen Steuersignale liefert. Solche Systeme sind zeitdiskret abtastend aufgebaut, die Signalverarbeitung erfolgt digital.

Ein weiterer Aspekt der vorliegenden Erfindung betrifft ein Verfahren und eine Vorrichtung zum Erzeugen eines eine Fahrzeuggeschwindigkeit angebenden Geschwindigkeitssignals.

Für die verschiedensten Aufgaben im Bereich der Fahrzeugsteuerung bzw. -regelung wird ein genaues Geschwindigkeitssignal benötigt. Bisher wird das Geschwindigkeitssignal entweder direkt von einem Sensor geliefert oder einem Ausgang einer ABS-Regelung entnommen. Solche Signale sind aber stark durch Rauschen überlagert, so daß sie in manchen Anwendungen, z.B. in ICC-Systemen, nicht ohne weiteres eingesetzt werden können.

Aufgabe dieses Aspekts der Erfindung ist es, ein Verfahren und eine Vorrichtung anzugeben, mit denen ein genaues Geschwindigkeitssignal mit nur geringer Zeitverzögerung erhalten werden kann.

Diese Aufgabe wird gemäß den Merkmalen der Ansprüche 51 und 60 gelöst. Abhängige Ansprüche sind auf bevorzugte Ausführungsformen der Erfindung gerichtet.

Im Rahmen der Untersuchung des o.g. Problems haben die Erfinder festgestellt, daß Rauschen das Geschwindigkeitssignal nicht gleichmäßig über den Frequenzbereich verteilt stört, sondern daß einzeln unterscheidbare Störkomponenten vorliegen. Insbesondere stellten die Erfinder fest, daß einerseits durch ein Frequenzband lokalisierbare Anteile und andererseits höherfrequente Anteile das Geschwindigkeitssignal stören. Ein insbesondere stark gestörtes Frequenzband liegt im Bereich von $f_0 = 1$ bis 4 Hz, außerdem sind Frequenzen ab ca. $f_1 = 8$ Hz stark verrauscht.

Bezugnehmend auf die Zeichnungen werden nun einzelne Ausführungsformen der Erfindung beschrieben. Es zeigen:

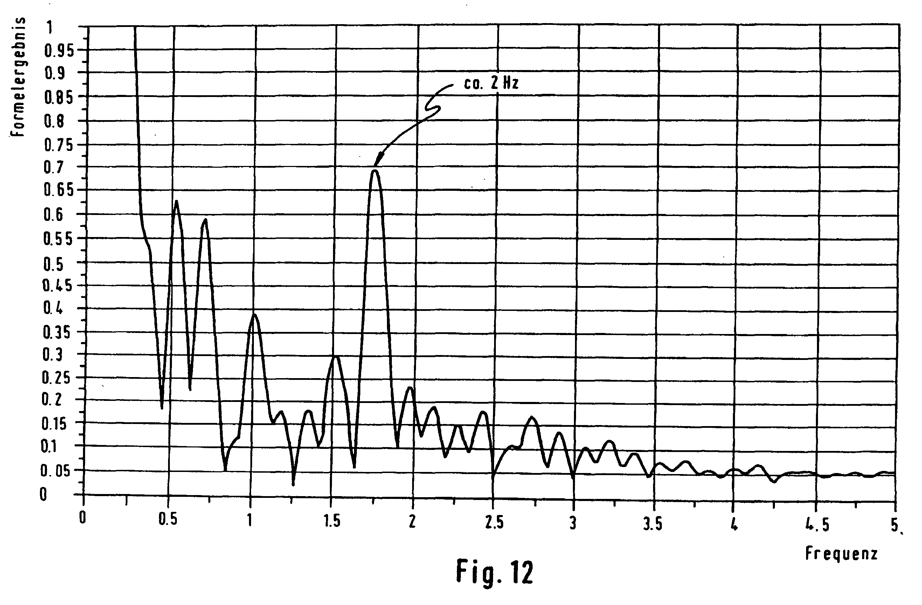

Fig. 12 das Spektrum eines unbearbeiteten Geschwindigkeitssignals,

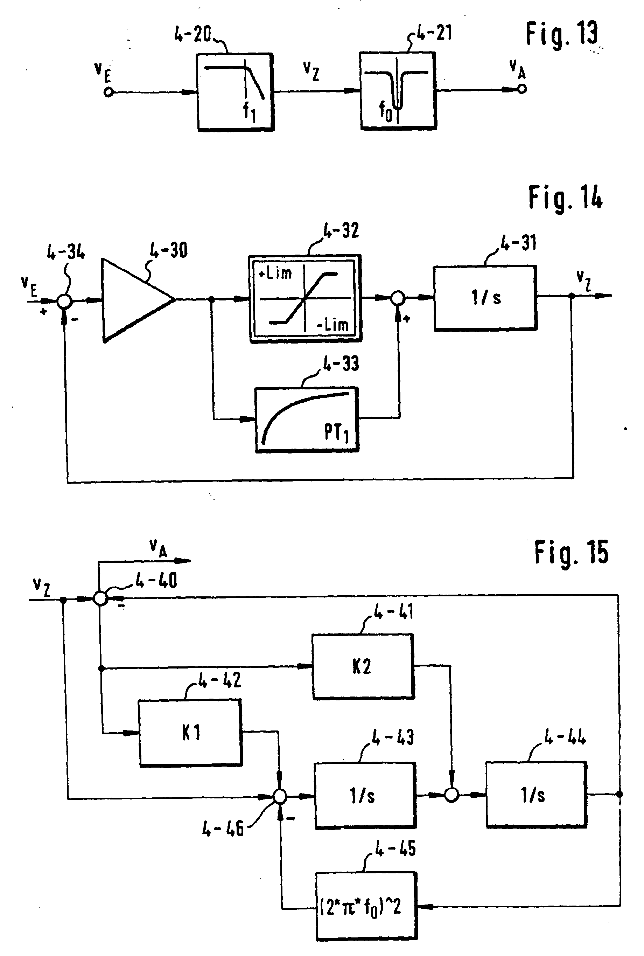

Fig. 13 ein prinzipielles Blockschaltbild der Erfindung,

Fig. 14 eine Ausführungsform des Tiefpasses aus Fig. 13,

Fig. 15 eine Ausführungsform der Bandsperre aus Fig. 13,

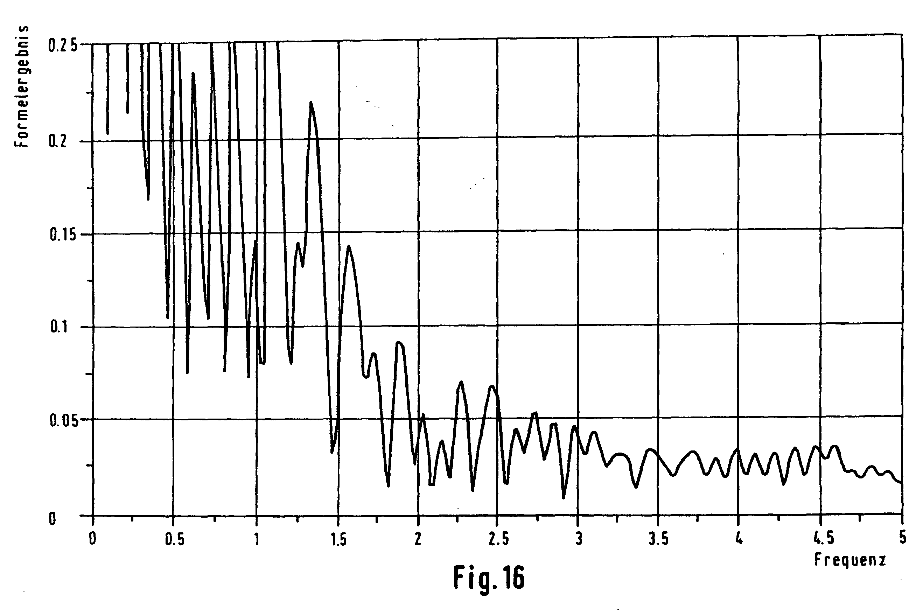

Fig. 16 ein Spektrum eines erfindungsgemäß gefilterten Geschwindigkeitssignals, und

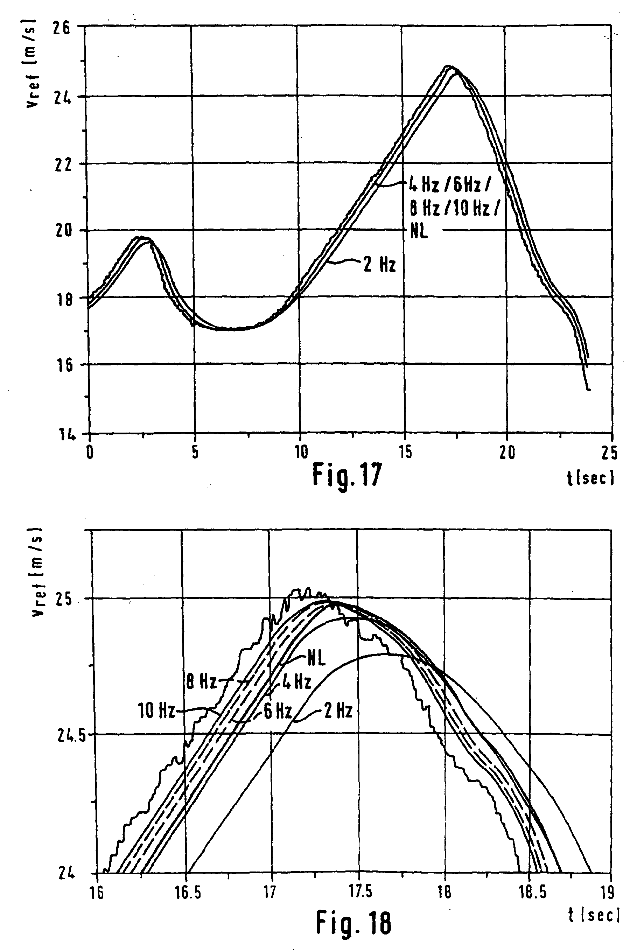

Fig. 17 und 18 das Ausgangssignal des erfindungsgemäßen nicht-linearen Filters im Vergleich zu dem Ausgangssignal von der ABS-Regelung und im Vergleich zu linearen Filtern verschiedener Eckfrequenzen.

Fig. 12 zeigt das Spektrum eines Geschwindigkeitssignals, wie es üblicherweise für die Motor- bzw. Fahrzeugsteuerung verwendet wird. Das Spektrum, das zwischen den Frequenzen 0 und 5 Hz genommen wurde, zeigt einen deutlichen Peak bei etwas unter $f_0 = 2$ Hz. Solche Störungen beeinflussen die Genauigkeit bzw. Zuverlässigkeit der Fahrzeugregelung deutlich und müssen deshalb unterdrückt werden.

Fig. 13 zeigt ein Blockschaltbild einer erfindungsgemäßen Ausführungsform zur Unterdrückung von Störungen des Geschwindigkeitssignals. Das gestörte Eingangsgeschwindigkeitssignal $v_E$ durchläuft in diesem Blockschaltbild einen Tiefpaß 4-20 sowie eine Bandsperre 4-21. Dabei müssen nicht beide Filter 4-20 und 4-21 vorgesehen sein. Einer von beiden kann ausreichend sein, wobei die Hintereinanderschaltung - gegebenenfalls auch in umgekehrter Reihenfolge - zu sehr guten Resultaten führt.

In einer bevorzugten Ausführungsform ist bei der Filterung des Eingangsgeschwindigkeitssignals $v_E$ dem Umstand Rechnung zu tragen, daß die Beschleunigung des Fahrzeugs zu Geschwindigkeitsänderungsbeträgen im gestörten Eingangssignal führen kann, die ihrer Größenordnung nach vergleichbar oder größer sind als störende Welligkeitskomponenten im Signal. Solche Komponenten dürfen nicht einfach weggefiltert werden, anderenfalls würde das gefilterte Signal die Geschwindigkeit nicht richtig oder nur zeitverzögert wiedergeben.

Bezugnehmend auf die Fig. 14 und 15 werden nun Ausführungsformen von Tiefpaß 4-20 und Bandsperre 4-21 aus Fig. 13 erläutert. Fig. 14 zeigt eine Ausführungsform des erfindungsgemäßen Tiefpasses 4-20. Beispielsweise handelt es sich um einen Tiefpaß erster Ordnung $PT_1$. Er wird durch die Verstärkung K 30 sowie durch den Integrator 1/s 4-31 gebildet.

In einer bevorzugten Ausführungsform gibt eine Gradientenbeschränkung 4-32 das Maß an, in dem sich Änderungen des Eingangsgeschwindigkeitssignals $v_E$ bewegen können. Unter der Gradientenbeschränkung wird hier und im folgenden die Beschränkung der Anstiegs- bzw. Abfallgeschwindugkeit eines Signals verstanden. Hier tritt das Problem auf, daß bei Beschleunigungen diese Änderungen weit über dem Maß von Welligkeiten liegen können. Ohne weitere Maßnahmen würde dann der Filter Teile des Nutzsignals abschneiden. Parallel zur Gradientenbeschränkung 4-32 wird deshalb ein weiteres $PT_1$-Glied 4-33 geschaltet. Das $PT_1$-Glied liefert einen Offset, der zur Ausgabe der Gradientenbeschränkung 4-32 addiert wird. Dadurch wird erreicht, daß die erlaubte Welligkeit mit dem jeweils vorhandenen Beschleunigungsniveau mitgeführt wird. Vorzugsweise ist die Eckfrequenz des weiteren $PT_1$-Glieds 4-33 höher als die der Gesamtübertragung des Tiefpasses 4-20.

Fig. 15 zeigt eine Ausführungsform einer Bandsperre. Sie ist so ausgelegt, daß zum einen die Störfrequenz nachgebildet wird (serielle Integratoren 4-43 und 4-44 und Gegenkopplung 4-45). Die Rückführung 4-45 ist ihrem Betrag nach an die Mittenkreisfrequenz $\omega_0 = 2\pi f_0$ des Störfrequenzbandes angepaßt. Die nachgebildete Störfrequenz $\omega_0$ wird am Punkt 4-40 vom Eingangsgeschwindigkeitssignal $v_z$ subtrahiert. Durch diese Subtraktion entsteht das Ausgangsgeschwindigkeitssignal $v_A$, das über Blöcke 4-41 und 4-42 auch in die Nachbildung der Störfrequenz $\omega_0$ rückgeführt wird. Die Rückführung des Ausgangsgeschwindigkeitssignals $v_A$ in die Nachbildung der Störfrequenz $\omega_0$ erfolgt derart, daß das Signal über einstellbare Verstärkungen K 1 bzw. K 2 geführt wird und jeweils vor den Eingang der seriell geschalteten Integratoren 4-43 und 4-44 additiv eingespeist wird. Auf diese Weise wird das störende Frequenzband herausgefiltert, die Schaltung nach Fig. 15 erscheint als Bandsperre.

Durch die erfindungsgemäß vorgeschlagene Filterung des Rohsignals $v_E$ wird ein für die weitere Verarbeitung gut geeignetes Geschwindigkeitssignal $v_A$ erzeugt. Es werden nicht wahllos höhere Frequenzanteile herausgefiltert. Eine solche wahllose Filterung würde dazu führen, daß auch Beschleunigungen des Kraftfahrzeugs, die sich im Frequenzbereich des Geschwindigkeitssignals als höherfrequente Anteile darstellen, im Geschwindigkeitssignal verschliffen würden und damit ein schlecht angepaßtes bzw. langsam den tatsächlichen Verhältnissen folgendes Signal liefern würde. Die Ausführungsform des Tiefpasses mit Gradientenbeschränkung 4-32 und Offseteinspeisung 4-33 ergibt einen nichtlinearen Filter, mit dem trotz des Herausfilterns von Welligkeiten erlaubte Beschleunigungspegel sicher bzw. schnell im gefilterten Signal abgebildet werden. Die Eckfrequenz des Tiefpasses ist konstant eingestellt und wird im Vergleich mit linearen Filtern verschiedener Eckfrequenzen ermittelt. Die beschriebene erfindungsgemäße Bandsperre kann über die Rückführungen des Ausgangssignals $v_A$ über die Faktoren des K 1 und K 2 an die jeweils herrschenden Verhältnisse angepaßt werden.

Fig. 16 zeigt das Spektrum eines Geschwindigkeitssignals, das eine Bandsperre nach Fig. 13 bzw. Fig. 15 durchlaufen hat. Deutlich erkennbar ist, daß die Störung bei ca. 2 Hz behoben ist.

Fig. 17 und 18 zeigen in der Übersicht bzw. im Detail das Ausgangssignal des erfindungsgemäßen nichtlinearen Filters im Vergleich zu dem Ausgangssignal von der ABS-Regelung und im Vergleich zu linearen Filtern verschiedener Eckfrequenzen. In Fig. 17 ist ein Fahrverlauf mit Beschleunigen, Abbremsen und mit einer Phase gleichförmiger Geschwindigkeit (Konstantfahrt bei etwa 7 Sekunden) über eine Dauer von etwa 25 Sekunden dargestellt. Als ein vergrößerter Abschnitt dieses Fahrverlaufs ist in Fig. 18 der Zeitabschnitt um die maximale Gechwindigkeit während der 25 Sekunden aufgetragen. Das am stärksten verrauschte Signal ist dabei das Ausgangssignal einer ABS-Regelung. Dieses Signal ist auch das Eingangssignal für alle zusätzlich dargestellten Filter. Mit NL bezeichnet ist das Ausgangssignal des erfindungsgemäßen nicht-linearen Filters gezeigt. Es ist sehr viel glatter als das ABS-Signal. Des weiteren sind zum Vergleich die Ausgangssignale von linearen Filtern mit unterschiedlichen Eckfrequenzen (2 bis 10 Hz) angegeben. Man sieht, daß sie zwar auch glatte Ausgangssignale erzeugen, daß sie aber eine größere Phasendrehung oder einen größeren Amplitudenverlust als das nicht-lineare Filter bewirken. Dabei ist zu beachten daß das nicht-lineare Filter eine niedrigere Eckfrequenz (4 Hz) als einige der linearen Filter hat. Der Amplitudenverlust des erfindungsgemäßen Filters gleicht dem eines linearen 8 Hz Filters. Die Welligkeit des erfindungsgemäßen nichtlinearen Filters ist in etwa mit der eines linearen 2 Hz Filters vergleichbar.

Ein weiterer Aspekt der vorliegenden Erfindung betrifft ein Verfahren und eine Vorrichtung für die Fahrzeugregelung. Er betrifft insbesondere Fahrzeugregelungssysteme, in denen Sollgeschwindigkeiten vorgegeben werden, die dann durch eine nachgeschaltete Regelung eingestellt werden. Solche Geschwindigkeitseinstellungen können beispielsweise durch Tempomaten erfolgen. Solche Tempomaten können vergleichsweise einfacher Natur sein. Sie bestehen dann aus verschiedenen Schaltern, mit denen Sollgeschwindigkeiten gesetzt, erhöht, erniedrigt, gelöscht oder wieder aufgenommen werden können. Tempomaten können aber auch in Verbindung mit komplexeren Regelungen verwendet werden. Solche Regelungen sind als ICC (Intelligent Cruise Control) bekannt. In solchen Regelungen wird die Fahrzeuggeschwindigkeit nicht nur nach Maßgabe von Fahrervorgaben geregelt, sondern auch nach Maßgabe von Informationen, die Sensoren aus der Fahrzeugumgebung aufgenommen haben. Vorrangig wären hier Abstandssensoren zu nennen, die den Abstand zu möglicherweise vorausfahrenden Fahrzeugen bestimmen. Darüber hinaus sind Sensoren denkbar, die beispielsweise die Straßenbeschaffenheit überprüfen.

Die oben beschriebenen Regelungen arbeiten nach Maßgabe des Fahrerwillens und nach Maßgabe von Informationen, die von Sensoren innerhalb oder außerhalb des Fahrzeugs erfaßt werden. Sie erzeugen als Führungsgröße in vielen Fällen eine Sollgeschwindigkeit. Genausogut können aber auch Fahrzeugbeschleunigungen oder Abstände zu vorausfahrenden Fahrzeugen als Führungsgrößen vorgegeben werden. In jedem Fall kann es sein, daß diese Führungsgrößenvorgaben zu für einen Fahrer unangenehmen Betriebszuständen des Fahrzeugs führen, beispielsweise zu abrupten Beschleunigungen, plötzlichen Abbremsungen oder ruckelnder Fahrweise des Fahrzeugs. Dies kann insbesondere geschehen, wenn plötzliche Änderungen der vorgegebenen Sollgeschwindigkeit erfolgen. Solche Sollgeschwindigkeitsänderungen werden bisher unbewertet in die Regelung als Führungsgröße aufgenommen. Damit können die oben erwähnten unangenehmen Fahrzustände nicht hinreichend gut verhindert werden.

Aufgabe dieses Aspekts der Erfindung ist es, ein Verfahren und eine Vorrichtung für die Fahrzeugsteuerung bzw. -regelung anzugeben, mit denen ein angenehmes und ruckarmes Fahren möglich wird.

Diese Aufgabe wird gemäß den Merkmalen der unabhängigen Ansprüche 69 und 79 gelöst. Davon abhängige Ansprüche sind auf bevorzugte Ausführungsformen dieses Aspekts der Erfindung gerichtet.

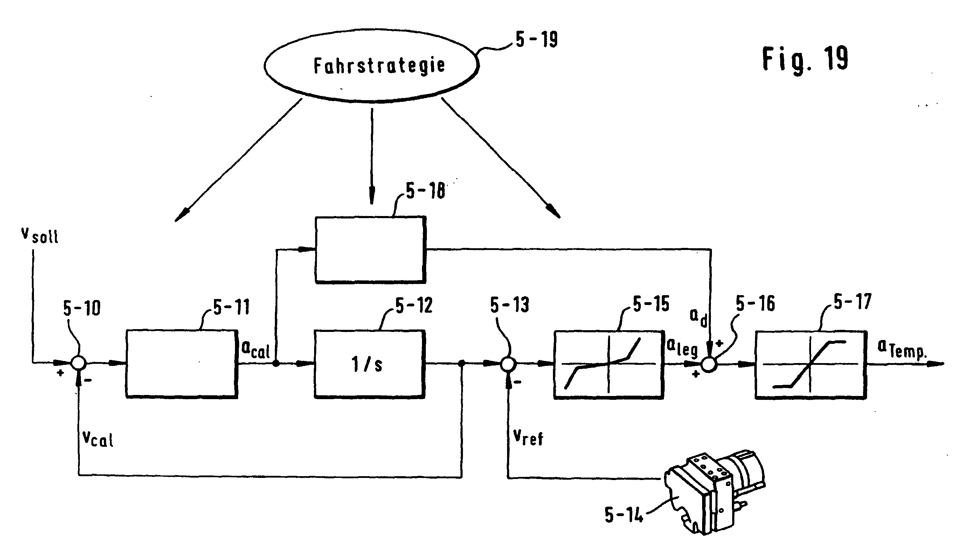

Nachfolgend werden einzelne Merkmale dieses Aspekts der Erfindung bezugnehmend auf die beiliegende Fig. 19 beschrieben. Fig. 19 zeigt in Kombination die nachfolgend beschriebenen verschiedenen Merkmale dieses Aspekts der Erfindung.

Folgende Maßnahmen können getroffen werden, um die der Erfindung zugrundeliegende Aufgabe zu lösen:

- Plötzliche Sprünge in der vorgegebenen Sollgeschwindigkeit können in ihrem zeitlichen Verlauf geglättet werden.

- Zeitliche Änderungen der vorgegebenen Sollgeschwindigkeit können begrenzt werden. Der Gradient der Sollgeschwindigkeit ist dadurch begrenzt. Die Begrenzung kann abschnittweise oder über ein Kennfeld definiert sein und auch bestimmten Veränderungen unterliegen.

- Abhängig von der Differenz zwischen der wie oben gefilterten Sollgeschwindigkeit oder der ungefilterten Sollgeschwindigkeit und der tatsächlichen Fahrzeuggeschwindigkeit kann eine Beschleunigung als Führungsgröße vorgegeben werden.

- Über einen Feed-Forward-Zweig können bekannte Reaktionen des Systems vorweg ausgeglichen werden.

- Die obigen Maßnahmen können durch eine übergeordnete Regelung überwacht werden. Durch eine lernende Fahrzeugregelung können sie adaptiert werden.

Nachfolgend werden die obigen Merkmale ausführlicher beschrieben.

Fig. 19 zeigt in Kombination mehrere der obengenannten Komponenten. Gezeigt ist ein Beispiel, bei dem von links die Vorgabegeschwindigkeit $v_{Soll}$ in das erfindungsgemäße System eingegeben wird. Wenn nicht anders angegeben, wird bei den nachfolgenden Erläuterungen davon ausgegangen, daß diese vorgegebene Sollgeschwindigkeit plötzlich springt. Im praktischen Betrieb kann dies beispielsweise dadurch erfolgen, daß ein Fahrer am Lenkrad durch mehrmaliges Betätigen der entsprechenden Taste bzw. des Lenkstockschalters die Sollgeschwindigkeit stark erhöht. Ein solcher Sprung kann in vielen Fällen zu Motorschwingungen führen und ist deshalb a priori zu vermeiden.

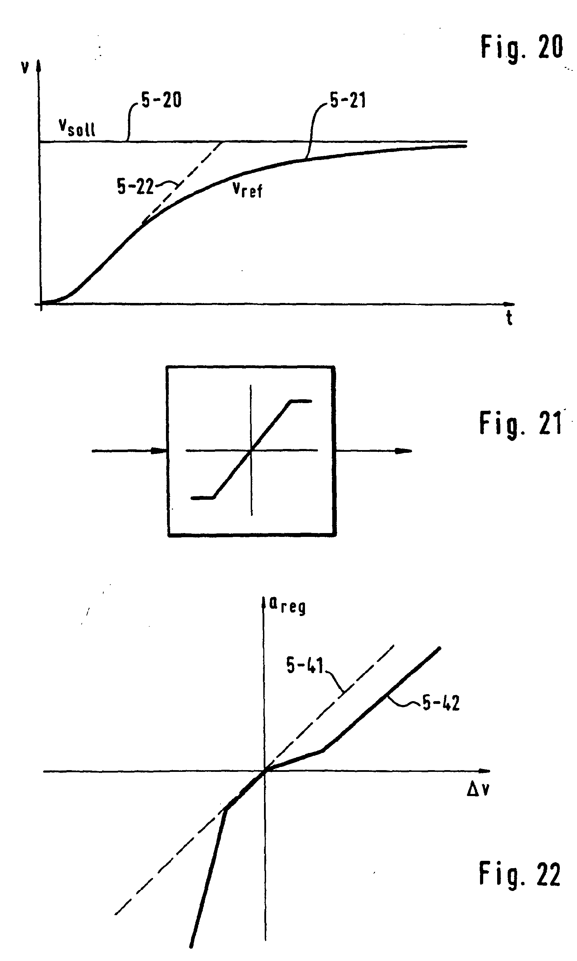

Hierzu wird eine Verschleifung des Sollgeschwindigkeitssprungs vorgenommen. Die Verschleifung erfolgt durch eine geeignete Einrichtung. Beispielhaft ist hierfür in Fig. 19 die Kombination der Einrichtungen 5-10, 5-11 und 5-12 gezeigt. Prinzipiell handelt es sich bei der gezeigten Schaltung um einen Tiefpaß. Die Einrichtung 5-11 kann im einfachsten Fall eine Verstärkung sein. Ihr schließt sich ein Integrator 5-12 an. Durch die Gegenkopplung im Punkt 5-10 ergibt sich als Ausgangsgröße des Integrators im gezeigten Beispiel der $PT_1$ bewertete Verlauf des eingegebenen Sollgeschwindigkeitsverlaufs. Der scharfe Anstieg der Sollgeschwindigkeit wird dadurch abgemildert, und unangenehme Fahrzustände des Fahrzeugs werden vermieden. Als Tiefpaß muß nicht unbedingt ein $PT_1$-Glied vorgesehen sein, es können auch $PT_2$-Glieder oder allgemeine Tiefpässe verwendet werden. Fig. 20 zeigt das Ausgangssignal des Tiefpasses (Ausgang des Integrators 5-12), wie sie durch ein $PT_2$-Glied als Reaktion auf einen plötzlichen Sprung der Sollgeschwindigkeit erfolgt sein könnte. Der plötzliche Sprung der Sollgeschwindigkeit von Null auf einen bestimmten Wert (Kurve 5-20) wird in einen langsamen Anstieg (Kurve 5-21) umgewandelt.

Eine weitere Absicherung gegen unangenehme Fahrzustände kann erreicht werden, wenn für die Sollgeschwindigkeit eine Gradientenbeschränkung eingeführt wird. Eine Gradientenbeschränkung kann separat oder in Verbindung mit dem oben beschriebenen Tiefpaß (etwa $PT_1$- oder $PT_2$-Glied) eingeführt werden. Anhand Fig. 20 wird zunächst die Auswirkung der Gradientenbeschränkung beschrieben. Als Gradient wird hier die Änderung der Sollgeschwindigkeit pro Zeiteinheit bezeichnet. Physikalisch ist dies eine Beschleunigung. Fig. 20 zeigt den stärksten Gradienten kurz nach Beginn des Anstiegs der Kurve 5-21. Er ist durch die Tangente 5-22 symbolisiert. Ihre Steigung entspricht dem Gradienten. Je größer der Sprung der Sollgeschwindigkeit war, desto steiler wird der steilste Anstieg der Kurve 5-21 sein. Es kann Situationen geben, in denen der Anstieg trotz Filterung zu steil wird. Es ergeben sich letztendlich dann die gleichen Nachteile wie beim eingangs angenommenen idealen Sprung der Sollgeschwindigkeit. Um dies zu verhindern, wird der Gradient - die Steigung der Tangente 5-22 - auf einen bestimmten Wert begrenzt, der unabhängig von der Größe des Sprungs der Sollgeschwindigkeit nicht überschritten wird. Dies kann in einer Ausführungsform durch eine separate Schaltung erfolgen. Fig. 19 zeigt eine weitere Ausführungsform. Dort ist die Verstärkung 11 mit einer Beschränkung versehen. Die Verstärkung hat damit eine Kennlinie ähnlich Fig. 21. Die aus der Einrichtung 5-10 stammende Differenz wird damit nur bis auf einen bestimmten Maximalwert verstärkt. Über Integrator 5-12 und Rückführung führt dies dazu, daß die gewünschte Gradientenbeschränkung erreicht wird.

Die Gradientenbeschränkung kann für positive und negative Beschleunigung unterschiedlich eingestellt sein, indem unterschiedliche Knickstellen in der Kennlinie der Fig. 21 eingestellt werden. Außerdem kann es wünschenswert sein, eine Manipulation der Gradientenbeschränkung zuzulassen. Wenn beispielsweise ausweislich des Fahrerwunsches - eingegeben über beispielsweise mehrfache Betätigung der Beschleunigungstaste - eine starke Beschleunigung gewünscht ist, können höhere Gradienten zugelassen werden, indem beispielsweise nur in diesem Fall die Knickstellen in Fig. 21 weiter vom Ursprung weggeschoben werden. Dann sind steilere Anstiege der vorgegebenen Sollgeschwindigkeit möglich, und das Fahrzeug beschleunigt schneller. Dem Fahrer, sofern durch ihn veranlaßt, stellt sich diese Veränderung der Gradientenbeschränkung als direkter Durchgriff seiner Aktionen dar.

Es ist weiterhin möglich, zur Verbesserung des Fahrkomforts bei Differenz zwischen vorgegebener Sollgeschwindigkeit $v_{Soll}$ und Istgeschwindigkeit $v_{Ref}$ - also wenn eine Beschleunigung notwendig wird - diese Beschleunigung nach Maßgabe der Differenz zwischen Soll und Ist vorzugeben. In Fig. 19 erfolgt diese Vorgabe durch einen Funktionsgenerator 5-15. Im gezeigten Beispiel empfängt er die Differenz zwischen Ausgabe des Tiefpasses 5-10 - 5-12 und der tatsächlichen Fahrzuggeschwindigkeit. Die Differenz $\Delta v = v_{Soll} - v_{Ref}$ wird in der Einrichtung 5-13 gebildet. Funktionsgenerator 5-15 empfängt damit einen Wert, der der Differenz zwischen gefilterter Sollgeschwindigkeit und tatsächlicher Geschwindigkeit entspricht. Als Ausgabe liefert er entsprechend der durch ihn dargestellten Funktion eine Beschleunigung, die als Führungsgröße verwendet werden kann. Anders als in Fig. 19 ist es auch möglich, die ungefilterte Sollgeschwindigkeit in die Einrichtung 5-13 einzugeben. Fig. 22 zeigt beispielhaft zwei Kennlinien, die durch den Funktionsgenerator 5-15 beschreiben. Kurve 5-41 zeigt einen einfachen Fall, in dem die ausgegebene Beschleunigung $A_{Soll}$ proportional zur Differenz zwischen Soll und Ist ist. Es sind aber auch kompliziertere Verläufe denkbar, beispielsweise wie durch Kurve 5-42 gezeigt. Durch verschiedene Steigungen können Fahrverhalten nachgebildet werden, die empirisch ermittelt werden. Damit führt die erfindungsgemäße Regelung zu einem Fahrverhalten, das als sehr natürlich empfunden wird. Die Kennlinie aus Fig. 22 kann als Formel implementiert sein oder in einer Tabelle abgelegt sein.

Eine weitere Verbesserung des Fahrverhaltens wird erreicht, wenn einer beispielsweise wie oben ermittelten Sollbeschleunigung ein Feed-Forward-Anteil hinzugefügt wird. In Fig. 19 ist eine Ausführungsform gezeigt, in der im Addierer 5-6 zur Ausgabe des Funktionsgenerators 5-15 ein Feed-Forward-Anteil hinzuaddiert wird, der über ein Filter 5-18 aus einem Signal erzeugt wird, das zwischen Verstärkung 5-11 und Integrator 5-12 abgegriffen wurde. In die Kennlinie des Filters 5-18 können eine Verstärkung sowie Systemcharakteristika eingearbeitet werden, so daß durch die Verwendung des Feed-Forward-Anteils eine sehr spontane Reaktion auf die Fahrervorgabe unter Beibehaltung der komfortablen Reglerdynamik möglich wird.

Schließlich ist es möglich, über eine Einrichtung 5-19 eine Langzeitbeobachtung der Fahreraktivitäten vorzunehmen. Beispielsweise können Häufigkeit, Dauer und Größe von Beschleunigungen und Verzögerungen erfaßt werden. Solche erfaßten Werte können dann klassifiziert werden (etwa "ruhiger Fahrer", "sportlicher Fahrer"). Nach Maßgabe dieser Klassifizierung können dann einzelne Parameter im System modifiziert werden. Die Einrichtung 5-19 kann im System der Fig. 19 beispielsweise die Gradientenbeschränkung 5-11, den Feed-Forward-Filter 5-18 oder den Funktionsgenerator 5-15 beeinflussen.

Eine beispielsweise durch den Funktionsgenerator 5-15 vorgegebene Sollgeschwindigkeit kann auf bestimmte Absolutwerte begrenzt werden, z.B. -1,0 m/s$^2$, +1,5 m/s$^2$. Übertritt der Fahrer mit dem Gaspedal die vom Tempomaten gesetzte Geschwindigkeit kurzzeitig, etwa beim Überholen eines LKW, wird der Regler aufgrund der Fahrerintervention auf Stand-by geschaltet. Nach dem Übertreten, also etwa nach Beendigung des Überholvorgangs, wird auf die vom Tempomaten gesetzte Geschwindigkeit abgebremst. Damit dieses Abbremsen nicht zu stark wird, um beispielsweise das Ausbremsen des eben überholten Fahrzeugs zu vermeiden, kann die Beschränkung der durch den Funktionsgenerator 5-15 vorgegebenen Beschleunigung verringert werden, beispielsweise auf -0,7 m/s$^2$, +1,0 m/s$^2$. Allgemein können solche Grenzveränderungen nach Fahrerinterventionen vorgenommen werden. Liegt die angeforderte Beschleunigung im weiteren Verlauf dann unter dem gesetzten Grenzwert, können die ursprünglichen, betragsmäßig höher liegenden Grenzwerte, wieder eingestellt werden.

Die oben beschriebenen Funktionen können durch diskrete Bauelemente bzw. Einrichtungen implementiert werden. Statt dessen ist es auch möglich, einen entsprechend programmierten Rechner zu verwenden, der digitale Eingangssignale empfängt und diese in zeitdiskreter Weise verarbeitet.

Ein weiterer Aspekt der Erfindung betrifft ein Verfahren zum "glatten" Ansteuern einer hydraulisch betätigten Bremse im "sliding mode"-Verfahren sowie eine Vorrichtung zur Durchführung dieses Verfahrens.

Es ist allgemein bekannt, mit wenigstens einem digital schaltenden Ventil und einem Druckerzeuger (vorzugsweise Pumpe) oder Druckreservoir in einem Rezipienten (z. B. Bremszylinder) einen nahezu beliebigen Druck aufzubauen, der nur durch den Druckerzeuger (Pumpe) bzw. das Druckreservoir begrenzt ist. Dies erfolgt, indem entweder bei konstantem Vordruck der Druckaufbau gegen eine durch das digitale Ventil einstellbare Leckrate erfolgt oder bei konstanter Leckrate eine Verbindung (ein Ventil) zwischen Rezipient (z. B. Bremszylinder) und Druckerzeuger bzw. Druckreservoir zeitweilig hergestellt wird. Dabei werden in der Regel stromlos offene (SO) und stromlos geschlossene (SG) Ventile als digitale Ventile eingesetzt.

Solche Systeme haben den Nachteil, daß die Ventile i. a. pulsbreitenmoduliert geschaltet werden, was für die Berechnung der Pulsbreiten (ein und/oder aus) eine hohe Rechenkapazität erfordert.

Aufgabe dieses Aspekts der Erfindung ist es daher, ein Verfahren und eine Vorrichtung anzugeben, mit der die erforderliche Prozessorleistung auf ein geringes Maß reduziert werden kann.

Diese Aufgabe wird mit den Merkmalen der Ansprüche 89 und 96 gelöst. Bevorzugte Ausführungsformen des Verfahrens wie der Vorrichtung sind Gegenstand der jeweiligen Unteransprüche.

Das Verfahren ist gekennzeichnet durch Ausgeben eines Druckaufbausignals und eines Druckabbausignals an Mittel zum Einstellen des Bremsdrucks zum Erzielen eines Bremssolldrucks $P_{soll}$. Dabei sind die Mittel zum Einstellen des Bremsdrucks in einer Ausführungsform zwei digital schaltende Ventile, die mit dem Druckerzeuger bzw. dem Druckreservoir, dem drucklosen Reservoir und dem Bremszylinder (Rezipient) verbunden sind. Das eine Ventil verbindet das Druckreservoir mit dem Bremszlinder, das zweite Ventil das drucklose Reservoir mit dem Bremszylinder. Durch entsprechend getaktetes Öffnen und Schließen der digital schaltenden Ventile wird der gewünschte Druck im Verbraucher (Rezipient) eingestellt. Insbesondere zeichnet sich eine andere Ausführungsform dadurch aus, daß man auf das erste Ventil verzichten kann, wenn man den endlichen Volumenstrom vom Druckerzeuger durch die Zuleitungen berücksichtigt. Dann braucht nämlich der Druckabbau durch das zweite Ventil (unmittelbar vor dem drucklosen Reservoir) nur kurzzeitig zugelassen zu werden.

In einer bevorzugten Ausführungsform des Verfahrens wird ein Sollvolumenstrom $Q_{soll}$ aus dem Bremssolldruck $P_{soll}$ und einem einem Meßdruck $p_{mess}$ an den Ventilen entsprechenden Istdruck $p_{ist}$ an einem Bremszylinder bestimmt. Im einzelnen errechnet dabei ein Druckregler aus einem Vergleich zwischen einem Istdruck $p_{ist}$ und einem Vorgabewert, also dem Solldruck $p_{soll}$, einen Volumenstrom des Arbeitsfluids, der nötig ist, um den Solldruck $p_{soll}$ einzustellen. Dabei wird der Istdruck $p_{ist}$ im Bremszylinder von einem Druckbeobachter aus dem gemessenen Druck $p_{mess}$ an den Ventilen bestimmt.

Das dem Druckbeobachter zugrundeliegende Modell berücksichtigt dabei neben der Druckdifferenz zwischen Meßpunkt und Bremse u. a. die Impedanz der Zufuhrleitungen, die auf das Arbeitsfluid einwirkt. Die Impedanz und die Druckdifferenz bestimmen den Volumenstrom durch die Zuleitungen, d. h. das durch die Zuleitungen pro Zeiteinheit fließende Volumen. Der Volumenstrom kann dabei insbesondere direkt proportional von der Impedanz und im übrigen von der Wurzel der Druckdifferenz zwischen Meßpunkt und Bremse abhängen. Bei bekanntem Volumen, das über eine bestimmte Zeit in den Bremszylinder geflossen ist, ist also der Bremsdruck bekannt. Der Bremsdruck hängt dabei z. B. quadratisch von dem Volumen des Bremszylinders ab.

Damit ist der einzustellende Volumenstrom bestimmt, und die Bremsregelung kann somit erfolgen, indem dem Druckaufbauund dem Druckabbauventil jeweils in schneller Folge Öffnungs- bzw. Schließsignale zugeleitet werden.

In einer linearisierten Ausführungsform wird die Wurzelabhängigkeit des Volumenstroms von der Druckdifferenz durch eine lineare Abhängigkeit ersetzt, wobei der Arbeitspunkt des Regelkreises so gewählt werden muß, daß in beiden Richtungen keine allzu großen Abweichungen auftreten. Dies ist natürlich nur über einen begrenzten Arbeitsbereich möglich.

In einer Weiterentwicklung dieser Ausführungsform können jedoch die Signale zur Steuerung des Volumenstroms ebenfalls vor ihrer Ausgabe an die Ventile gefiltert werden. Dies erfolgt in einem gesonderten Regelkreis, der dem obigen quasi nachgeschaltet ist. Dabei wird der augenblickliche Volumenstrom dem Sollvolumenstrom gegengekoppelt. Auf diese Art werden aus dem Sollvolumenstrom und dem Istvolumenstrom Ansteuersignale für das digitale Ventil bzw. die digitalen Ventile nach dem sog. sliding mode Regelprinzip erzeugt. Sowohl das Druckaufbausignal als auch das Druckabbausignal werden also aus dem Sollvolumenstrom und einem dem Meßdruck entsprechenden Istvolumenstrom bestimmt.

In einer bevorzugten Ausführungsform kann neben dem Istvolumenstrom auch die zeitliche Ableitung des Istvolumenstroms berücksichtigt werden.

Damit es zu keinem Kurzschluß zwischen dem Druckreservoir und dem Leck kommt, dürfen in einer Ausführungsform mit zwei digitalen Ventilen nicht beide gleichzeitig öffnen. Daher werden das Druckaufbausignal und das Druckabbausignal zueinander komplementär erzeugt, so daß ihre Einschaltpunkte nicht zusammenfallen. Das heißt, daß das eine Ventil nur dann geöffnet werden kann, wenn das andere geschlossen ist.

Bei dem erfindungsgemäßen Verfahren wird die Trägheit des Arbeitsfluids bzw. des Ventils ausgenutzt. Mit anderen Worten, es wird nicht mehr der Druck an sich geregelt, sondern die Regelung erfolgt ausschließlich über die Steuerung des Volunmenstroms des Arbeitsfluids.

Generelle Vorteile sind bei dem erfindungsgemäßen Verfahren, daß die Druckregelung verhältnismäßig langsam sein kann. Das bedeutet, daß sie von einem allgemeinen Prozessor übernommen werden kann, der auch noch andere Aufgaben bearbeitet und daher nicht besonders schnell sein muß. Die eigentliche Regelung des Volumenstroms dagegen erfolgt schnell durch eine maßgeschneiderte Regelung, die vorzugsweise durch eine analoge oder eine schnelle digitale Schaltung erfolgt. Mit dieser Aufteilung in eine Druckregelung einerseits und eine Volumenstromregelung andererseits ist eine höherdynamische Regelung möglich. Sie ist jetzt außerdem unabhängig von Zykluszeiten des Prozessorsystems und kann mit einer Rate bis zu einigen kHz erfolgen.

Im folgenden wird ein Ausführungsbeispiel des erfindungsgemäßen Verfahrens anhand der Zeichnungen beschrieben. Dabei ist in

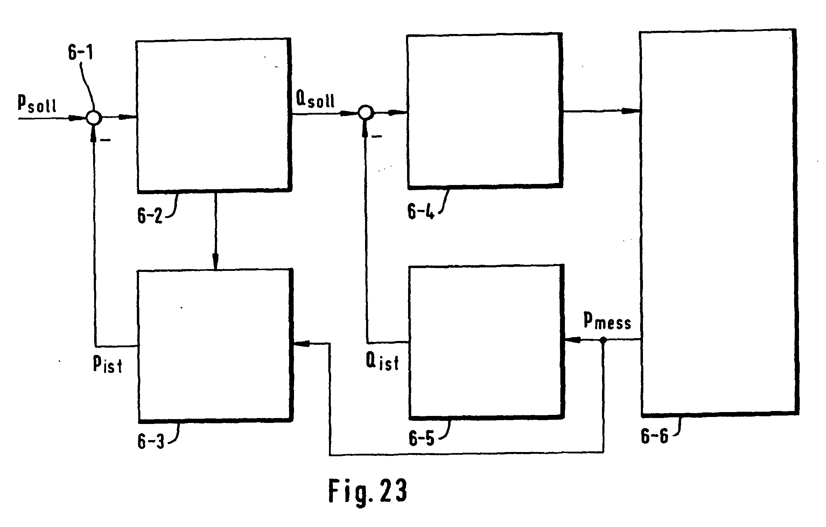

Fig. 23 der generelle Aufbau der erfindungsgemäßen Druckregelung als Blockschaltbild dargestellt;

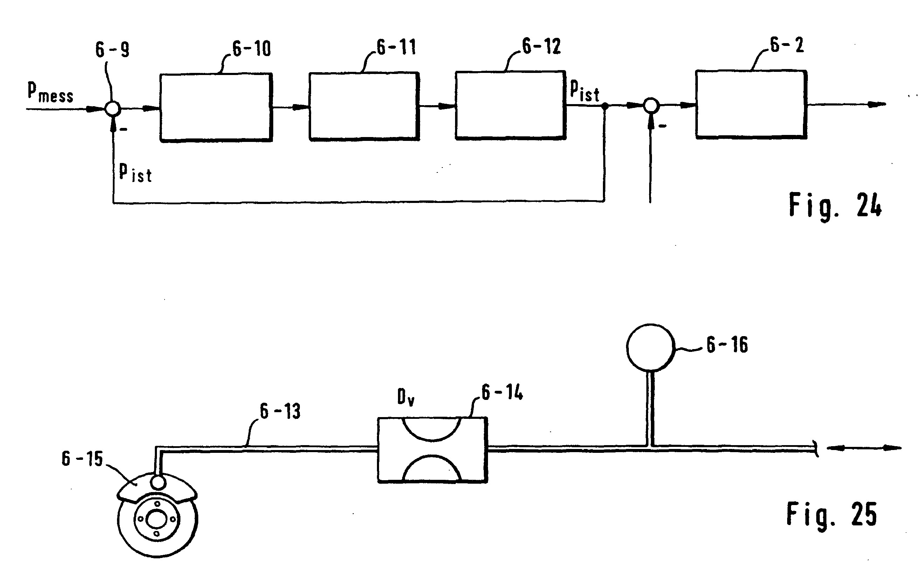

Fig. 24 eine Ausführungsform eines Druckbeobachters mit einfachem Druckregler dargestellt;

Fig. 25 der nichtlineare Beobachter einer Bremsanlage dargestellt;

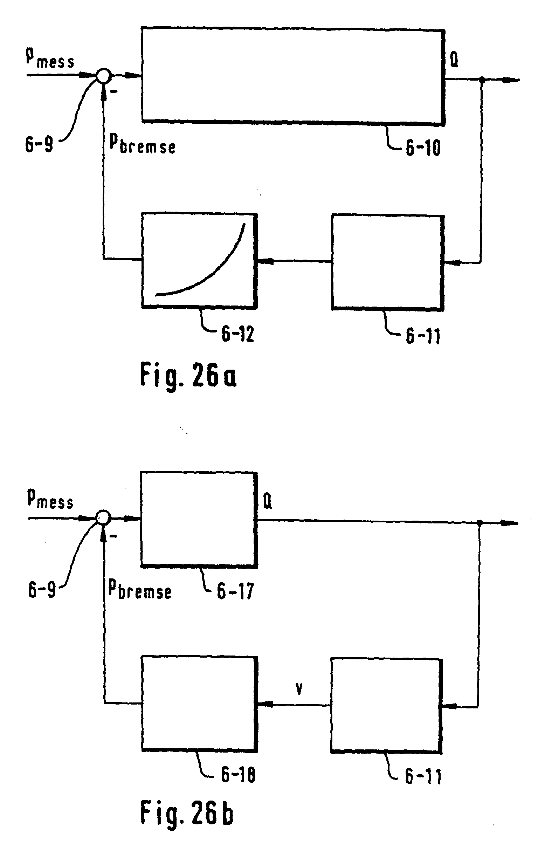

Fig. 26a und 26b der dem nichtlinearen Beobachter in Fig. 25 entsprechende Regelkreis bzw. der linearisierte Regelkreis dargestellt;

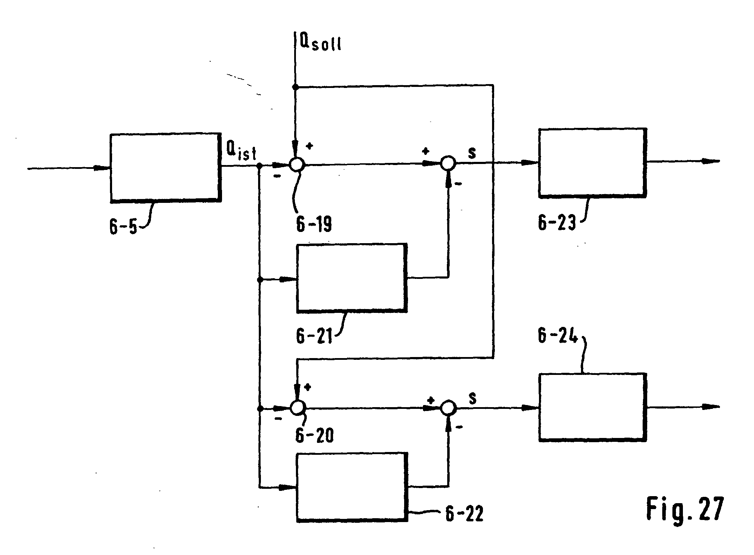

Fig. 27 ein Blockdiagramm einer Ausführungsform der kombinierten Regelkreise dargestellt;

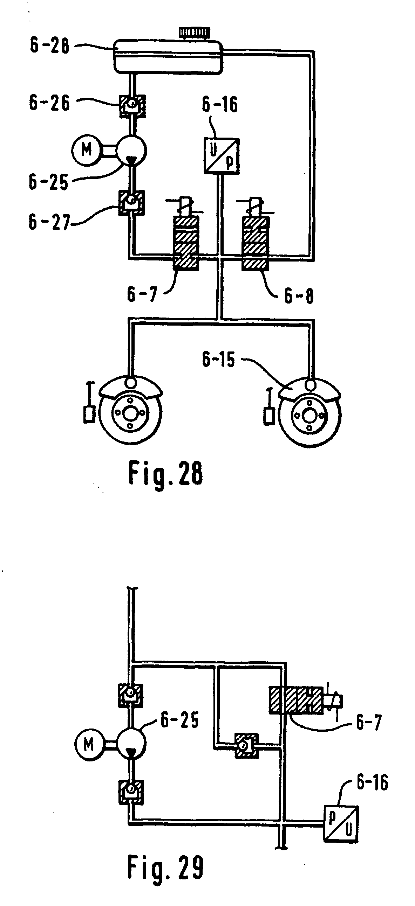

Fig. 28 ein Bremskreis dargestellt, in dem das erfindungsgemäße System eingesetzt wird;

Fig. 29 ein Bremskreis dargestellt, der anstelle der zwei digitalen Ventile mit nur einem digitalen Ventil auskommt.

Fig. 23 zeigt zwei hintereinandergeschaltete Regelkreise, nämlich einmal für die Druckregelung und einmal für die eigentliche Volumenstromregelung. Dabei ist der zweite Regelkreis optional und soll daher erst weiter unten beschrieben werden.

Bei dem ersten Regelkreis wird als Vorgabe ein Solldruck $p_{soll}$ für das Bremssystem eingegeben. Dieser erste Regelkreis umfaßt einen Subtrahierer 6-1, einen Druckregler 6-2 und einen Druckbeobachter 6-3. Der Druckbeobachter 6-3 ermittelt dabei aufgrund eines gemessenen Meßdruckes $p_{mess}$ in der Hydraulik 6-6 einen Istdruck $p_{ist}$, der von dem Solldruck $p_{soll}$ am Eingang des Regelkreises abgezogen wird, wobei dann vom Druckregler die Differenz weiterverarbeitet wird. Dabei werden in dieser Ausführungsform der Erfindung vom Druckregler auch weitere Zustände an den Druckbeobachter gemeldet, mit denen sich das Modell der Druckbeobachtung abgleichen läßt. Die Ausgangsgröße des Druckreglers ist ein Signal, das dem Volumenstrom $Q_{soll}$ entspricht, der zum Erreichen des notwendigen Bremsdruckes erzeugt werden muß. Dieses Signal $Q_{soll}$ wird von einem Volumenstromregler 6-4 in Steuersignale für ein oder mehrere (nicht gezeigte) digitale Ventile 6-7 und 6-8 in der Hydraulik 6-6 umgesetzt. Die Reihenfolge und Erzeugung dieser Signale wird später in Zusammenhang mit Fig. 26a und Fig. 27 erläutert.

Der Druckbeobachter 6-3 ermittelt aufgrund des im Hydrauliksystem 6-6 gemessenen Druckes $p_{mess}$ den Istdruck $p_{ist}$. Dabei kann der Druckbeobachter selbst auch ein Regelkreis sein. In der bevorzugten Ausführungsform, wie sie in Fig. 24 dargestellt ist, wird dabei aus der Eingangsgröße $p_{mess}$ in Gegenkopplung die Regelkreisausgangsgröße $p_{ist}$ ermittelt. Dazu wird analog zu dem Aufbau des ersten Regelkreises in Fig. 23 von dem gemessenen Druck $p_{mess}$ in einem Subtrahierer 6-9 eine Größe $p_{ist}$ abgezogen. Die Differenz dieser beiden Signale wird im weiteren von einem ersten Multiplikationsglied 6-10, von einem ersten Integratorglied 6-11 und einem ersten Kennlinienglied 6-12 in einen Istdruck $p_{ist}$ umgewandelt. Dabei können mehrere unabhängige Modelle zugrundegelegt werden; das Modell des Regelkreises in dieser Ausführungsform beruht auf dem in Fig. 25 dargestellten Bild. Als eigentliche Ausgangsgröße kann dabei sowohl ein Wert dienen, der einem Druck entspricht, als auch ein Wert, der einem Volumenstrom entspricht.

Um Meßwege kurz zu halten und damit auch Störungen auf dem Übertragungsweg zu minimieren, wird der Druck eines (Sub-) Systems bevorzugt in unmittelbarer Nähe zu den zentralen Steuereinrichtungen gemessen. Das hat allerdings den Nachteil, daß Veränderungen des Druckes aufgrund von Einflüssen durch die Druckleitung nicht erfaßt werden. Diesem kann man jedoch mit einem Modell begegnen, das bekannte Einflüsse der Druckleitungen berücksichtigt und aus den an zentraler Stelle gemessenen Werten die tatsächlich am Leitungsende herrschenden Größen ermittelt. Ein solches Modell liegt den Regelgliedern 6-9 bis 6-12 zugrunde und ist in Fig. 25 dargestellt. In der Fig. sind die Eigenschaften der Zuleitung 6-13 für das Arbeitsfluid als Impedanz $D_v$ 6-14 zusammengefaßt. Die Zuleitungen enden an der Bremse 6-15 in einem (nicht gezeigten) Bremszylinder, dessen Volumen V ist. Der durch die Zuleitungen 6-13 strömende Volumenstrom Q ist in dem hier zugrundegelegten Modell proportional zu der Impedanz und zu der Wurzel aus der Druckdifferenz über die Zuleitung 6-13. Das bedeutet, daß unter Berücksichtigung der Richtung des Volumenstroms sich der Volumenstrom ausdrücken läßt als

$$Q = D_v * sign(p_{mess} - p_{ist}) * (|p_{mess} - p_{ist}|)^{1/2} \qquad (6/1)$$

Dabei gibt $sign(p_{mess} - p_{ist})$ die Strömungsrichtung an, und $|p_{mess} - p_{ist}|$ ist der Absolutwert der Druckdifferenz.

Der gemessene Druck wird unmittelbar hinter einem (nicht gezeigten) Ventil zur Regelung des Volumenstroms von einem Drucksensor 6-16 aufgenommen und an den Druckbeobachter 6-3 übertragen. Aus dem bisherigen bzw. derzeitigen Volumenstrom $Q_{ist}$ zu dem Bremszylinder läßt sich der Bremsdruck bzw. Istdruck an den Bremsen $p_{ist}$

abschätzen. Bei dieser Ausführungsform wird dabei ein quadratischer Zusammenhang zugrundegelegt, so daß sich der Bremsdruck $P_{ist}$ als

$$P_{ist} = A * V + B * V^2 \qquad\qquad (6/2)$$

darstellen läßt. Die Änderung des Volumens des Bremszylinders V ergibt sich dann aus dem Zusammenhang

$$V = \int Q \, dt \qquad\qquad (6/3)$$

Aus diesen drei Abhängigkeiten wird durch den Druckbeobachter so der momentane Bremsdruck bestimmt, der dann am Eingang des ersten Regelkreises in Fig. 23 von dem Eingangswert $p_{soll}$ abgezogen wird.

Der Druckregler 6-2 selbst braucht wie in Fig. 24 dargestellt nur ein einfaches Kennlinienglied zu sein, das je nach Eingabe einen Volumenstrom ausgibt, der wie bereits oben beschrieben durch einen Volumenstromregler 6-4 in Signale für digitale Ventile 6-7 und 6-8 umgesetzt wird.

In einer etwas vereinfachten Version des ersten Regelkreises in Fig. 23 kann ein "linearisierter" Druckbeobachter eingesetzt werden. Ein solcher linearisierter Druckbeobachter ist in Fig. 26b dargestellt, und zum Vergleich in Fig. 26a ein nichtlinearer Druckbeobachter, wie in der Ausführungsform nach Fig. 24. Der Aufbau in Fig. 26a ist dabei im Prinzip der gleiche wie in Fig. 24 mit denselben Gliedern, nämlich Subtrahierer 6-9, Multiplikator 6-10, Integrator 6-11 und Kennliniengliederung 6-12, nur daß hier anders als in der oben beschriebenen Ausführungsform statt des Bremsdruckes $p_{ist}$ ein Volumenstrom Q die Ausgangsgröße darstellt. Bei dem linearisierten Druckbeobachter in Fig 26b ist dagegen der Multiplikator 6-10 durch ein erstes Proportionalglied 6-17 und das Kennliniennglied 6-12 durch ein zweites Proportionalglied 6-18 ersetzt worden. Dadurch wird der Aufbau des Druckbeobachters vereinfacht, was u. a. schnelleres Schalten zuläßt. Die Funktion des Druckbeobachters 6-3 ist jedoch in beiden Fällen identisch.

Im folgenden wird unter Bezug auf Fig. 23 und Fig. 27 die Funktionsweise des Volumenstromreglers erläutert.

Wie bereits beschrieben kann das Ausgangssignal des ersten Regelkreises in Fig. 23 mit Druckregler 6-1 und Druckbeobachter 6-3 direkt in Steuersignale für die digitalen Ventile 6-7 und 6-8 durch ein Volumenregler 6-4 umgesetzt werden. Um aber eine noch bessere Regulierung der Ansteuerung der digitalen Ventile zu erreichen, wird ein Volumenstrombeobachter 6-5 eingesetzt. Der Regelkreis, der den Volumenstrom $Q_{soll}$ einstellt, ist dabei als Gegenkopplungskreis aufgebaut, dessen Eingangsgröße die Ausgangsgröße des ersten Regelkreises bildet. (Ausgangsgröße muß also in diesem Fall ein Volumenstromsignal sein.) Von dem Ausgangssignal des ersten Regelkreises $Q_{soll}$ wird ein Wert $Q_{ist}$ abgezogen, der von dem Volumenstrombeobachter 6-5 erzeugt wurde. Der Volumenstrombeobachter hat diesen Wert aufgrund des gemessenen Druckes $p_{mess}$ ermittelt, der bereits Eingangsgröße für den Istdruck $p_{ist}$ durch den Druckbeobachter war. Der generelle Aufbau dieses zweiten Regelkreises zum Einstellen der Schaltsignale für die digitalen Ventile 6-7 und 6-8 in der Hydraulik 6-6 ist für den Fachmann offensichtlich und braucht hier nicht weiter erläutert zu werden.

Wie aus Fig. 27 ersichtlich ist im einfachsten Fall der Volumenstrombeobachter 6-5 ein erstes $DT_1$-Glied. Dessen Ausgangssignal entspricht dann dem Istvolumenstrom $Q_{ist}$, der von dem Sollvolumenstrom $Q_{soll}$, der von dem ersten Regelkreis in Fig. 23 ausgegeben wurde, am Eingang der Regelschleife abgezogen wird. Dieses ist in dem rechten Teil der Fig. 27 dargestellt. Das Signal $Q_{ist}$ liegt an jeweils dem invertierenden Eingang der beiden Subtrahierer 6-19 und 6-20 an. Gleichzeitig liegt es an dem Eingang jeweils eines zweiten bzw. dritten $DT_1$-Gliedes an, dessen Ausgang invertiert wird und jeweils mit dem Ausgang eines der Subtrahierer 6-19 und 6-20 zusammengeschaltet ist, so daß sich jeweils ein zusammengesetztes Signal s ergibt. Dieses zusammengesetzte Signal s liegt an einem Kennlinienglied 6-23 bzw. 6-24 an. Das Kennlinienglied 6-23 bzw. 6-24 gibt je nach Eingangsgröße ein Ventilansteuersignal SO bzw. SG für die beiden digitalen Ventile 6-7 und 6-8 aus, das diese öffnet bzw. schließt. Damit es keinen hydrodynamischen oder pneumatischen Kurzschluß gibt, sind die Kennlinien in den Kennlinien gliedern so gewählt, daß ein gleichzeitiges Öffnen der digitalen Ventile 6-7 und 6-8 unmöglich ist. Im einzelnen bedeutet dies, daß der Nulldurchgang der beiden Kennlinien in den Kennlinien gliedern 6-23 und 6-24 bei verschiedenen Größen des Signals s erfolgt und sich über den Gesamtbereich, den das Signal s durchlaufen kann, ein Schaltverhalten der Ventile ergibt, das einer Hysterese gleicht.

Der "sliding mode" - Regelvorgang spielt sich bei dieser Ausführungsform mit Hochdruckhydraulik daher wie folgt ab. Die Größe $Q_{soll}$ steigt an und führt somit zu einem Regelfehler in dem Volumenstromregler 6-4. Diese Abweichung wird in ein Einschaltimpuls für ein digitales Ventil 6-7, ein SG-Ventil umgewandelt, woraufhin der Strom in der Spule des Ventils ansteigt. Nach dem Überwinden der Rückstellkräfte und Reibungskräfte beginnt sich das Ventil zu öffnen, und der gemessenen Druck an dem Ventil 6-7 steigt. Damit steigt auch der momentane Volumenstrom $Q_{ist}$. Wird die Regelbedingung erfüllt, d. h. fällt das Signal s in Fig. 27 auf Null zurück, so wird das Ventilausgeschaltet, und der Strom fällt ab. In der Folge stoppt das Ventil die Öffnungsbewegung, und der Wert $Q_{ist}$ sinkt wieder oder steigt allenfalls sehr langsam weiter. Ist die Änderung von $Q_{ist}$ nun immer quasi konform mit der Änderung von $Q_{soll}$ ($\approx 0$), wird das Ventil 6-7 mit sehr hoher Frequenz geschaltet, und das Ventil bewegt sich entsprechend dem Verlauf von $Q_{soll}$. Dieser gerade beschriebenen "sliding mode" - Regelvorgang läßt sich am einfachsten in Form einer Schaltgerade verwirklichen, die sich darstellen läßt als Bedingung

$$s = (Q_{soll} - Q_{ist}) - (dQ_{ist}/dt)*K \qquad (6/4)$$

Dabei werden Steuersignale s, die in Fig. 27 die Eingangssignale der Kennlinienglieder 6-23 und 6-24 sind, sehr hochfrequent ausgegeben, wenn der Ausdruck (1) gleich 0 wird, also verschwindet. Ist aber s > 0, so müssen die Ventile 6-7 und 6-8 so geschaltet werde, daß ein Druckaufbau stattindet. Ist andereseits s < 0, so muß ein Druckabbau durch die Ventile 6-7 und 6-8 stattfinden. Eine gewissen Ruhezone in der Ventilansteuerung zwischen Ausgabe eines SO-Ansteuersignals und eines SG-Ansteuersignals gewährleistet - wie bereits oben beschrieben - die Sicherheit, daß nicht beide Ventile gleichzeitig angesteuert werden. Andererseits können aber auch beide Ventile kurzzeitig geöffnet werden, womit erreicht wird, daß die Welligkeit beim Druckaufbau im Rezipienten minimiert wird.

Der Aufbau des Drucksystems, bei dem die erfindungsgemäße Drucksteuerung eingesetzt wird, ist in Fig. 28 wiedergegeben. Durch einen Druckerzeuger 6-25 wird ein Druck aufgebaut. Der Druckerzeuger ist dabei gewöhnlicherweise eine Pumpe mit einem Motor als Antrieb. Der Druckkreislauf wird durch Rückschlagventile 6-26 und 6-27 stromaufwärts bzw. stromabwärts von dem Druckerzeuger 6-25 in einem Sinne ausgerichtet. Stromabwärts von dem Druckerzeuger 6-25 und dem ersten Rückschlagventil 6-27 befindet sich das SG-Ventil 6-7. Soll stromabwärts von diesem Ventil 6-7 ein Druck aufgebaut werden, ist also die Bedingung s > 0 erfüllt, so wird diese Ventil durch das Kennlinienglied 6-24 angesteuert, so daß es öffnet. Der Druck wird unmittelbar hinter dem Ventil 6-7 durch den Drucksensor 6-16 gemessen. Steigt der Druck hinter dem Ventil über einen vorgegebenen Wert an, so ändert sich die Regelbedingung in s = 0 oder s < 0, so daß das SG-Ventil 6-7 zunächst geschlossen wird und dann das SO-Ventil 6-8 geöffnet wird. Dadurch kann der Druck an den Bremsen 6-15 entweichen, das Arbeitsfluid strömt in das Reservoir 6-28. Dieses wechselnde Einschalten der Ventile mit der Überwachung durch den Drucksensor 6-16 in unmittelbarer Nähe zu den angesteuerten Ventilen 6-7 und 6-8 läßt wie oben beschrieben eine feine Dosierung des Bremsdruckes zu.

In einer weiteren Ausführhgsform dieses Bremssystems kann auf ein Ventil verzichtet werden. Diese Ausführungsform ist in Fig. 29 dargestellt. Hier arbeitet der Druckerzeuger 6-25 konstant gegen einen Druck in dem Bremssystem, während das SO-Ventil 6-7 immer wieder öffnet, so daß der Druck einen vorgegebenen Wert nicht überschreitet. Im übrigen ist die Funktionsweise dieser Ausführungsform genauso wie die oben diskutierte. Analog kann auch der Druckerzeuger wie das SG-Ventil aktiviert werden.

Das Drucksystem kann dabei für beliebige Bremssysteme und Bremsaufteilungen auf die Räder eines Fahrzeuges angewendet werden.

Ein weiterer Aspekt der Erfindung betrifft ein Verfahren und eine Vorrichtung zum möglichst ruckfreien Übergang zwischen zwei Fahrzuständen.

Ein Verfahren und eine Vorrichtung zum ruckarmen Anhalten eines Objekts ist aus DE 34 34 793 bekannt. Bei dem Verfahren zum ruckarmen Anhalten nach diesem Stand der Technik wird bei einem mit einer steuerbaren Bremseinrichtung ausgestatteten Objekt die momentane Geschwindigkeit und die momentane Verzögerung des Objekts erfaßt. Aus diesen beiden Werten wird ein Verzögerungssollwert berechnet. Der Verzögerungssollwert wird mit der momentanen Verzögerung verglichen, und es wird ein entsprechendes Differenzsignal erzeugt. Die Bremseinrichtung wird so angesteuert, daß das Differenzsignal minimal wird und die momentane Verzögerung dem Verzögerungssollwert angeglichen wird. Ist ein "ruckarmes Anhalten" gewünscht, so wird ein errechneter Verzögerungssollwert ausgegeben, wobei die Verzögerung proportional zu einer Funktion der Geschwindigkeiten ist. Dabei sind zu Beginn der Betriebsart "ruckarmes Anhalten" die momentane Verzögerung und der Verzögerungssollwert gleich. Der Verzögerungssollwert ist annähernd Null, wenn die momentane Geschwindigkeit gegen Null geht.

Bei dem Verfahren nach dem Stand der Technik wird ein Anfangs- und ein Endzustand festgelegt durch den jeweiligen Geschwindigkeitswert bzw. Verzögerungswert. Bei den zur Zeit entwickelten Fahrerassistenzsystemen, die den Fahrer beim Beschleunigen und Abbremsen seines Fahrzeugs unterstützen sollen, ist die Einschränkung auf Beschleunigung und Geschwindigkeit aber ein Nachteil, der die Einsetzbarkeit des Systems deutlich limitiert. Flexiblere Lösungen sind insbesondere wünschenswert für automatische Regelungen der Fahrgeschwindigkeit (Tempomat), des Abstandes zum vorausfahrenden Fahrzeug, des Anfahrvorgangs und - wie als einziges im genannten Stand der Technik berücksichtigt - der Zielbremsung. In allen diesen Fällen soll ein gegebener momentaner Fahrzustand automatisch in einen gewünschten zukünftigen Fahrzustand überführt werden.

Es ist daher Aufgabe dieses Aspekts der Erfindung, einen Fahrzustand in einen gewünschten Fahrzustand zu überführen, wobei dies möglich sein soll für alle Fahrzustandsparameter und wobei der mit dem Übergang verbundene Ruck minimal sein soll.

Diese Aufgabe wird gemäß den Ansprüchen 105 und 112 gelöst. Bevorzugte.Ausführungsformen sind Gegenstand der jeweiligen Unteransprüche.

Die Lösung des obigen Problems basiert auf der Berechnung der Übergangsbeschleunigungen mittels Variationsrechnung. Das Ergebnis der Variationsrechnung ist ein Algorithmus, der den im obengenannten Sinne optimalen Zeitverlauf des Fahrzustands während der Übergangsphase liefert. Dabei kann die Dauer der Übergangsphase ein vorgegebener, konstanter Wert sein oder selbst eine Funktion wenigstens eines der obengenannten Fahrparameter sein.

Bei dem erfindungsgemäßen Verfahren ist der Istzustand definiert durch den momentanen Ort, die momentane Absolutgeschwindigkeit, die momentane Beschleunigung sowie die momentanen Fahrparameter, die den Fahrzustand in einem weiteren Bezugssystem definieren. Dies ist insbesondere ein dem Fahrzeug vorausfahrendes anderes Fahrzeug. Damit sind die entsprechenden Parameter der Abstand (zu dem vorausfahrenden Fahrzeug), die Relativgeschwindigkeit (gegenüber dem vorausfahrenden Fahrzeug) und die Relativbeschleunigung (gegenüber dem vorausfahrenden Fahrzeug). Ist beispielsweise die augenblickliche Fahrsituation dadurch gekennzeichnet, daß der Abstand zu gering ist, so daß ein sicheres Fahren nicht gewährleistet ist, also der Abstand sich von einem Sollabstand unterscheidet, so wird durch das erfindungsgemäße Verfahren eine Sollängsbeschleunigung ermittelt, die ruckfrei vom momentanen Fahrzustand mit dem ungeeigneten Abstand in einen Sollfahrzustand mit dem gewünschten Abstand übergeht. Dazu wird eine über einem vorgegebenen Zeitintervall definierte zeitabhängige Beschleunigungsfunktion derart bestimmt, daß deren Integral über das Quadrat ihrer zeitlichen Ableitung minimal ist, wobei Anfangs- und Endzustand definiert sind. In dem obigen Beispielsfall wäre dies also insbesondere die Kenntnis des momentanen Abstandes zum vorausfahrenden Fahrzeug und die Definition eines Sollabstandes zum vorausfahrenden Fahrzeug. Mathematisch ausgedrückt heißt dies

$$\int_0^t (\ddot{x}(t))^2 dt = \text{minimal} \qquad\qquad 7/1$$

mit

$$\vec{v}(t=0) = \vec{v}_a; \qquad \vec{v}(t=t_e) = \vec{v}_e \qquad\qquad 7/2$$

dabei ist $\vec{v}$ ein sogenannter Sechservektor, der sich wie folgt darstellen läßt

$$\vec{v} = \begin{matrix} x \\ \dot{x} \\ \ddot{x} \\ s \\ \dot{s} \\ \ddot{s} \end{matrix}$$

Bei einer bevorzugten Ausführungsform des erfindungsgemäßen Verfahrens wird die Beschleunigungsfunktion, die die obige Minimalbedingung erfüllt, aus einem Satz vorgegebener Funktionen ausgewählt, wodurch der Suchraum etwas eingeschränkt werden kann. Insbesondere ist dies von Interesse bei der numerischen Evaluierung der günstigsten Beschleunigungsfunktion, da die abzusuchenden Funktionen in einem beschränkten Speicher untergebracht werden müssen. Hierbei kann dann je nach der Variationsrechnung zugrundeliegendem Problem die Menge der abzusuchenden Funktionen beispielsweise auf quadratisch von der Zeit abhängige Funktionen eingeschränkt werden. Da eine quadratische Abhängigkeit jedoch unter Umständen nicht zu dem gewünschten Ziel führt, müssen gegebenenfalls auch Funktionen berücksichtigt werden, die kubisch von der Zeit abhängen. In beiden Fällen können dabei die abgespeicherten Funktionen parametrisch von der vorgegebenen Übergangszeit zum Erreichen des Sollzustandes und/oder vom Sollabstand und/oder vom Istzustand und/oder vom Sollzustand abhängen. Schließlich kann die Übergangszeit selbst noch von Fahrparametern abhängen.

Im folgenden soll anhand der Figur die Evaluierung der günstigsten Beschleunigungsfunktion als Sollängsbeschleunigung in einem Beispiel erläutert werden. Die Figur zeigt ein Flußlaufdiagramm, nach dem das Verfahren abläuft.

In dem folgenden Beispiel legt das betrachtete Fahrzeug, in dem eine Vorrichtung zur Durchführung des erfindungsgemäßen Verfahrens zur Steuerung der Fahrzeuglängsbewegung eingebaut ist, in der Zeit t die Fahrstrecke $x(t)$ zurück. Dabei wird in diesem Beispiel der Abstand $s(t)$ zum vorausfahrenden Fahrzeug kontinuierlich gemessen. Dieses erfolgt über bekannte Abstandssensoren, wie Radar- oder Ultraschall- oder Lasersensoren. Die Abstandsmessung selbst kann dann mit einer Folge von Impulsen erfolgen, die kontinuierlich von dem Sensor ausgesendet werden und von einem mit dem Sensor verbundenen Detektor aufgefangen werden. Es können aber auch Dauer-Signale verwendet werden, die insbesondere dann sinnvoll sind, wenn auch die Veränderungen kontinuierlich erfaßt werden sollen. Während dies im Impulsbetrieb nur dadurch möglich ist, daß Laufzeitunterschiede von Puls zu Puls, also diskret, gemessen werden, kann man sich beim Dauer-Signal die Frequenzverschiebung des Signals aufgrund der Relativgeschwindigkeit zunutze machen. Der Absolutwert des Abstandes kann mit einem Dauer-Signal nur über Triangulation od. dgl. ermittelt werden. Der Sollabstand des Fahrzeugs vom vorausfahrenden Fahrzeug ist dabei durch

$$s_{soll}(\dot{x}) = b_0 + b_1\dot{x} + b_2\dot{x}^2 \qquad\qquad 7/3$$

gegeben, wobei $\dot{x}$ die Fahrgeschwindigkeit darstellt und $b_0$, $b_1$ und $b_2$ Parameter darstellen, die weiter unten diskutiert werden. Von diesem Sollabstand wird in dem hier diskutierten Beispiel angenommen, daß er von dem momentanen Abstand zum vorausfahrenden Fahrzeug abweicht. Der momentane Fahrzustand, d.h. der Fahrzustand zu dem Zeitpunkt $t=0$ läßt sich wie oben bereits beschrieben also als ein Sechservektor wie folgt darstellen:

$$\begin{aligned}
x(0) && x_0 \\
\dot{x}(0) && \dot{x}_0 \\
\ddot{x}(0) &= & \ddot{x}_0 \\
s(0) && s_0 \\
\dot{s}(0) && \dot{s}_0 \\
\ddot{s}(0) && \ddot{s}_0
\end{aligned}$$

Um den Sollabstand zu erreichen, muß daher der durch den obigen Sechservektor definierte Fahrzustand in einen Fahrzustand übergehen, der durch den folgenden Sechservektor definiert ist:

$$\begin{aligned}
x(t_e) && x_e \\
\dot{x}(t_e) && \dot{x}_e \\
\ddot{x}(t_e) &= & \ddot{x}_e \\
s(t_e) && s_{soll}(\dot{x})(t) \\
\dot{s}(t_e) && 0 \\
\ddot{s}(t_e) && 0
\end{aligned}$$

Der Übergang muß so ablaufen, daß das Integral in der Gleichung 90/1 minimal wird. Das bedeutet im einzelnen, daß das Quadrat des Rucks minimiert wird. Durch die Quadrierung der zu integrierenden Funktion ist die Aufgabe unabhängig davon geworden, ob es sich bei der Übergangsbeschleunigung um eine positive oder negative Beschleunigung handelt. Das heißt, daß, wenn eine Lösung dieses Problems mit der Randbedingung, die durch die Sechservektoren von oben gegeben ist, gefunden wird, so ist damit das Problem sowohl beim Bremsen als auch beim Schnellerwerden des Fahrzeugs gelöst. Ergänzend muß hierbei noch beachtet werden, daß die Integrationsgrenzen für die Berechnung des Integrals festgelegt werden. Es ist jedoch möglich, daß diese Integrationsgrenzen laufend an den momentanen Fahrzustand angepaßt werden. Mit anderen Worten, praktisch kann die Übergangszeit t frei gewählt werden.

Bei der Durchführung der Berechnung ergibt sich zunächst die Schwierigkeit, daß zum Zeitpunkt t=0 nicht bekannt ist, wie sich das vorausfahrende Fahrzeug für t>0 bewegt. Seine Bewegung muß daher extrapoliert werden. Dazu wird die Bewegung in eine Tälerreihe entwickelt, die nach der zweiten Ordnung abgebrochen wird, so daß sich für die Bewegung x(t) + s(t) ergibt

$$x(t) + s(t) = (x_0 + s_0) + (\dot{x}_0 + \dot{s}_0)\, t + \frac{1}{2}\, (\ddot{x}_0 + \ddot{s}_0)\, t^2 \qquad\qquad 7/4$$

Durch mehrmaliges Differenzieren nach der Zeit geht die Gleichung 7/4 in die Gleichung

$$\dddot{x}(t) = -\dddot{s}(t) \qquad\qquad 7/5$$

über, so daß die Variationsaufgabe formuliert werden kann als

$$\int_0^{t_e} (\dddot{s}(t))^2\, dt \;\rightarrow\; \text{Min} \qquad\qquad 7/6$$

Dabei gelten die Randbedingungen

$$s(0) = x_0$$
$$\dot{s}(0) = \dot{s}_0$$
$$\ddot{s}(0) = \ddot{s}_0$$
$$x(t_e) = b_0 + b_1 \dot{x}(t_e) + b_2 (\dot{x}(t_e))^2 \qquad\qquad 7/7$$
$$\dot{x}(t_e) = 0$$
$$\ddot{x}(t_e) = 0$$

wobei in dem Ausdruck für x($t_e$) die Größe $\dot{x}(t_e)$ noch substituiert werden kann. Als Zwischenergebnis ergibt sich für den zeitlichen Verlauf des Abstandes zum vorausfahrenden Fahrzeug

$$
\begin{aligned}
s(t) = {}& s_0 + \dot{s}_0\, t + (\ddot{s}_0\, t^2)/2 + \\
& (t^4(30\, s_0 + 16\, \dot{s}_0\, t_e + 3\, \ddot{s}_0\, t_e{}^2 - \\
& 30(b_0 + b_1\, (\dot{s}_0 + \ddot{s}_0\, t_e + t_e\, \ddot{x}_0 + \dot{x}_0) + \\
& b_2(\dot{s}_0 + \ddot{s}_0\, t_e + t_e\, \ddot{x}_0 + \dot{x}_0)^2)))/(2\, t_e{}^4) + \\
& (t^5(-12\, s_0 - 6\, \dot{s}_0\, t_e - \ddot{s}_0\, t_e{}^2 + \qquad\qquad 7/8 \\
& 12\, (b_0 + b_1(\dot{s}_0 + \ddot{s}_0\, t_e + t_e\, \ddot{x}_0 + \dot{x}_0) + \\
& b_2\, (\dot{s}_0 + \ddot{s}_0\, t_e + t_e\, \ddot{x}_0 + \dot{x}_0)^2)))/(2\, t_e{}^5) + \\
& (t^3(-20\, s_0 - 12\, \dot{s}_0\, t_e - 3\, \ddot{s}_0\, t_e{}^2 + \\
& 20\, (b_0 + b_1\, (\dot{s}_0 + \ddot{s}_0\, t_e + t_e\, \ddot{x}_0 + \dot{x}_0) + \\
& b_2\, (\dot{s}_0 + \ddot{s}_0\, t_e + t_e\, \ddot{x}_0 + \dot{x}_0)^2)))/(2\, t_e{}^3).
\end{aligned}
$$

Für die absolute Beschleunigung $\ddot{x}$ ergibt sich somit als optimaler Beschleunigungsverlauf

$$\ddot{x}(t) = \ddot{x}_0 - (6\ t^2\ (30\ s_0 + 16\ \dot{s}_0\ t_e + 3\ \ddot{s}_0\ t_e^2 -$$
$$30\ (b_0 + b_1\ (\dot{s}_0 + \ddot{s}_0\ t_e + t_e\ \ddot{x}_0 + \dot{x}_0) +$$
$$b_2\ (\dot{s}_0 + \ddot{s}_0\ t_e + t_e\ \ddot{x}_0 + \dot{x}_0)^2)))/t_e^4 -$$
$$(10\ t^3\ (-12\ s_0 - 6\ \dot{s}_0\ t_e - \ddot{s}_0\ t_e^2 +$$
$$12\ (b_0 + b_1\ (\dot{s}_0 + \ddot{s}_0\ t_e + t_e\ \ddot{x}_0 + \dot{x}_0) +$$
$$b_2\ (\dot{s}_0 + \ddot{s}_0\ t_e + t_e\ \ddot{x}_0 + \dot{x}_0)^2)))/t_e^5 -$$
$$(3\ t\ (-20\ s_0 - 12\ \dot{s}_0\ t_e - 3\ \ddot{s}_0\ t_e^2 +$$
$$20\ (b_0 + b_1\ (\dot{s}_0 + \ddot{s}_0\ t_e + t_e\ \ddot{x}_0 + \dot{x}_0) +$$
$$b_2\ (\dot{s}_0 + \ddot{s}_0\ t_e + t_e\ \ddot{x}_0 + \dot{x}_0)^2)))/t_e^3.$$

7/9

Wie oben bereits beschrieben, ist dies die Vorgehensweise zum Bestimmen der optimalen Beschleunigungsfunktion, wenn aus einem Anfangszustand mit vorgegebenem Abstand, vorgegebener Relativgeschwindigkeit und vorgegebener Relativbeschleunigung sowie vorgegebener Geschwindigkeit und vorgegebener Beschleunigung des Fahrzeugs übergegangen werden soll in einen Endzustand mit einem vorgegebenen Sollabstand zum vorausfahrenden Fahrzeug. Dies ist jedoch ein spezielles Problem, dessen mathematische Behandlung hier beispielsweise wiedergegeben wurde. Es können auch andere Übergangsbedingungen gestellt werden, wie z.B. der Übergang von einer momentanen Geschwindigkeit in eine Sollgeschwindigkeit oder Sollrelativgeschwindigkeit und ein Übergang zwischen einer momentanen Beschleunigung und einer Sollrelativbeschleunigung oder Sollbeschleunigung, deren Berechnung jeweils im wesentlichen nach den gleichen Prinzipien wie oben beschrieben erfolgt.

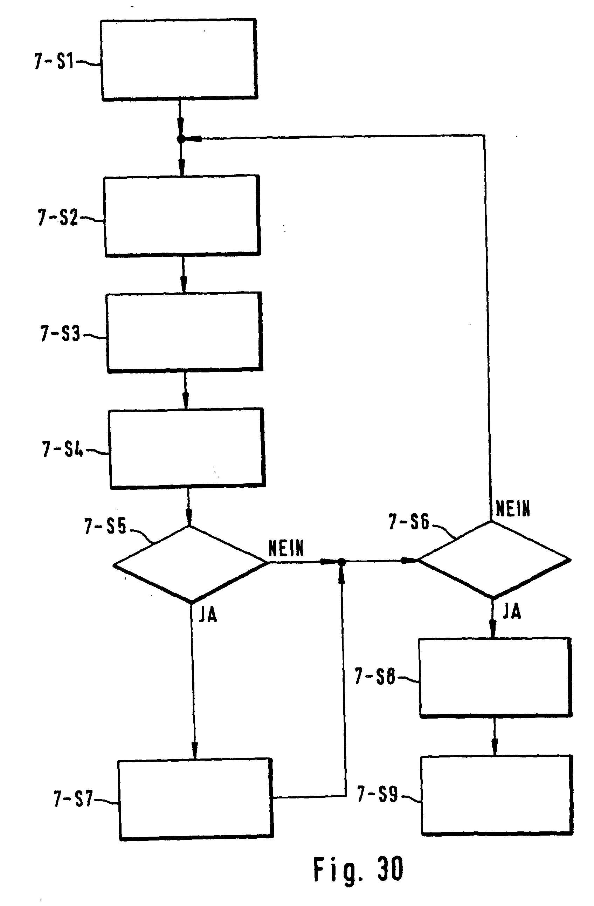

Das für alle Übergangsbedingungen gleiche erfindungsgemäße Verfahren ist in Fig. 30 dargestellt. Wird die Ermittlung einer optimalen Beschleunigungsfunktion für den Übergang von einem Istzustand in einen Sollzustand gewünscht, so wird das Verfahren damit gestartet (Schritt 7-S1), daß ein hoher Wert in einen Speicher geschrieben wird. Dieser Wert in dem Speicher stellt das Integral, das zu minimieren ist, einer - in Schritt 7-S1 - fiktiven Funktion dar, mit dem die in den folgenden Schritten ausgewählten Funktionen verglichen werden.

Als nächstes wird in Schritt 7-S2 eine Funktion aus einem Funktionsraum ausgewählt, die im folgenden verarbeitet und verglichen werden soll mit der obigen fiktiven Funktion. Dabei kann im einfachsten Fall der Speicher eine Anzahl von Nullstellen von Polynomen ersten Grades enthalten, wobei die gewünschte Funktion dann durch Multiplikation der mehreren Polynome ersten Grades entsteht, je nach gewünschter höchster Potenz der Funktion. Daneben kann der Speicher auch exponentielle Funktionen in Form ihrer Abklingkoeffizienten beinhalten. Diese Techniken sind dem Fachmann bekannt und brauchen hier daher nicht weiter erläutert zu werden.

Bei jeder Auswahl einer Funktion aus dem Funktionsraum wird gleichzeitig ein Laufparameter n inkrementiert.

Im nächsten Schritt 7-S3 wird die ausgewählte Funktion nach der Zeit differenziert und anschließend quadriert.

In Schritt 7-S4 wird schließlich die Funktion zwischen den Grenzen 0 und $t_e$, d.h. dem Ende der Übergangsphase, integriert. Hierbei ist $t_e$ zunächst ein fester Wert. Dieser kann jedoch je nach Bedarf im Laufe des Verfahrens an die jeweilige Sollgeschwindigkeit und/oder den jeweiligen Sollabstand und/oder die Absolutgeschwindigkeit und/oder den momentanen Abstand angepaßt werden.

Im Schritt 7-S5 wird der Wert dieses Integrals mit dem Wert im Speicher aus Schritt S1 verglichen. Ist der Wert des Integrals kleiner als der Wert, der in dem Speicher steht, so wird das Verfahren mit Schritt 7-S7 fortgesetzt, bei dem die Funktion in Form ihrer Parameter in einem Funktionsspeicher abgespeichert wird. Dieser Funktionsspeicher ist ähnlich dem Funktionsraum in Schritt 7-S2 aufgebaut, nur daß dieser Speicher nur für eine Funktion eingerichtet ist. Nach diesem Schritt 7-S7 wird geprüft, ob der Laufparameter einem vorgegebenen Wert gleicht, der die obere Grenze der zu testenden Funktionen darstellt. Dieser Vergleich findet im Schritt S6 statt.

Wird in dem Schritt 7-S5 beim Vergleich des unmittelbar vorher evaluierten Integrals mit dem im Speicher abgelegten Wert festgestellt, daß der im Speicher abgelegte Wert kleiner als der Integralwert ist, so fährt das Verfahren ebenfalls unmittelbar mit Schritt 7-S6 fort, unter Umgehung von Schritt 7-S7.

Wird im Schritt 7-S6 festgestellt, daß der Laufparameter n noch nicht den Maximalwert $n_{max}$ erreicht hat, so springt das Verfahren zu Schritt 7-S2 zurück, und es wird eine neue Funktion aus dem Funktionsraum unter Inkrementierung des Laufparameters n ausgewählt. Findet man jedoch, daß der Laufparameter n bereits dem Maximalwert $n_{max}$ gleicht, so wird die in dem Funktionsspeicher abgelegte Funktion in Schritt 7-S8 als Ergebnis ausgegeben. In Schritt 7-S9, der dem Schritt 7-S8 folgt, endet der Verfahrensablauf.

Hat man nach der Durchführung des erfindungsgemäßen Verfahrens einen mathematischen Ausdruck für die optimale Beschleunigungsfunktion erhalten, die dann z.B. ein Polynom dritten Grades darstellt, wobei die Koeffizienten des Polynoms parametrisch von der vorgegebenen Übergangszeit $t_e$ zum Erreichen des Sollzustandes und/ oder vom momentanen Sollabstand und/oder von der momentanen Relativgeschwindigkeit und/oder der momentanen Relativbeschleunigung und/oder der momentanen Absolutgeschwindigkeit und/oder der momentanen Absolutbeschleunigung abhängen. Mit "momentan" ist in diesem Zusammenhang der Beginn der Übergangsphase gemeint. Beim Zugrundelegen eines solchen Polynoms dritten Grades, wie es in der Gleichung 7/9 dargestellt ist, kann bei der digitalen Verarbeitung für einen zeitdiskreten Fahrzeug-Längsregler die unabhängige Größe t gleich der Abtastzeit gesetzt werden, so daß jeweils der optimale Beschleunigungswert für den kommenden Abtastzeitpunkt erhalten wird. Will man lineare Filter zur Bestimmung der optimalen Beschleunigungsänderung verwenden, so erhält man dies für einen kontinuierlichen Fahrzeug-Längsregler, indem man die Gleichung 7/9 durch eine Reihenentwicklung ersetzt und diese nach dem linearen Term abbricht.

Die erfindungsgemäße Vorrichtung für die Durchführung des obigen Verfahrens umfaßt einen Speicher zum Abspeichern eines numerischen Wertes, der das Integral einer Funktion darstellt, sowie mehrere zu einem Funktionsraum zusammengefaßte Funktionsspeicher, in denen im voraus die Funktionen abgespeichert sind, unter denen die Übergangsfunktion gefunden werden soll, und schließlich einem einzelnen Funktionsspeicher, in dem die Funktion abgespeichert ist, die das Variationsproblem löst. Außerdem umfaßt die Vorrichtung ein Differenzierglied zum Differenzieren einer ausgewählten Funktion, dessen Ausgang mit dem Eingang eines Quadriergliedes zum Quadrieren der differenzierten Funktion verbunden ist. Dieses Quadrierglied multipliziert die Funktion mit sich selbst und gibt sie anschließend an den Eingang eines Integrators aus. Dieser Integrator bildet das Integral von dem Eingangssignal, wobei die untere Integrationsgrenze im allgemeinen mit dem Start des Verfahrensablaufs zusammenfällt, die aber auch frei gewählt werden kann durch den Fahrer z.B., und die obere Integrationsgrenze $t_e$ durch den Fahrer vorgegeben wird. Schließlich umfaßt die erfindungsgemäße Steuerungsvorrichtung einen Vergleicher zum Vergleichen des Ausgangswertes des Integrators mit dem in dem Speicher abgelegten numerischen Wert und außerdem zum Ausgeben der gefundenen optimalen Beschleunigungsfunktion.

Ein weiterer Aspekt der Erfindung betrifft ein Verfahren zur Abstandsregelung mit virtuellen Federn und Dämpfern, also mit künstlich erzeugter Dynamik beim Vorgang des Einregeins eines Abstandes zu einem vorausfahrenden Fahrzeug, sowie eine Vorrichtung zur Durchführung dieses Verfahrens.

Es ist allgemein bekannt, den Sollabstand zu einem vorausfahrenden Fahrzeug in Abhängigkeit von der momentanen eigenen Geschwindigkeit zu bestimmen. Außerdem kann der Sollabstand zu dem vorausfahrenden Fahrzeug auch zusätzlich in Abhängigkeit von der Relativgeschwindigkeit der beiden Fahrzeuge zueinander ermittelt werden. Dazu wird die eigene Fahrgeschwindigkeit und der Abstand zu dem vorausfahrenden Fahrzeug erfaßt. Ein solches System ist z.B. aus DE 43 12 595 bekannt. Das dort beschriebene Sicherheitssystem umfaßt einen Abstandssensor zur Bestimmung der Entfernung vorausfahrender Fahrzeuge und einen programmgesteuerten Rechner zur Verarbeitung der Signale vom Abstandssensor und Ausgabe entsprechender Steuerbefehle. Der Ultraschall-Abstandssensor arbeitet nach dem Laufzeitprinzip. Der Rechner differenziert den Meßwert vom Abstandssensor nach der Zeit und aktiviert eine Warneinrichtung bzw. bremst das Fahrzeug ab, wenn die Relativgeschwindigkeit derart groß und die Entfernung derart klein wird, daß ohne Bremsvorgang ein Zusammenstoß unvermeidbar ist. Ein weiteres Beispiel für ein solches Sicherheitssystem ist aus US 5 165 497 bekannt.

Zur Regelung des Abstandes zu einem vorausfahrenden Fahrzeug muß mit Hilfe vom sogenannten E-Gas, also dem elektrisch steuerbaren Motormoment, und einer aktiven Bremse, also einer elektrisch betätigbaren Bremse, das (nachfolgende) Fahrzeug so beschleunigt bzw. abgebremst werden, daß sich ein vorgegebener, von der eigenen Fahrgeschwindigkeit (des nachfolgenden Fahrzeugs) abhängiger Abstand einstellt.

In der Praxis zeigt sich aber, daß zwischen der Ausgabe der Beschleunigungsvorgabe durch eine Steuerungsvorrichtung und dem tatsächlichen Erreichen des Beschleunigungswertes durch das Fahrzeug eine bisweilen erhebliche Zeitspanne vergeht. Diese sogenannte Totzeit führt bei den oben genannten Steuerungen und Systemen nach dem Stand der Technik dazu, daß das Gesamtsystem aus mehreren hintereinanderfahrenden Fahrzeugen zu schwingen beginnt, so daß sich die Schwingungen immer weiter verstärken, bis es schließlich zu einem Absinken wenigstens einzelner Fahrzeuggeschwindigkeiten auf Null oder zum Stau einer Fahrzeugkolonne kommt.

Aufgabe dieses Aspekts der Erfindung ist es daher, ein Verfahren und eine Vorrichtung anzugeben, mit dem bzw. der unerwünscht starke Geschwindigkeitsänderungen des Fahrzeugs zu vermeiden.

Diese Aufgabe wird gemäß den Ansprüche 114 und 118 gelöst. Bevorzugte Ausführungsformen des Verfahrens wie der Vorrichtung sind Gegenstand der jeweiligen Unteransprüche.

Bei der Untersuchung des obigen Problems hat der Erfinder erkannt, daß sich die Abstandsregelung zwischen einem vorausfahrenden Fahrzeug und einem nachfolgenden Fahrzeug mit einem Modell aus einer mit Feder und Dämpfer unter Einbeziehung von Reibung gekoppelten Masse beschreiben läßt. Auf dieses Modell beziehen sich die folgenden Erläuterungen.

Das Verfahren ist gekennzeichnet durch Ausgeben einer Sollfolgebeschleunigung zum Erreichen eines Sollabstandes $A_{soll}$ zu einem vorausfahrenden Fahrzeug, die von dem momentanen Abstand s, der Relativgeschwindigkeit $v_{rel}$ und der Absolutgeschwindigkeit $v_{abs}$ abhängt. Mit dem momentanen Abstand s ist hier der Abstand zu der Zeit gemeint, zu der die Ausgabe der Sollfolgebeschleunigung $a_{Fsoll}$ erfolgt. Mit dieser Abhängigkeit der Sollfolgebeschleunigung $a_{Fsoll}$ von dem Abstand s, der Relativgeschwindigkeit $v_{rel}$ und der eigenen oder Absolutgeschwindigkeit $v_{abs}$ wird gegenüber dem Stand der Technik in die Bestimmung der Sollfolgebeschleunigung ein zusätzlicher Term eingeführt, der modellhaft betrachtet der Reibung des Fahrzeuges auf der Fahrbahn entspricht. Die Tot- bzw. Reaktionszeiten der Steuerungen und Aktoren des Fahrzeuges können durch eine Masse, die Regelung auf konstanten Abstand zwischen den Fahrzeugen durch eine Feder modelliert werden.

In einer bevorzugten Ausführungsform ist die Sollfolgebeschleunigung $a_{Fsoll}$ die Summe aus einer ersten Komponente f, die vom momentanen Abstand s zu einem vorausfahrenden Fahrzeug abhängt, und einer zweiten Komponente g, die von der Relativgeschwindigkeit $v_{rel}$ gegenüber einem vorausfahrenden Fahrzeug abhängt. Die Abhängigkeiten sind dabei ihrerseits eine Funktion der Absolutgeschwindigkeit $v_{abs}$, so daß sich formelmäßig dies darstellen läßt als

$$a_{Fsoll} = a_{Fsoll}(f(v_{abs}, s), g(v_{abs}, v_{rel})) \qquad (8/1)$$

wobei f und g vorgegebene Funktionen sind.

In einer besonders bevorzugten Ausführungsfunktion werden dabei die Funktionswerte f und g addiert.

In einer weiteren bevorzugten Ausführungsform des Verfahrens wird die Sollfolgebeschleunigung $a_{Fsoll}$ als Summe aus drei Komponenten bestimmt. Dabei ist der erste Summand oder die erste Komponente ein vom Abstand s abhängiger Term. Insbesondere kann dieser abstandsabhängige Term proportional zu der zweiten Ableitung des Abstandes nach der Zeit sein, er kann aber auch direkt vom Abstand abhängen. Der zweite Summand oder die zweite Komponente hängt in dieser Ausführungsform von der Relativgeschwindigkeit $v_{rel}$ ab. Insbesondere ist der zweite Summand proportional zu der Relativgeschwindigkeit. Der dritte Summand schließlich hängt von der Absolutgeschwindigkeit, also der Geschwindigkeit des nachfolgenden Fahrzeuges, also des Fahrzeuges ab, in dem das erfindungsgemäße System eingebaut ist. Auch hier ist der dritte Summand insbesondere proportional zu der Absolutgeschwindigkeit, so daß sich als eine spezielle Ausführungsform eine Sollfolgebeschleunigung in der Form

$$a_{Fsoll} = a(s) + b * v_{rel} + c * v_{abs} \qquad (8/2)$$

ergibt. Dabei ist $a_{Fsoll}$ die Beschleunigungsvorgabe bzw. der Sollfolgebeschleunigungswert, a(s) ein vom Abstand abhängiger Term, der insbesondere proportional zur zweiten zeitlichen Ableitung des Abstandes s zwischen dem (nachfolgenden) und dem vorausfahrenden Fahrzeug ist, und $v_{rel}$ und $v_{abs}$ sind die Relativ- bzw. Absolutgeschwindigkeit des (nachfolgenden) Fahrzeugs gegenüber dem vorausfahrenden Fahrzeug bzw. der Fahrbahn. Die Koeffizienten b und c sind Wichtungsfaktoren.

Die Wichtungsfaktoren können konstant sein. Dies hat jedoch den Nachteil, daß die zusätzlichen Reibungsterme auf Dauer dazu führen, daß sich der Abstand zwischen den Fahrzeugen unerwünscht vergrößert. In einer bevorzugten Ausführungsform des erfindungsgemäßen Verfahrens werden daher variable Koeffizienten bei der Evaluierung der Sollfolgebeschleunigung verwendet. Diese variablen Koeffizienten hängen dann bevorzugt von der Relativgeschwindigkeit $v_{rel}$ ab, so daß gilt

$$b = b(v_{rel}), c = c(v_{rel})$$

und die Gleichung (8/2) sich schreiben läßt als

$$a_{Fsoll} = a(s) + b(v_{rel}) * v_{rel} + c (v_{rel}) * v_{abs}$$

In einer einfachsten Version ist die Abhängigkeit der Koeffizienten von der Relativgeschwindigkeit dabei linear. Es kann aber auch je nach Koeffizient eine unterschiedliche Abhängigkeit der Koefizienten von der Relativgeschwindigkeit gewählt werden. Dies ist insbesondere dann sinnvoll, wenn die Wichtung der einzelnen Komponenten oder Summanden in der obigen Gleichung (8/2) vom Fahrzustand abhängen sollen. Insbesondere läßt sich so erreichen, daß dann bei kleinen Differenzgeschwindigkeiten der "Dämpfer" zwischen den beiden Fahrzeugen und bei großen Differenzgeschwindigkeiten der "Dämpfer" zwischen dem Fahrzeug und der Fahrbahn für die Sollfolgebeschleunigung bestimmend wird. Der Übergang zwischen den beiden Fällen kann darüber hinaus bei geschickter Wahl der Abhängigkeit der Koeffizienten von der Relativgeschwindigkeit gleitend gestaltet werden.

Durch die variablen Koeffizienten ist der Zusammenhang zwischen Sollfolgebeschleunigung und der Relativ- bzw. Absolutgeschwindigkeit nicht mehr linear. Dies gilt bereits für die sehr einfache Gleichung (8/2). Neben der Darstellung der Sollfolgebeschleunigung als Summe lassen sich aber selbstverständlich auch kompliziertere Funktionen finden, die zur Erzielung spezieller Effekte andere Reibgesetze zugrunde legen, was nichtlinearen Federn und Dämpfern entspricht.

Das Verfahren wurde numerisch simuliert und zeigte das erwartete Verhalten: die durch die Totzeiten zwischen Ausgabe eines Sollbeschleunigungswertes, der ohne virtuelle Federn und Massen berechnet wurde, und dem Erreichen der gewünschten Beschleunigung angefachten Schwingungen einer Fahrzeugkolonne wurden mit dem erfindungsgemäßen Verfahren unterdrückt, es kam nicht mehr zu bleibenden Regelabweichungen.

Im folgenden wird ein Ausführungsbeispiel des erfindungsgemäßen Verfahrens anhand der Zeichnungen beschrieben. Dabei ist in

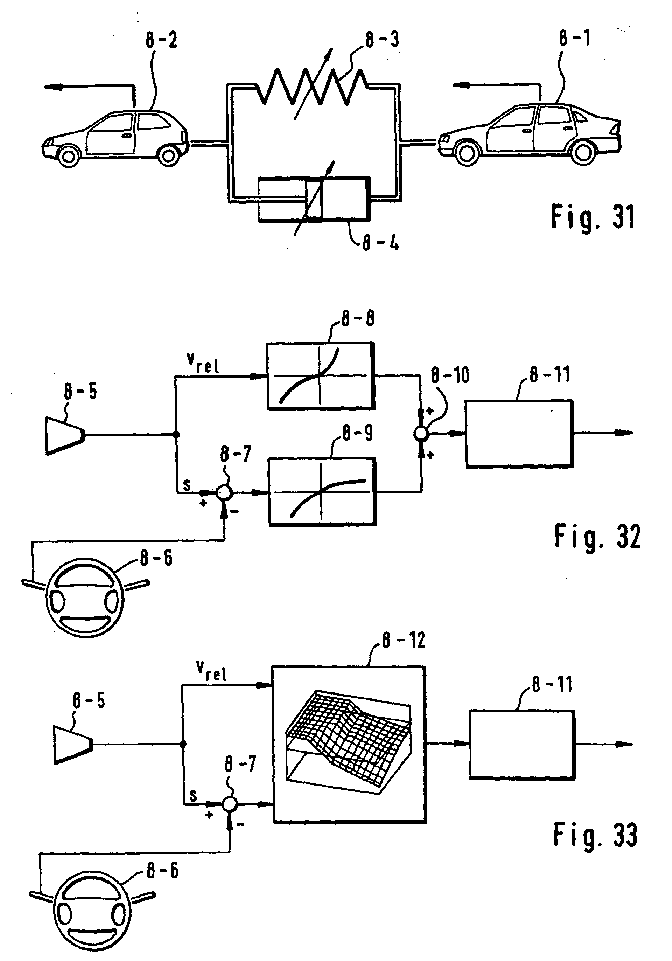

Fig. 31 die dem erfindungsgemäßen Verfahren zugrundeliegende Fahrsituation mit Modell dargestellt;

Fig. 32 eine Ausführungsform einer erfindungsgemäßen Steuerung dargestellt;

Fig. 33 eine weitere Ausführungsform einer erfindungsgemäßen Steuerung dargestellt;

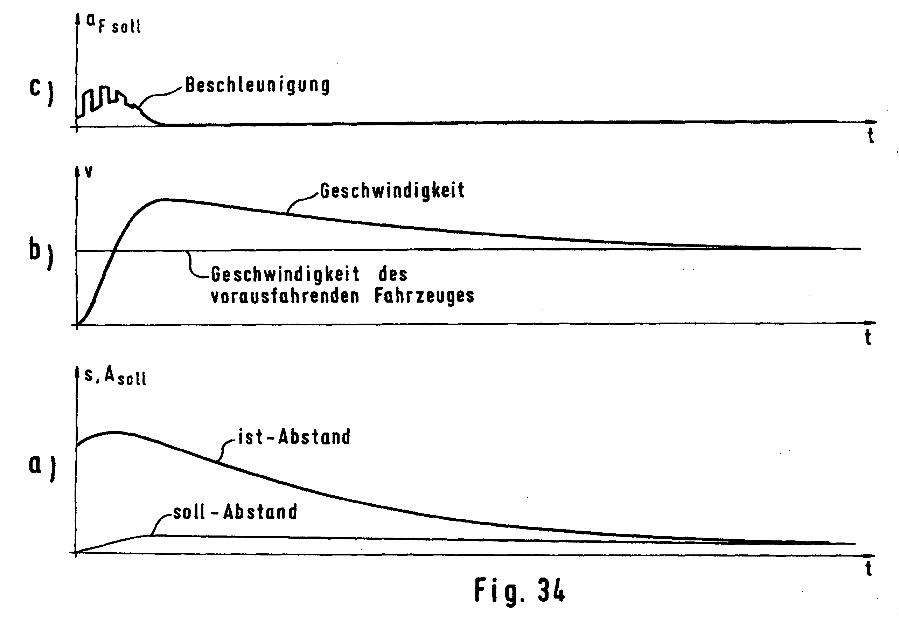

Fig. 34a bis 34c den Verlauf der wichtigsten Fahrgrößen während der Steuerung mit dem erfindungsgemäßen Verfahren dargestellt.

Fig. 31 zeigt zwei hintereinanderfahrende Fahrzeuge 8-1 und 8-2, von denen das hintere Fahrzeug 8-1 dasjenige ist, in welchem die erfindungsgemäße Steuerung eingebaut ist. Die beiden Fahrzeuge sind durch eine virtuelle Feder 8-3 und einen virtuellen Dämpfer 8-4 miteinander verbunden. Diese beiden virtuellen Kopplungsglieder sind einstellbar, so daß sich gewünschter oder Sollabstand zwischen den beiden Fahrzeugen ergibt, der sich aus einem von der Absolutgeschwindigkeit abhängigen Term und einem sogenannten "offset"-Term $A_{offset}$ zusammensetzt. Der von der Absolutgeschwindigkeit abhängige Term läßt sich dabei als Produkt aus, einer Zeit und der Absolutgeschwindigkeit $v_{abs}$ darstellen. Der Zeitfaktor in dem Produkt ist dabei die Zeit, die bei der momentanen Absolutgeschwindigkeit vergehen würde, bis das (nachfahrenden) Fahrzeug 8-1 auf das stehende "vorausfahrende" Fahrzeug auffahren würde (time to collision, $T_{col}$). Der Feder wirkt der Dämpfer 8-4 in gewisser Weise entgegen und verhindert so zu große Ausschläge bzw. Schwingungsamplituden des Systems aus zwei aufeinander folgenden Fahrzeugen.

Der in Fig. 31 dargestellte Sachverhalt gibt die Situation im statischen Fall korrekt wieder. Beim Übergang zu dem zeitlich veränderlichen Fall müssen jedoch die zeitliche Entwicklung der Fahrgrößen mit berücksichtigt werden. Der Aufbau der erfindungsgemäßen Steuerung, die hierfür einsetzbar ist, ist in Fig. 32 gezeigt.

Ein Abstandssensor 8-5 gibt Signale aus, die dem momentanen Abstand d des Fahrzeugs 8-1 von einem vorausfahrenden Fahrzeug 8-2 entsprechen. Diese Signale können aus der Laufzeit von z. B. Ultraschallpulsen abgeleitet werden, oder sie können mittels Triangulationsmethode bei Dauerstrichsignalen gewonnen werden. Mit dem fortlaufend gemessenen Abstand ist auch seine Änderung über die Zeit, d. h. seine zeitliche Ableitung $v_{rel}$ bekannt. Gleichzeitig wird vom Geschwindigkeitswählschalter die momentane Geschwindigkeit des Fahrzeuges 8-1 und damit ein Mindestabstand vorgegeben, den das Fahrzeug 8-1 von einem vorausfahrenden Fahrzeug 8-2 einzuhalten hat. Dieser Mindestabstand beträgt wie bereits in Zusammenhang mit Fig. 31 beschrieben

$$A_{soll} = T_{col} * v_{abs} + A_{offset} \qquad\qquad (8/3)$$

Der von dem Geschwindigkeitswählschalter 8-6 ausgegebene Mindestabstand d wird von dem vom Abstandssensor 8-5 ausgegebenen momentanen Abstand in einem Subtrahierer 8-7 abgezogen. Das Differenzsignal der beiden Abstände aus dem Subtrahierer 8-7 ist die Eingangsgröße eines Federekennliniengliedes 8-9. In diesem Federkennlinienglied 8-9 wird entsprechend der Eingangsgröße ein erster Beschleunigungswert erzeugt. Der Zusammenhang zwischen Eingangsgröße und Ausgangsgröße, also erstem Beschleunigungswert ist hierbei in der Regel nichtlinear.

Neben der Bestimmung eines ersten Beschleunigungwertes aus dem Federkennlinienglied 8-9 wird das nach der Zeit differenzierte Abstandssignal (das insbesondere aus einer Dopplerverschiebungsmessung stammen kann) von dem Abstandssensor 8-5 zur Bestimmung eines zweiten Beschleunigungswertes herangezogen. Dabei wird das zeitlich abgeleitete Signal als Eingangsgröße eines Dämpfungskennlinengliedes 8-8 verwendet, das einen zweiten Beschleunigungswert ausgibt. Auch hier ist der Zusammenhang zwischen Eingangsgröße und Ausgangswert in der Regel nichtlinear.

In beiden Kennliniengliedern 8-8 und 8-9 werden bei dem erfindungsgemäßen Verfahren dabei von der Absloutgeschwindigkeit abhängige Kennlinien verwendet; d. h. die in jedem Kennlinienglied gespeicherte Kennlinien hängt parametrisch von der momentanen eigenen Absolutgeschwindigkeit $v_{abs}$ ab.

Die beiden Beschleunigungswerte werden in einem Addierer 8-10 addiert und anschließend gefiltert und in ihrer maximalen Amplitude begrenzt durch einen Filter 8-11. Dieser gefilterte und begrenzte Beschleunigungswert entspricht der Sollfolgebeschleunigung.

In einer anderen Ausführungsform der erfindungsgemäßen Steuerungsvorrichtung, die in Fig. 33 gezeigt ist, werden die Kennlinienglieder 8-8 und 8-9 zusammengefaßt zu einem Kennfeldglied 8-12, so daß mit Abstand und Relativgeschwindigkeit von dem Abstandssensor 8-5 als Eingangsgrößen aus einem quasi dreidimensionalen Kennfeld ein entsprechender Wert für den Beschleunigungswert abgelesen werden kann. Auch hier hängt die Schar der Kennfelder parametrisch von der momentanen Absolutgeschwindigkeit $v_{abs}$ des Fahrzeuges ab. Die Ausführungsform nach Fig. 33 hat den Vorteil, daß damit der Addierer 8-10 eingespart werden kann.

In Fig. 34 ist der Verlauf von wichtigen Fahrgrößen während der Steuerungsphase dargestellt. In Fig. 34a ist der Verlauf des Abstandes des Fahrzeuges 8-1 von dem vorausfahrenden Fahrzeug 8-2 über die Zeit aufgetragen. Zum Zeitpunkt t = 0 beträgt dieser Abstand z. B. 200 m. Der Sollabstand betrage zunächst 10 m. Dieser Sollabstand muß aber zeitlich nicht konstant sein, er hängt wie bereits beschrieben wesentlich von der augenblicklichen Fahrsituation ab, insbesondere von der Geschwindigkeit des vorausfahrenden Fahrzeuges, von der eigenen Absolutgeschwindigkeit etc.

Um eine möglichst zügige Annäherung der beiden Fahrzeuge auf den Sollabstand zu erreichen, wie er am rechten Ende der graphischen Darstellung des zeitlichen Verlaufs des Abstandes und des Sollabstandes erreicht ist, muß die Geschwindigkeit eingestellt werden, wie sie in Fig. 34b gezeigt ist. Dabei wird angenommen, daß das vorausfahrende Fahrzeug 8-2 mit einer konstanten Geschwindigkeit von 50 km/h fährt. Wenn nun das Fahrzeug 8-1 beschleunigt wird, um den Abstand zu dem vorausfahrenden Fahrzeug 8-1 zu verringern, so ändert sich wie in Teil a der Fig. 34 gezeigt der Sollabstand in Abhängigkeit von der Absolutgeschwindigkeit. Da die Geschwindigkeit immer wieder je nach momentanem Abstand vom vorausfahrenden Fahrzeug 8-2 nachgeführt wird, kommt es zu kleinen Schwankungen der Geschwindigkeitskurve, die etwas "höherfrequent" sind. Diese höherfrequenten Anteile in der Geschwindigkeit finden sich dann in dem Beschleunigungssignal in Fig. 34c wieder. Dort sind sie deutlich ausgeprägt und zeigen die Reaktion und die Nachführung der Sollfolgebeschleunigung durch das erfindungsgemäße System und Verfahren.

Ein weiterer Aspekt der Erfindung betrifft ein Bedienkonzept für einen Abstandsregeltempomat und insbesondere ein Verfahren zum Einstellen eines Sollabstands zu einem vorausfahrenden Fahrzeug durch einen Abstandsregler, wobei der Fahrer den eingeregelten Abstand modifizieren kann. Außerdem betrifft dieser Aspekt der Erfindung eine Vorrichtung zur Durchführung des Verfahrens.

Bei der Einführung der automatischen Regelung des Abstandes eines Fahrzeuges zum vorausfahrenden Fahrzeug stellt sich die Frage nach dem richtigen Abstand. Es gibt die Faustregel "halber Tacho" und den gesetzlich vorgeschriebenen Sicherheitsabstand von "einem Viertel der gefahrenen km/h in Metern". In der täglichen Fahrpraxis werden diese Werte durch zu dichtes Auffahren regelmäßig unterschritten.

Bei automatischen Abstandsreglern wird der Sollabstand zu einem vorausfahrenden Fahrzeug in Abhängigkeit von der momentanen eigenen Geschwindigkeit bestimmt. Zur Abstandsregelung wird ein momentaner Abstand zu dem vorausfahrenden Fahrzeug erfaßt, eine Absolutgeschwindigkeit erfaßt, ein erster Sollabstand aus dem momentanen Abstand und der Absolutgeschwindigkeit betimmt.

Ein solches System ist z.B. aus DE 31 30 873 bekannt. Der dort beschriebene Abstandsregler ist einsetzbar für ein von einem Motor angetriebenes erstes Fahrzeug, das ein in eine Leerlaufstellung für den Motor vorgespanntes Leistungssteuerelement, ein Bremssteuerelement und einen Signalgenerator aufweist. Der Signalgenerator erzeugt zu dem Abstand des vorausfahrenden zweiten Fahrzeugs proportionale erste sowie zweite Steuersignale, die beim Unterschreiten vorbestimmter Abstände das Leistungssteuerelement und das Bremssteuerelement betätigen. Wenn der Abstand ein erstes Maß unterschreitet, drängt das erste Stellglied das Leistungssteuerelement mit zunehmend kleiner werdendem Abstand unter zunehmender Federkraft in Richtung der Leerlaufstellung. Wenn der Abstand ein zweites Maß unterschreitet, das kleiner als das erste Maß ist, und wenn das Leistungselement um ein vorgegebenes Maß in die Leerlaufstellung gedrängt ist, bremst das zweite Stellglied zunehmend das erste Fahrzeug mit zunehmend kleiner werdendem Abstand. Wenn der Abstand ein drittes Maß unterschreitet, das kleiner als das zweite Maß ist, so gibt der Signalgenerator an das zweite Stellglied dritte Steuersignale zur Vollbremsung des ersten Fahrzeuges und an ein drittes Stellglied zur Rückstellung des Leistungssteuerelements in seine Leerlaufstellung und zum Halten in seiner Leerlaufstellung aus.

Ein weiteres Beispiel für ein solches Verfahren zur Abstandsregelung von Kraftfahrzeugen ist aus DE 44 37 678 bekannt. Bei dem Verfahren wird der Abstand zum vorausfahrenden Kraftfahrzeug durch eine Meßeinheit erfaßt, dieser durch eine Kontrolleinheit ausgewertet und in Abhängigkeit der Auswertung ein geschwindigkeitsabhängiger Sollabstand eingestellt.

Jedoch werden diese Regelungen erfahrungsgemäß vom Fahrer ausgeschaltet, wenn der Abstandsregler aufgrund des Verkehrflusses dauernd in die Fahrzeugsteuerung eingreifen müßte und dies zu einem häufigen Abbremsen des Fahrzeuges führte, weil z. B. häufig andere Fahrzeuge vor dem Fahrzeug mit Abstandsregler einscheren. Bei den meisten Abstandsreglern beinhaltet ihr Bedienkonzept bereits die sofortige Abschaltung der Geschwindigkeitsregelung, sobald das Fahrpedal oder das Bremspedal betätigt wird. Schaltet der Fahrer den Abstandsregler aus, so kann es somit trotz eingebautem Abstandsregler zu einem zu dichten Auffahren kommen.

Daher werden variable Abstandsregler untersucht. Für diese noch in der Entwicklung befindlichen Abstandsregler wird zur Zeit mit zusätzlichen Bedienelementen für den Fahrer wie Drehknopf oder Schieber zur Eingabe des Grades der Unterschreitung des Sicherheitsabstandes experimentiert. Diese neuen Bedienelemente haben aber den Nachteil, daß es eben "zusätzliche" Bedienelements sind, deren Funktion der Fahrer erst einmal verstehen muß.

Aufgabe dieses Aspekts der Erfindung ist es daher, ein Verfahren und eine Vorrichtung anzugeben, mit dem bzw. der der Fahrer den Sicherheitsabstand unterschreiten kann, ohne den Abstsandsregler ausschalten zu müssen und ohne daß zusätzliche Bedienelemente erforderlich werden.

Diese Aufgabe wird durch die Ansprüche 122 und 126 gelöst. Bevorzugte Ausführungsformen des Verfahrens wie der Vorrichtung sind Gegenstand der jeweiligen Unteransprüche.

Das Verfahren ist gekennzeichnet durch das Ausgeben eines zweiten Sollabstandes $A_{soll}$ bei Betätigen eines Fahrpedals.

Damit wird erreicht, daß der Fahrer den Abstandsregler eingeschaltet lassen kann. Erfindungsgemäß wird also bei eingeschaltetem Abstandsregler der gesetzlich zulässige Abstand eingehalten, solange das Fahrpedal (Gaspedal) des Fahrzeuges sich in seiner Ausgangsstellung befindet. Sobald der Fahrer dagegen das Fahrpedal betätigt, wird der einzuregelnde Sollabstand in Abhängigkeit vom Wert der Pedalbetätigung verkürzt. Dies hat zur Folge, daß der Fahrer nach wie vor die volle Kontrolle über sien Fahrzeug behält und so auch die Verantwortung für ein Unterschreiten des Sicherheitsabstandes behält. Trotzdem kann er die Vorteile der automatischen Abstandsregelung nutzen.

In einer bevorzugten Ausführungsform werden bei Unterschreiten des Sicherheitsabstandes Warnsignale an den Fahrer ausgegeben, deren Höhe von der Größe der Unterschreitung abhängt. Die Ausgabe der Warnsignale erfolgt dabei akustisch und/oder optisch und/oder haptisch.

Durch die vorgeschlagenen Maßnahmen wird die Bedienbarkeit des erfindungsgemäßen Abstandsreglers besser als die der Abstandsregler nach dem Stand der Technik, da er in allen Fahrsituationen, insbesondere auch bei hohem Verkehrsaufkommen ständig eingeschaltet bleiben kann und nicht wie beim Stand der Technik deaktiviert werden muß, wenn der Fahrer dir Absicht hat, den Sicherheitsabstand zu unterschreiten. Das Verhalten der erfindungsgemäßen Abstandsregelung ist insofern transparent, als die Betätigung des Fahrpedals dazu führt, daß das eigene Fahrzeug trotz eingeschaltetem Abstandsregler wie gewohnt näher an das vorausfahrende Fahrzeug heranfährt und beim Lösen des Fahrpedals wieder zurückfällt. Die Abstandsregelung bleibt stets aktiv und verhindert eine Kollision auch bei verkürztem Sicherheitsabstand.

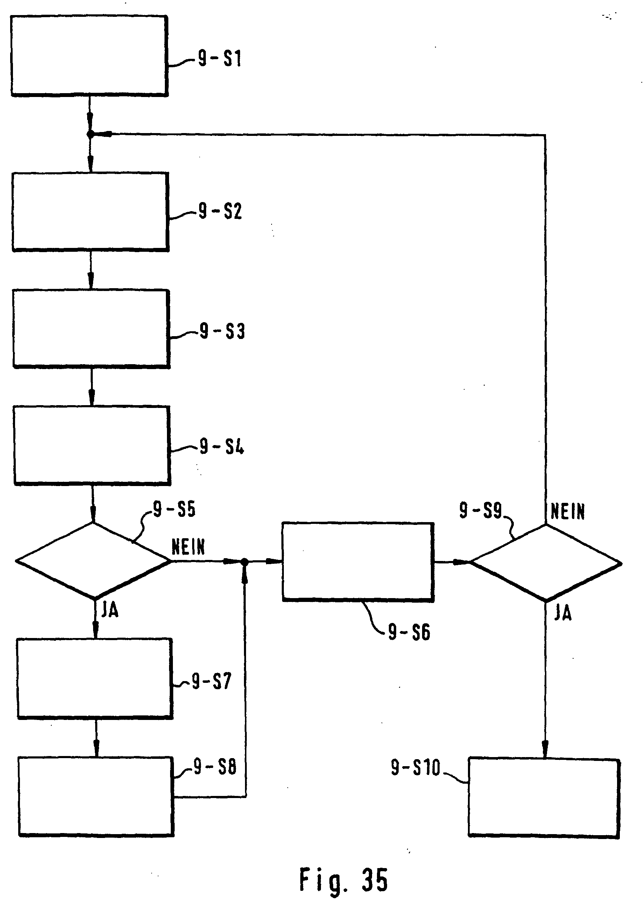

Im folgenden wird ein Ausführungsbeispiel des erfindungsgemäßen Verfahrens anhand der Zeichnungen beschrieben. Dabei ist in Fig. 35 der Flußlaufplan einer Ausführungsform des erfindungsgemäßen Verfahrens dargestellt.

Bei dem Verfahren zum Regeln eines Sollabstandes zu einem vorausfahrenden Fahrzeug nach Fig. 35 wird nach dem Start (Schritt 9-S1), also dem Aktivieren des Abstandsreglers oder der Steuerungsvorrichtung, in dem Schritt 9-S2 der Abstand s zu einem vorausfahrenden Fahrzeug erfaßt. Dies geschieht wie allgemein bekannt mit Hilfe eines Abstandssensors, der beispielsweise auf der Lausfzeitmessung von Ultraschall-, Laser- oder Radarpulsen oder der Triangulation von Laserdauerstrichsignalen beruht.

Anschließend wird in Schritt 9-S3 eine Absolutgeschwindigkeit $v_{abs}$ des Fahrzeugs erfaßt. Vorzugsweise wird dazu die Referenzgeschwindigkeit eines ABS-Systems übernommen, es kann aber auch jedes andere, die Geschwindigkeit des Fahrzeugs repräsentierende Signal wie z. B. das Tachosignal ausgewertet werden.

Aus den bis hierher bekannten Größen wird in Schritt 9-S4 ein erster Sollabstand $A_{soll}$ bestimmt, der von der Absolutgeschwindigkeit $v_{abs}$ abhängt.

Wird in Schritt 9-S5 festgestellt, daß der Fahrer durch Betätigung des Fahrpedals eine Beschleunigungsvorgabe gemacht hat, die zu einer Unterschreitung des ersten Sollabstandes führen würde, so wird diese Fahrervorgabe erfaßt. Dazu kann der Stellwinkel $\varphi$ des Fahrpedals erfaßt werden.

Mit der Fahrervorgabe wird in Schritt 9-S7 ein neuer, zweiter Sollabstand $A_{soll}'$ bestimmt und ausgegeben. Dabei kann dieser neue Sollabstand $A_{soll}'$ von dem Stellwinkel $\varphi$ abhängen, beispielsweise linear oder über eine vorher abgespeicherte Kennlinie. Der zweite Sollabstand wird in Schritt 9-S8 eingestellt.

Nach der Bestimmung des neuen Sollabstandes $A_{soll}'$ springt das Verfahren an die gleiche Stelle wie nach Schritt 9-S5, wo das Verfahren fortgesetzt wird, wenn der Fahrer keine Beschleunigungsvorgabe gemacht hat.

Schließlich überprüft das Verfahren in Schritt 9-S9, ob die Abstandsregelung abgeschaltet werden soll. Wenn dies der Fall ist, so springt die Ausführung des Verfahrens an die Adresse des Schrittes 9-S10, mit dem das Verfahren endet.

Wird nicht beabsichtigt, das Verfahren zu unterbrechen, so springt das Verfahren zurück zu Schritt 9-S2 und fährt mit der Erfassung des momentanen Abstandes s zu einem vorausfahrenden Fahrzeug fort. Es schließen sich danach die übrigen Verfahrensschritte an, bis das Fahrzeug sein Ziel erreicht oder die Abstandsregelung deaktiviert wird.

Ein weiterer Aspekt der Erfindung betrifft ein Verfahren zur Kurvengeschwindigkeitsanpassung bei einem Fahrzeug bei der Fahrt durch eine Kurve sowie eine Vorrichtung zur Durchführung dieses Verfahrens.

Es ist allgemein bekannt, die Geschwindigkeiten den augenblicklichen Gegebenheiten automatisch anzupassen und damit dem Fahrer bei der Steuerung des Fahrzeugs zu assistieren: routinemäßige Bedienungserfordernisse werden ihm abgenommen. Auf gerader Strecke übernehmen solche Aufgaben z. B. ein Abstandsregler oder ein Tempomat. Diese leiten Beschleunigungs- bzw. Bremsmanöver in Abhängigkeit von der augenblicklichen Verkehrslage automatisch ein und verhindern so zu dichtes Auffahren oder halten eine eingestellte Tempomatgeschwindigkeit unabhängig von Steigungen.

Zu den Aufgaben einer umfassenden Geschwindigkeitsregelung gehört auch die Absenkung der Geschwindigkeit in der Kurve, wenn diese zu hoch ist und die Gefahr besteht, daß das Fahrzeug aus der Kurve getragen wird oder aber zumindest der Fahrkomfort für die Insassen sinkt.

In der Praxis zeigt sich, daß eine solche einfache Kurvengeschwindigkeitsbegrenzung zwar die Sicherheit erhöht, nicht aber dem Wunsch der Insassen nach komfortabler Fahrweise Rechnung trägt. Häufig möchte man bereits vor der Situation, in der die automatische Regelung aus Sicherheitsgründen die Steuerung des Fahrzeugs beeinflußt, eine angepaßte Fahrweise eingestellt haben (erweiterte Geschwindigkeitsregelung).

Aufgabe dieses Aspekts der Erfindung ist es, ein Verfahren und eine Vorrichtung zur Anpassung der Kurvengeschwindigkeit anzugeben.

Diese Aufgabe wird durch die Ansprüche 127 und 134 gelöst. Bevorzugte Ausführungsformen des Verfahrens wie der Vorrichtung sind Gegenstand der jeweiligen Unteransprüche.

Bei dem Verfahren zur automatischen Anpassung der Kurvengeschwindigkeit eines Fahrzeugs wird zunächst eine Absolutgeschwindigkeit des Fahrzeugs ermittelt. Das Verfahren greift dabei auf bereits bekannte Größen zurück und kann unabhängig von aber auch insbesondere zusammen mit einer Abstandsregelung und/oder einer Geschwindigkeitsregelung in einem Fahrzeug installiert und aktiviert werden kann. Dies ist umso vorteilhafter, da alle genannten Systeme teilweise auf dieselben Aktoren und Sensoren zugreifen, wobei die Fahrsituationen, in denen eingegriffen wird, und die beabsichtigten Wirkungen bei den Systemen jedoch unterschiedlich sind.

Im folgenden wird unter Längsdynamikregelung sowohl die Geschwindigkeits- als auch eine Abstandsregelung oder jede andere, die Reisegeschwindigkeit des Fahrzeugs beeinflussende Regelung verstanden.

Das erfindungsgemäße Verfahren zur automatischen Anpassung der Kurvengeschwindigkeit eines Fahrzeugs ist gekennzeichnet durch das Erfassen einer Querbeschleunigung des Fahrzeugs. Diese Querbeschleunigung kann entweder direkt mit einem Beschleunigungssensor gemessen werden oder aus Gierrate und Fahrzeuggeschwindigkeit ermittelt werden, sofern keine Querdrift wenigstens einer Achse des Fahrzeugs vorhanden ist. Die ermittelte Querbeschleunigung wird mit einer vorbestimmten Referenzquerbeschleunigung verglichen, und es wird ein entsprechendes Geschwindigkeitskorrektursignal ausgegeben. Aufgrund dieses Geschwindigkeitskorrektursignals wird ein Beschleunigungszwischenwert bestimmt, so daß eine Grenzquerbeschleunigung in der Kurve nicht überschritten wird. Dies erfolgt, ohne daß der Fahrer aktiv eingreifen muß. Verläßt das Fahrzeug die Kurve und fährt wieder geradeaus, so sinkt die Querbeschleunigung auf Null. Ein Regelungseingriff im Sinne einer Kurvengeschwindigkeitsanpassung ist dann nicht mehr erforderlich.

Die Referenzquerbeschleunigung, mit der die tatsächliche Querbeschleunigung verglichen wird und die der Grenzbeschleunigung entsprechen kann, liegt dabei für ein komfortables Fahren zwischen 2 und 3 m/s$^2$.

Die Vorteile des erfindungsgemäßen Verfahrens liegen darin, daß in den Kurven die Absolutgeschwindigkeit des Fahrzeugs dem Kurvenradius angepaßt wird und damit die Querbeschleunigung in einem komfortablen Wertebereich gehalten wird. Bei Fahrzeugen mit eingebautem Tempomat ergibt sich der Vorteil, daß die Sollgeschwindigkeit kann dabei stets auf dem für eine gerade Strecke eingestellten Wert gehalten werden kann. Der Fahrer muß also nicht vor und nach jeder Kurve die Geschwindigkeitsreglerfunktion ausschalten bzw. den Geschwindigkeitsregler umprogrammieren.

Die erfindungsgemäße Vorrichtung ist eine Steuerungsvorrichtung zur automatischen Anpassung der Geschwindigkeit.

Die erfindungsgemäße Steuerungsvorrichtung ist gekennzeichnet durch Mittel zum Erfassen einer Querbeschleunigung des Fahrzeugs und eine Vergleichsvorrichtung zum Vergleichen der Querbeschleunigung mit einer Referenzquerbeschleunigung und zum Ausgeben eines Geschwindigkeitskorrektursignals als Beschleunigungszwischenwert.

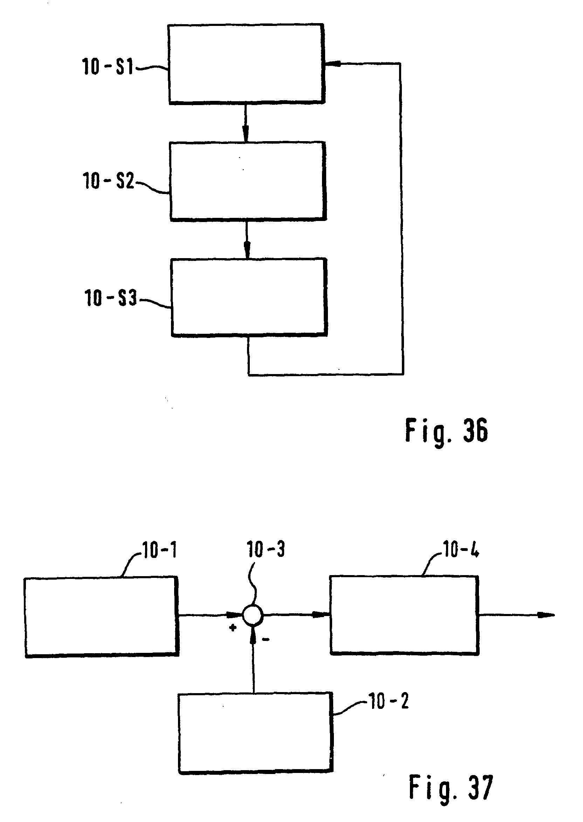

Im folgenden wird ein Ausführungsbeispiel des erfindungsgemäßen Verfahrens und der erfindungsgemäßen Vorrichtung anhand der Zeichnungen beschrieben. Dabei ist in
Fig. 36 der Ablauf einer Ausführungsform des erfindungsgemäßen Verfahrens dargestellt und in

Fig. 37 eine Ausführungsform einer erfindungsgemäßen Steuerung dargestellt.

Fig. 36 zeigt den Ablauf des erfindungsgemäßen Verfahrens als Flußdiagramm mit den Schritten 10-S1 bis 10-S3. Nach dem Start des Systems wird erfindungsgemäß zunächst eine Absolutgeschwindigkeit des Fahrzeugs ermittelt. Dies erfolgt gewöhnlich über das Fahrzeugtachometer, kann aber auch über die Drehzahl der einzelnen Räder ermittelt werden, insbesondere wenn das Fahrzeug über eine ABS-Regelung verfügt.

Zur Einhaltung einer komfortablen Kurvengeschwindigkeit wird in Schritt 10-S1 die Querbeschleunigung $a_{Quer}$ ermittelt. Zur Ermittlung der Querbeschleunigung $a_{Quer}$ gibt es mehrere, dem Fachmann bekannte Möglichkeiten. Die unmittelbare Erfassung der Querbeschleunigung erfolgt über einen geeignet eingebauten Beschleunigungssensor. Dieser mißt direkt eine senkrecht zur Fahrzeuglängsrichtung in der Fahrzeughorizontalen liegende auf das Fahrzeug wirkende Beschleunigungskomponente. Eine andere Art zur Ermittlung der Querbeschleunigung besteht darin, die Gierrate (Winkelgeschwindigkeit um die Hochachse des Fahrzeugs) zu messen und mit der Fahrzeuggeschwindigkeit (der Tangentialgeschwindigkeit in der Kurve) zu multiplizieren. Diese zweite Art der Bestimmung der Querbeschleunigung hat den Vorteil, daß ein eigener Beschleunigugssensor eingespart werden kann, da in vielen Fahrzeugen ein Gierratensensor bereits vorhanden ist. Als Gierratensensoren finden dabei z.B. (Schwingungs-) Gyroskope Verwendung. Will man auch diesen Sensor einsparen, kann man auf die ABS-Regelung zurückgreifen und die Gierrate aus den Drehzahlen der Räder bestimmen. Schließlich ist die Ermittlung der Gierrate auch aus einem Ausgangssignal von einem Lenkradstellungssensor und der Fahrzeugabsolutgeschwindigkeit möglich.

Die erfaßte oder ermittelte Querbeschleunigung wird mit dem Grenzbeschleunigungswert verglichen (Schritt 10-S2). Aus dem Vergleich dieser beiden Größen resultiert ein Differenzsignal, das in ein Geschwindigkeitskorrektursignal als Beschleunigungszwischenwert umgewandelt und ausgegeben wird (Schritt 10-S3).

Damit eine laufende Anpassung der Geschwindigkeit bei der Fahrt durch die Kurve auch dann möglich ist, wenn sich der Krümmungsradius der Kurve ändert, springt das Verfahren nach Schritt 10-S3 zu Schritt 10-S1 zurück und fährt mit der Bearbeitung der nachfolgenden Schritte10-S1 bis 10-S3 wie oben beschrieben fort.

Die Steuerungsvorrichtung für die Umsetzung dieses Verfahrens ist in Fig. 37 dargestellt. Sie umfaßt Mittel 10-1 zum Bestimmen einer Absolutgeschwindigkeit. Zur Korrektur der Absolutgeschwindigkeit bei Kurvenfahrten ist die erfindungsgemäße Steuerungsvorrichtung mit Mitteln 10-2 zum Erfassen der Querbeschleunigung versehen. Dabei kann es sich wie bereits oben beschrieben um verschiedene Arten von Sensoren handeln, nämlich einen direkten Beschleunigungssensor oder um einen kombinierten Geschwindigkeits- und Gierratensensor. Diese Mittel zum Erfassen der Querbeschleunigung geben einen Beschleunigungswert aus, der in einer Vergleichsvorrichtung 10-3 mit einem Referenzwert verglichen wird. Der Referenzwert entspricht einer Beschleunigung, bei der die Kurvenfahrt von den Insassen noch als komfortabel empfunden wird.

Aus dem Vergleichssignal wird durch die Ausgabevorrichtung 10-4 ein Geschwindigkeitskorrektursignal abgeleitet. Diese Geschwindigkeitskorrektursignal geht als Beschleunigungszwischenwert in das Verfahren zum Steuern bzw. Regeln des Fahrzeugs ein.

Mit dem erfindungsgemäßen Verfahren und der dazugehörigen Vorrichtung ist es möglich, immer wiederkehrende Bedienvorgänge z. B. bei Einfahrten und Ausfahrten auf und von Autobahnen zu automatisieren.

**Patentansprüche**

1. Verfahren zum Steuern bzw. Regeln eines Kraftfahrzeugs, mit den Schritten:

   - Erfassen einer Absolutgeschwindigkeit $v_{abs}$ des Kraftfahrzeugs sowie weiterer Fahrzeugzustandsgrößen, **gekennzeichnet durch** die Schritte:
   - gleichzeitiges Ermitteln mehrerer Beschleunigungszwischenwerte für das Fahrzeug aus den ermittelten Fahrzeugzustandsgrößen,
   - Ermitteln einer Sollängsbeschleunigung $a_{Lsoll}$ nach Maßgabe der ermittelten Beschleunigungszwischenwerte, und
   - Regeln der Fahrzeugaktoren nach Maßgabe der ermittelten Sollängsbeschleunigung.

2. Verfahren nach Anspruch 1, **dadurch gekennzeichnet, daß** die Sollängsbeschleunigung $a_{Lsoll}$ derart ermittelt wird, daß aus den Beschleunigungszwischenwerten der kleinste Wert ausgewählt wird.

3. Verfahren nach Anspruch 1, **dadurch gekennzeichnet, daß** die Sollängsbeschleunigung $a_{Lsoll}$ derart ermittelt wird, daß aus den Beschleunigungszwischenwerten ein gewichtetes Mittel gebildet wird.

4. Verfahren nach Anspruch 3, **dadurch gekennzeichnet, daß** die Gewichtung der Beschleunigungwerte nach Maßgabe der erfaßten Fahrzeugzustandsgrößen abgeändert wird.

5. Verfahren nach Anspruch 3 oder 4, **dadurch gekennzeichnet, daß** die zeitlichen Änderungen der Gewichtungen durch vorgegebene Zeitfunktionen geglättet werden.

6. Verfahren nach einem der Ansprüche 1 bis 5, **dadurch gekennzeichnet, daß** mindestens ein Beschleunigungszwischenwert nach Maßgabe der Pedalstellungen erzeugt wird.

7. Verfahren nach einem der Ansprüche 1 bis 6, **dadurch gekennzeichnet, daß** ein Beschleunigungszwischenwert nach Maßgabe einer Tempomateinstellung erzeugt wird.

8. Verfahren nach einem der vorangehenden Ansprüche, **dadurch gekennzeichnet, daß** ein Beschleunigungszwischenwert durch eine Fahrzeugfolgeregelung erzeugt wird.

9. Verfahren nach einem der vorangehenden Ansprüche, **dadurch gekennzeichnet, daß** die Funktion von Sensoren und/oder Bescheunigungsreglern durch einen Überwachungsrechner überwacht wird und Warnsignale ausgegeben werden, wenn eine Fehlfunktion festgestellt wird.

10. Vorrichtung zum Steuern bzw. Regeln eines Kraftfahrzeugs, mit

   - Einrichtungen (1-16, 1-17a - c) zum Erfassen der Absolutgeschwindigkeit des Kraftfahrzeugs sowie weiterer Fahrzeugszustandsgrößen,

   **gekennzeichnet durch**

   - Einrichtungen (1-11a - d) zum gleichzeitigen Ermitteln mehrerer Beschleunigungszwischenwerte ($a_{Folge}$, $a_{Temp}$, $a_{Pedal}$),
   - eine Koordinatoreinrichtung (1-12) zum Ermitteln einer Gesamtsollängsbeschleunigung $a_{Lsoll}$ aus den Beschleunigungzwischenwerten ($a_{Folge}$, $a_{Temp}$, $a_{Pedal}$) und
   - einen Beschleunigungsregler (1-13), der die Fahrzeugaktoren (1-14a - c) nach Maßgabe der Gesamtsolllängsbeschleunigung ($a_{Lsoll}$) ansteuert.

11. Vorrichtung nach Anspruch 10, **dadurch gekennzeichnet, daß** die Koordinatoreinrichtung (1-12) den kleinsten der ihr eingegebenen Beschleunigungwerte ($a_{Folge}$, $a_{Temp}$, $a_{Pedal}$) als Solllängsbeschleunigung ($a_{Lsoll}$) auswählt.

12. Vorrichtung nach Anspruch 10, **dadurch gekennzeichnet, daß** die Koordinatoreinrichtung (1-12) aus den ihr eingegebenen Beschleunigungzwischenwerten ($a_{Folge}$, $a_{Temp}$, $a_{Pedal}$) ein gewichtetes Mittel bildet und dieses als Solllängsbeschleunigung ($a_{Lsoll}$) ausgibt.

13. Vorrichtung nach Anspruch 12, **dadurch gekennzeichnet, daß** die Koordinatoreinrichtung (1-12) dazu ausgelegt ist, die Gewichtung der Beschleunigungzwischenwerte ($a_{Folge}$, $a_{Temp}$, $a_{Pedal}$) nach Maßgabe der erfaßten Zustandsgrößen zu ändern.

14. Vorrichtung nach einem der Ansprüche 10 bis 13, **dadurch gekennzeichnet, daß** sie eine Einrichtung (1-11c) aufweist, die nach Maßgabe der durch den Fahrer eingestellten Pedalstellungen einen ersten Beschleunigungszwischenwert ($a_{Pedal}$) erzeugt.

15. Vorrichtung nach einem der Ansprüche 10 bis 14, **dadurch gekennzeichnet, daß** sie einen Tempomaten (1-11b) umfaßt, der nach Maßgabe von über Schalter (1-17b) eingegebenen Befehlen einen weiteren Beschleunigungszwischenwert ($a_{Temp}$) erzeugt.

16. Vorrichtung nach Anspruch 14 oder 15, **dadurch gekennzeichnet, daß** sie einen Fahrzeugfolgeregler (1-11a) aufweist, der nach Maßgabe des Signals eines Abstandssensors (1-17a) einen weiteren Beschleunigungszwischenwert ($a_{Folge}$) erzeugt.

17. Vorrichtung nach einem der vorangehenden Ansprüche, **dadurch gekennzeichnet, daß** sie einen Speicher für Zeitfunktionen zum Glätten der zeitlichen Änderungen der Gewichtungen aufweist.

18. Vorrichtung nach einem der vorangehenden Ansprüche, **dadurch gekennzeichnet, daß** sie einen Überwachungsrechner aufweist, der ein Fehlverhalten einzelner Sensoren und/oder Beschleunigungsregler erkennt und entsprechende Warnsignale ausgibt.

19. Verfahren insbesondere nach Anspruch 1, mit den Schritten:

- Erfassen des Abstands und der Relativeschwindigkeit von bzw. gegenüber einem vorausfahrenden Fahrzeug, und
- Erzeugen von Sollwertvorgaben für die Regelung des eigenen Fahrzeugs nach Maßgabe des erfaßten Abstands und der Relativgeschwindigkeit,

**dadurch gekennzeichnet, daß** dann, wenn das Abbremsen eines vorausfahrenden Fahrzeugs erkannt wird, ein Beschleunigungszwischenwert für das eigene Fahrzeug ausgegeben wird, daß die Geschwindigkeit des vorausfahrenden Fahrzeugs nicht oder frühestens nach Ablauf einer vorbestimmten Zeitspanne nach Beginn der Verzögerung des vorausfahrenden Fahrzeugs oder nach Einnehmen einer konstanten langsameren Geschwindigkeit des vorausfahrenden Fahrzeugs unterschritten wird.

20. Verfahren insbesondere nach Anspruch 1, mit den Schritten:

- Erfassen des Abstands zu einem vorausfahrenden Fahrzeug, und
- Erzeugen von Sollwertvorgaben für die Regelung des eigenen Fahrzeugs nach Maßgabe des erfaßten Abstandsund der Relativgeschwindigkeit,

**dadurch gekennzeichnet, daß** dann, wenn das Abbremsen eines vorausfahrenden Fahrzeugs erkannt wird, ein Beschleunigungezwischenwert ausgegeben wird, so daß die vorgegebenen Abstände über einen vorgegebenen Zeitraum geringer einstellbar sind als die für stationäre Zustände vorgegebenen Abstände, wobei der vorgegebene Zeitraum vom Abstand abhängt.

21. Verfahren nach Anspruch 44, **dadurch gekennzeichnet, daß** auch für den Zustand stationärer Geschwindigkeit des vorausfahrenden Fahrzeugs nach Beendigung dessen Abbremsvorgangs für das eigene Fahrzeug für eine bestimmte Zeit ein geringerer Abstand zum vorausfahrenden Fahrzeug vorgegeben wird.

22. Verfahren nach Anspruch 43, **dadurch gekennzeichnet, daß** nach Beginn des Abbremsens des vorausfahrenden Fahrzeugs der Abstand zu diesem überwacht wird und im Falle, daß ein bestimmter oder bestimmbarer Mindestabstand unterschritten wird, das eigene Fahrzeug verstärkt abgebremst wird.

23. Vorrichtung insbesondere nach Anspruch 10 zur Fahrzeugfolgeregelung mit

- einem Abstandssensor (3-21) zur Bestimmung des Abstands und der Relativgeschwindigkeit von bzw. gegenüber einem vorausfahrenden Fahrzeug,
- einem Geschwindigkeitssensor (3-22) zur Bestimmung der Geschwindigkeit des eigenen Fahrzeugs, und
- einer Regelung (3-23) zur Erzeugung und Einstellung von Sollwerten für die Fahrzeugregelung nach Maßgabe der von den Sensoren (3-21, 3-22) gelieferten Werte,

**dadurch gekennzeichnet, daß** die Regelung (3-23) umfaßt:

- eine Einrichtung zum Erkennen des Abbremsens eines vorausfahrenden Fahrzeugs, und
- eine Einrichtung zum Vorgeben der Beschleunigungszwischenwerte des eigenen Fahrzeugs derart, daß die Geschwindigkeit des vorausfahrenden Fahrzeugs nicht oder frühestens nach Ablauf einer vorbestimmten Zeit nach Beginn der Verzögerung des vorausfahrenden Fahrzeugs oder nach Einnehmen einer konstanten langsameren Geschwindigkeit des vorausfahrenden Fahrzeugs unterschritten wird.

24. Vorrichtung zur Fahrzeugfolgeregelung insbesondere nach Anspruch 10, mit

- einem Abstandssensor (3-21) zur Bestimmung des Abstands und der Relativgeschwindigkeit von bzw. gegenüber einem vorausfahrenden Fahrzeug,
- einem Geschwindigkeitssensor (3-22) zur Bestimmung der Geschwindigkeit des eigenen Fahrzeugs, und
- einer Regelung (3-23) zur Erzeugung und Einstellung von Sollwerten für die Fahrzeugregelung nach Maßgabe der von den Sensoren (3-21, 3-22) gelieferten Werte,

**dadurch gekennzeichnet, daß** die Regelung (3-23) umfaßt:

- eine Einrichtung zum Erkennen des Abbremsens eines vorausfahrenden Fahrzeugs, und
- eine Einrichtung zum Erzeugen von Abstandsvorgaben zwischen vorausfahrendem Fahrzeug und eigenem Fahrzeug derart, daß die vorgegebenen Abstände über einen vorgegebenen Zeitraum geringer einstellbar sind als die für stationäre Zustände vorgegebenen Abstände, wobei der vorgegebene Zeitraum vom Abstand abhängt.

25. Vorrichtung nach Anspruch 48, **dadurch gekennzeichnet, daß** die Einrichtung zur Erzeugung von Abstandsvorgaben auch für den Zustand stationärer Geschwindigkeit des vorausfahrenden Fahrzeugs nach Beendigung dessen Abbremsvorgangs für eine bestimmte Zeit einen geringeren Abstand vorgibt.

26. Vorrichtung nach Anspruch 47, **dadurch gekennzeichnet, daß** die Regelung (3-23) eine Einrichtung zum Überwachen des Abstands zum vorausfahrenden Fahrzeug aufweist, die im Falle, daß ein bestimmter oder bestimmbarer Mindestabstand unterschritten wird, Steuersignale zum verstärkten Abbremsen des eigenen Fahrzeugs ausgibt.

27. Verfahren insbesondere nach Anspruch 1 zum Erzeugen eines eine Fahrzeuggeschwindigkeit angebenden Geschwindigkeitssignals, mit dem Schritt des Erzeugens eines Roh-Geschwindigkeitssignals $V_E$, **gekennzeichnet durch** eine Tiefpaßfilterung des Roh-Geschwindigkeitssignals $v_E$.

28. Verfahren zum Erzeugen eines eine Fahrzeuggeschwindigkeit angebenden Geschwindigkeitssignals, insbesondere nach Anspruch 51, mit dem Schritt des Erzeugens eines Roh-Geschwindigkeitssignals $v_E$, **gekennzeichnet durch** eine Bandsperrenfilterung des tiefpaßgefilterten Roh-Geschwindigkeitssignals $v_E$ bzw. ein Tiefpaßfiltern des bandsperrengefilterten Roh-Geschwindigkeitssignals $v_E$.

29. Verfahren nach Anspruch 51, **gekennzeichnet durch** Filterung mit einem Tiefpaß erster Ordnung.

30. Verfahren nach Anspruch 53, **dadurch gekennzeichnet, daß** im Tiefpaß eine Gradientenbeschränkung vorgesehen ist.

31. Verfahren nach einem der Ansprüche 51 bis 54, **dadurch gekennzeichnet, daß** die Filterkennlinie der Tiefpaßfilterung nach Maßgabe der Fahrzeugbeschleunigung oder einem entsprechenden Signal modifiziert wird.

32. Verfahren nach Anspruch 52, bei dem die bandbegrenzte Störfrequenz nachgebildet und vom nichtbandgefilterten Signal subtrahiert wird.

33. Verfahren nach Anspruch 56, **dadurch gekennzeichnet, daß** das nach der Subtraktion gewonnene Signal in die Nachbildung des Störfrequenzbands zurückgeführt wird.

34. Verfahren nach Anspruch 52 oder 56 oder 57, **dadurch gekennzeichnet, daß** die Bandsperre einen Frequenzbereich von ca. 1 bis 4 Hz abdeckt.

35. Verfahren nach Anspruch 51 oder 53 bis 55, **dadurch gekennzeichnet, daß** der Tiefpaß Frequenzen von 8 Hz und höher herausfiltert.

36. Vorrichtung insbesondere nach Anspruch 10 zum Erzeugen eines eine Fahrzeuggeschwindigkeit angebenden Geschwindigkeitssignals, mit einer Einrichtung zum Erzeugen eines Roh-Geschwindigkeitssignals $v_E$, **gekennzeichnet durch** einen Tiefpaßfilter (4-20, 4-30 - 4-34) zur Filterung des Roh-Geschwindigkeitssignals $v_E$.

37. Vorrichtung zum Erzeugen eines eine Fahrzeuggeschwindigkeit angebenden Geschwindigkeitssignals, insbesondere nach Anspruch 60, mit einer Einrichtung zum Erzeugen eines Roh-Geschwindigkeitssignals $v_E$, **gekennzeichnet durch** einen Bandsperrenfilter (4-21, 4-40 - 4-46) zur Filterung des Roh-Geschwindigkeitssignals $v_E$ oder des tiefpaßgefilterten Roh-Geschwindigkeitssignals $v_E$.

38. Vorrichtung nach Anspruch 60, **gekennzeichnet durch** einen Tiefpaßfilter erster Ordnung.

39. Vorrichtung nach Anspruch 62, **dadurch gekennzeichnet, daß** im Tiefpaß eine Gradientenbeschränkung (4-32) vorgesehen ist.

**40.** Vorrichtung nach einem der Ansprüche 60 bis 63, **gekennzeichnet durch** eine Einrichtung (4-33), mit der die Filterkennlinie der Tiefpaßfilterung nach Maßgabe der Fahrzeugbeschleunigung oder einem entsprechenden Signal modifiziert wird.

**41.** Vorrichtung nach Anspruch 61, **gekennzeichnet durch** eine Einrichtung (4-43 - 4-46) zum Nachbilden des **durch** den Bandsperrenfilter (4-21, 4-40 - 4-46) herauszufilternden Störfrequenzbands, und eine Einrichtung (4-40) zum Subtrahieren des nachgebildeten Signals vom Eingangssignal.

**42.** Vorrichtung nach Anspruch 65, **gekennzeichnet durch** Einrichtungen (4-41, 4-42) zum Rückführen des Ausgangssignals in die Einrichtung (4-43 - 4-46) zur Nachbildung des Störfrequenzbands.

**43.** Vorrichtung nach Anspruch 61 oder 65 oder 66, **dadurch gekennzeichnet, daß** der Bandsperrenfilter (4-21, 4-40 - 4-46) einen Frequenzbereich von ca. 1 bis 4 Hz abdeckt.

**44.** Vorrichtung nach Anspruch 60 oder 62 bis 64, **dadurch gekennzeichnet, daß** der Tiefpaßfilter (4-20, 4-30 - 4-34) Frequenzen von 8 Hz und höher herausfiltert.

**45.** Verfahren für die Fahrzeugregelung insbesondere nach Anspruch 1, **gekennzeichnet durch** einen Schritt des Tiefpaßfilterns des Sollgeschwindigkeitssignals $V_{Soll}$.

**46.** Verfahren für die Fahrzeugregelung, insbesondere nach Anspruch 69, mit einem Schritt des Bestimmens eines Sollgeschwindigkeitssignals $V_{Soll}$, **gekennzeichnet durch** einen Schritt der Gradientenbegrenzung des Sollgeschwindigkeitssignals $V_{Soll}$.

**47.** Verfahren für die Fahrzeugregelung, insbesondere nach Anspruch 69 oder 70, mit einem Schritt des Bestimmens eines Sollgeschwindigkeitssignals $V_{soll}$, **gekennzeichnet durch** einen Schritt des Bildens der Differenz $\Delta v$ zwischen Sollgeschwindigkeitssignals $v_{soll}$ und tatsächlicher Geschwindigkeit $v_{Ref}$, und einen Schritt des Ermittelns eines Beschleunigungszwischenwertes $a_{zwi}$ nach Maßgabe der Differenz $\Delta v$.

**48.** Verfahren für die Fahrzeugregelung, insbesondere nach einem der Ansprüche 69 bis 71, mit einem Schritt des Bestimmens eines Sollgeschwindigkeitssignals $v_{soll}$, **gekennzeichnet durch** einen Schritt des Ermittelns eines Beschleunigungszwischenwertes $a_{zwi}$ und einen Schritt des Addierens von $a_{soll}$ und eines nach Maßgabe des Sollgeschwindigkeitssignals $v_{soll}$ ermittelten Feed-Forward-Anteils.

**49.** Verfahren nach einem der Ansprüche 69 bis 72, **dadurch gekennzeichnet, daß** die Fahreraktivitäten wie Beschleunigungsdauer, Beschleunigungsgröße und Beschleunigungshäufigkeit beobachtet werden und lernend zur Modifizierung von Tiefpaßcharakreristika, Gradientenbegrenzung, Sollbeschleunigungskennlinie oder Feed-Forward-Kennlinie verwendet werden.

**50.** Verfahren nach Anspruch 69, **dadurch gekennzeichnet, daß** eine Tiefpaßfilterung erster Ordnung vorgenommen wird, die aus einer Verstärkung, einer Integration und einer gegenkoppelnden Rückführung besteht.

**51.** Verfahren nach Anspruch 74, **dadurch gekennzeichnet, daß** zum Zwecke der Gradientenbegrenzung die Verstärkung begrenzt ist.

**52.** Verfahren nach Anspruch 71, **dadurch gekennzeichnet, daß** der Beschleunigungszwischenwert nach Maßgabe der Differenz zwischen tiefpaßgefilterter Sollgeschwindigkeitsvorgabe und Istgeschwindigkeit des Fahrzeugs ermittelt wird.

**53.** Verfahren nach Anspruch 72, 74 und 76, **dadurch gekennzeichnet, daß** der Feed-Forward-Anteil nach Maßgabe des im Tiefpaß vorliegenden verstärkten Signals ermittelt und zum Beschleunigungszwischenwert addiert wird.

**54.** Verfahren nach Anspruch 71 oder 76, **dadurch gekennzeichnet, daß** der Beschleunigungszwischenwert auf vorgegebene Werte begrenzt wird, wobei die Begrenzungen situativ veränderbar sein können.

**55.** Vorrichtung für die Fahrzeugregelung insbesondere nach Anspruch 10, mit einer Einrichtung zur Ermittlung eines Sollgeschwindigkeitssignals $V_{Soll}$, **gekennzeichnet durch** einen Tiefpaßfilter (5-10, 5-11, 5-12) für das Sollgeschwindigkeitssignal $v_{Soll}$.

**56.** Vorrichtung für die Fahrzeugregelung, insbesondere nach Anspruch 79, mit einer Einrichtung zur Ermittlung eines Sollgeschwindigkeitssignals $V_{Soll}$, **gekennzeichnet durch** eine Einrichtung (5-11) zur Begrenzung des Gradienten des Sollgeschwindigkeitssignals $v_{Soll}$.

**57.** Vorrichtung für die Fahrzeugregelung, insbesondere nach Anspruch 79 oder 80, mit einer Einrichtung zur Ermittlung eines Sollgeschwindigkeitssignals $V_{Soll}$, **gekennzeichnet durch** eine Vorrichtung (5-13) zum Bilden der Differenz $\Delta v$ zwischen Sollgeschwindigkeitssignal vSoll und tatsächlicher Geschwindigkeit $v_{Ref}$, und einer Einrichtung (5-15) zum Ermitteln eines Beschleunigungszwischenwertes nach Maßgabe der Differenz $\Delta v$.

**58.** Vorrichtung für die Fahrzeugregelung, insbesondere nach einem der Ansprüche 79 bis 81, mit einer Einrichtung zur Ermittlung eines Sollgeschwindigkeitssignals $V_{soll}$, **gekennzeichnet durch** eine Einrichtung (5-15) zur Ermittlung eines Beschleunigungszwischenwertes, eine Einrichtung (5-18) zum Ermitteln eines Feed-Forward-Anteils in Abhängigkeit vom Sollgeschwindigkeitssignal $v_{Soll}$, und eine Einrichtung (5-16) zum Addieren von Beschleunigungszwischenwert und Feed-Forward-Anteil.

**59.** Vorrichtung nach einem der Ansprüche 79 bis 82, **gekennzeichnet durch** eine Einrichtung, die die Fahreraktivitäten wie Beschleunigungsdauer, Beschleunigungsgröße und Beschleunigungshäufigkeit beobachtet und lernend zur Modifizierung von Tiefpaßcharakteristika, Gradientenbegrenzung, Sollbeschleunigungskennlinie oder Feed-Forward-Kennlinie verwendet.

**60.** Vorrichtung nach Anspruch 79, **gekennzeichnet durch** einen Tiefpaß erster Ordnung (5-10 - 5-12), der aus einer Verstärkung (5-11), einer Integration (5-12) und einer gegenkoppelnden Rückführung (5-10) besteht.

**61.** Vorrichtung nach Anspruch 84, **dadurch gekennzeichnet, daß** zum Zwecke der Gradientenbegrenzung die Verstärkung (5-11) begrenzt ist.

**62.** Vorrichtung nach Anspruch 81, **dadurch gekennzeichnet, daß** der Beschleunigungszwischenwert nach Maßgabe der Differenz zwischen tiefpaßgefilterter Sollgeschwindigkeitsvorgabe und Istgeschwindigkeit des Fahrzeugs ermittelt wird.

**63.** Vorrichtung nach Anspruch 82, 84 und 86, **dadurch gekennzeichnet, daß** die Einrichtung (5-18) zur Erzeugung des Feed-Forward-Anteils das Signal am Ausgang der Verstärkung (5-11) abgreift, und daß der Feed-Forward-Anteil zum Ausgangssignal der Einrichtung (5-15) addiert wird.

**64.** Vorrichtung nach Anspruch 81, **gekennzeichnet durch** eine Einrichtung (5-17) zur Begrenzung des Beschleunigungszwischenwertes, wobei die Grenzwerte der Einrichtung (5-17) veränderbar sein können.

**65.** Verfahren insbesondere nach Anspruch 1 zum Erzeugen eines Bremssolldrucks $P_{soll}$ mit den Schritten:

- Erfassen eines Bremsmessdrucks $p_{mess}$,

**gekennzeichnet durch** Ausgeben eines Druckaufbausignals und eines Druckabbausignals an Mittel (6-7, 6-8) zum Einstellen des Bremssolldrucks $P_{soll}$.

**66.** Verfahren nach Anspruch 89, **gekennzeichnet durch** Bestimmen eines Sollvolumenstroms $Q_{soll}$ aus dem Bremssolldruck $P_{soll}$ und einem einem Meßdruck $p_{mess}$ entsprechenden Istdruck $p_{ist}$ an mindestens einem Bremszylinder.

**67.** Verfahren nach Anspruch 90, **gekennzeichnet durch** Bestimmen des Istdrucks $p_{ist}$ aus einer hydraulischen Impedanz $D_v$ und dem Meßdruck $p_{mess}$.

**68.** Verfahren nach Anspruch 90 oder 91, **gekennzeichnet durch** Bestimmen des Druckaufbausignals und des Druckabbausignals aus dem Sollvolumenstrom $Q_{soll}$ und einem dem Meßdruck $p_{mess}$ entsprechenden Istvolumenstrom $Q_{ist}$.

**69.** Verfahren nach Anspruch 92, **gekennzeichnet durch** Bestimmen des Druckaufbausignals und des Druckabbau-

signals aus dem Sollvolumenstrom $Q_{soll}$, einem dem Meßdruck $p_{mess}$ entsprechenden Istvolumenstrom $Q_{ist}$ und der zeitlichen Ableitung des Istvolumenstroms $Q_{ist}$.

70. Verfahren nach einem der Ansprüch 90 bis 93, **gekennzeichnet durch** Bestimmen des Istvolumenstroms $Q_{ist}$ aus der hydraulischen Impedanz $D_v$ und einer Differenz u zwischen dem Meßdruck $p_{mess}$ und dem Istdruck $p_{ist}$.

71. Verfahren nach einem der Ansprüche 89 bis 94, **dadurch gekennzeichnet, daß** das Druckaufbausignal und das Druckabbausignal zueinander komplementär sind.

72. Steuerungsvorrichtung insbesondere nach Anspruch 10 zum Erzeugen eines Bremssolldrucks $p_{soll}$, die eine Vorrichtung zum Erfassen eines Bremssolldrucks und Mittel (6-7, 6-8) zum Einstellen des Bremsdrucks umfaßt, **gekennzeichnet durch** eine Ausgabevorrichtung zum Ausgeben eines Druckaufbausignals und eines Druckabbausignals an die Mittel zum Einstellen des Bremsdrucks, wobei das Druckaufbausignal und das Druckabbausignal so gewählt sind, daß ein Bremssolldruck $P_{soll}$ erreicht wird.

73. Steuerungsvorrichtung nach Anspruch 96, **gekennzeichnet durch** eine Druckregelungsvorrichtung mit einem Druckregler (6-2) und einem Druckbeobachter (6-3) zum Bestimmen eines Sollvolumenstroms $Q_{soll}$ aus dem Bremssolldruck $P_{soll}$ und einem einem Meßdruck $p_{mess}$ entsprechenden Istdruck $p_{ist}$ an einem Bremszylinder.

74. Steuerungsvorrichtung nach Anspruch 97, **dadurch gekennzeichnet, daß** der Druckbeobachter (6-3) und/oder Volumenstrombeobachter (6-5) ein Multiplikatorglied (6-10), einen Integrator (6-11) und ein Kennlinienglied (6-12) umfaßt.

75. Steuerungsvorrichtung nach Anspruch 97, **dadurch gekennzeichnet, daß** der Druckbeobachter (6-3) und/oder Volumenstrombeobachter (6-5) ein erstes Proportionalglied (6-17), einen Integrator (6-11) und ein zweites Proportionalglied (6-18) umfaßt.

76. Steuerungsvorrichtung nach einem der Ansprüche 97 bis 99, **gekennzeichnet durch** einen Volumenstromregler (6-4) zum Umsetzen der Druckaufbau- und Druckabbausignale in Steuersignale (s) für die Mittel (6-7, 6-8) und einen Volumenstrombeobachter (6-5) zum Ermitteln eines dem Meßdruck $p_{mess}$ entsprechenden Istvolumenstroms $Q_{ist}$, der dem Sollvolumenstrom $Q_{soll}$ gegengekoppelt wird, zwischen der Druckregelungsvorrichtung und der Hydraulik (6-6).

77. Steuervorrichtung nach Anspruch 100, **dadurch gekennzeichnet, daß** der Volumenstrombeobachter (6-5) ein $DT_1$-Glied ist und der Volumenstromregler (6-4) ein drittes Subtrahierglied (6-19) zum Abzug des Ausgangssignals des Volumenstrombeobachters (6-5) von dem Ausgangssignal der Druckregelung, ein viertes Subtrahierglied (6-20) zum Abzug des Ausgangssignals des Volumenstrombeobachters (6-5) von dem Ausgangssignal der Druckregelung zum Erzeugen eines Zwischensignals (s) und ein zweites und ein drittes Kennlinienglied (6-23, 6-24) zum Erzeugen eines Steuersignals für die Mittel (6-7, 6-8) zum Einstellen des Bremsdrucks umfaßt.

78. Steuervorrichtung nach Anspruch 101, **dadurch gekennzeichnet, daß** der Volumenstromregler (6-4) ein erstes und ein zweites $DT_1$-Glied (6-21, 6-22) umfaßt, an deren Eingang jeweils das Ausgangssignal von dem Volumenstrombeobachter (6-5) anliegt und deren Ausgang jeweils von dem Ausgang des dritten bzw. vierten Subtrahierer (6-19, 6-20) abgezogen wird.

79. Steuerungsvorrichtung nach einem der Ansprüche 96 bis 102, **dadurch gekennzeichnet, daß** die Mittel (6-7, 6-8) zum Einstellen des Bremsdrucks ein stromlos geschlossenes Ventil (6-7) oder einen Druckerzeuger (6-25) umfassen.

80. Steuervorrichtung nach einem der Ansprüche 96 bis 103 **dadurch gekennzeichnet, daß** die Mittel (6-7, 6-8) zum Einstellen des Bremsdrucks ein stromlos offenes Ventil (6-8) und/oder einen Druckerzeuger (6-25) umfassen.

81. Verfahren insbesondere nach Anspruch 1 zum ruckarmen Überführen der Fahrzeuglängsbewegung aus einem ersten Fahrzustand in einen zweiten Fahrzustand mit den Schritten:

   - Erfassen eines erstenFahrzeugzustandes **gekennzeichnet durch** Ausgeben einer Sollängsbschleunigung $a_{Lsoll}$ zum Erreichen eines Sollzustandes mit einem Sollabstand, einer Sollrelativgeschwindigkeit und einer Sollrelativbeschleunigung aus einem Istzustand mit einem Abstand, einer Absolutgeschwindigkeit und einer Absolutbeschleunigung in einem vorgegebenen Zeitintervall $t_e$ als eine zeitabhängige Beschleunigungsfunktion, deren Integral über das Quadrat ihrer zeitlichen Ableitung unter der Randbedigung, daß Anfangs- und Endzustand definiert sind, minimal ist.

**82.** Verfahren nach Anspruch 105, **dadurch gekennzeichnet, daß** die Beschleunigungsfunktion unter mehreren Funktionen ausgewählt wird, die vorab in einem Speicher abgespeichert wurden.

**83.** Verfahren nach Anspruch 106, **dadurch gekennzeichnet, daß** die abgespeicherten Funktionen mindestens eine quadratisch von der Zeit abhängige Funktion umfassen.

**84.** Verfahren nach einem der Ansprüche 106 bis 107, **dadurch gekennzeichnet, daß** die abgespeicherten Funktionen mindestens eine kubisch von der Zeit abhängige Funktion umfassen.

**85.** Verfahren nach Anspruch 106, **dadurch gekennzeichnet, daß** die abgespeicherten Funktionen mindestens eine exponentiell von der Zeit abhängige Funktion umfassen.

**86.** Verfahren nach einem der Ansprüche 106 bis 109, **dadurch gekennzeichnet, daß** die abgespeicherten Beschleunigungsfunktionen parametrisch von der vorgegebenen Übergangszeit $t_e$ zum Erreichen des Sollzustandes und/oder vom Sollabstand $A_{soll}$ und/oder von der momentanen Absolutgeschwindigkeit und/oder der momentanen Beschleunigung und/oder der momentanen Relativgeschwindigkeit und/oder der momentanen Relativbeschleunigung abhängen.

**87.** Verfahren nach einem der Ansprüche 105 bis 110, **dadurch gekennzeichnet, daß** das vorgegebene Zeitintervall $t_e$ eine von Sollgeschwindigkeit und/oder Sollabstand und/oder Absolutgeschwindigkeit und/oder Abstand abhängige Funktion ist.

**88.** Steuerungsvorrichtung insbesondere nach Anspruch 10 zum Überführen einer Fahrzeuglängsbewegung von einem ersten Fahrzustand in einen zweiten Fahrzustand mit:

einer Recheneinheit,
Fahrzustandssensoren für das Erfassen von vorgegebenen Größen eines ersten Fahrzustandes als Eingangsgrößen für die Recheneinheit,
Stellgliedern zum Umsetzen von Ausgangsgrößen der Recheneinheit in Steuersignale zum Erreichen eines zweiten Fahrzustands, **gekennzeichnet durch**
einen ersten Speicher zum Abspeichern eines numerischen Wertes,
mehrere Funktionsspeicher zum Abspeichern von jeweils wenigstens einem Funktionsparameter,
einen Funktionsspeicher zum Abspeichern von mehreren Funktionsparametern,
einen Differenzierglied zum Differenzieren einer Funktion, einen Quadrierglied zum Quadrieren der differenzierten Funktion,
einen Integrator zum Integrieren der differenzierten und quadrierten Funktion und
einen Vergleicher zum Vergleichen eines Ausgangswertes des Integrators mit dem numerischen Wert in dem Speicher und zum Ausgeben einer Funktion.

**89.** Steuerungsvorrichtung nach Anspruch 112, **dadurch gekennzeichnet, daß** die mehreren Funktionsspeicher zum Abspeichern von jeweils wenigstens einem Funktionsparameter umfassen:

mehrere Funktionsspeicher zum Abspeichern von jeweils einem Funktionsparameter und
ein Multiplikatorglied zum Multiplizieren von mehreren Funktionen miteinander.

**90.** Verfahren insbesondere nach Anspruch 1, das umfaßt:

Erfassen eines Abstandes (s) zu einem vorausfahrenden Fahrzeug (8-2),
Erfassen einer Relativgeschwindigkeit ($v_{rel}$) gegenüber dem vorausfahrenden Fahrzeug (8-2),
Ermitteln eines Sollabstandes $A_{soll}$ zu dem vorausfahrenden Fahrzeug (8-2),

**gekennzeichnet durch** Ausgeben einer Sollfolgebeschleunigung ($a_{FSoll}$) zum Erreichen des Sollabstandes ($A_{soll}$) zu einem vorausfahrenden Fahrzeug, die von dem Abstand (s), der Relativgeschwindigkeit ($v_{rel}$) und der Absolutgeschwindigkeit ($v_{abs}$) abhängig ist.

**91.** Verfahren nach Anspruch 114, **gekennzeichnet durch** Ermitteln der Sollfolgebeschleunigung ($a_{Fsoll}$) aus einer ersten Komponente, die linear von dem Abstand (s) abhängt, einer zweiten Komponente, die quasi-linear von der Relativgeschwindigkeit ($v_{rel}$) abhängt, und einer dritten Komponente, die linear von der Absolutgeschwindigkeit ($v_{abs}$) abhängt, wobei mindestens zwei der drei Proportionalitätsfaktoren nicht-linear von der Relativgeschwindigkeit ($v_{rel}$) abhängen.

**92.** Verfahren nach Anspruch 115, **dadurch gekennzeichnet, daß** die zweite Komponente der Sollfolgebeschleunigung ($a_{Fsoll}$) bei kleinen Relativgeschwindigkeiten ($v_{rel}$) und/oder Absolutgeschwindigkeiten ($V_{abs}$) größer als die dritte Komponente der Sollfolgebeschleunigung ($a_{Fsoll}$) und bei großen Relativgeschwindigkeiten ($v_{rel}$) und/oder Absolutgeschwindigkeiten ($v_{abs}$) kleiner als die dritte Komponente der Sollfolgebschleunigung ($a_{Fsoll}$) ist.

**93.** Verfahren nach einem der Ansprüche 114 bis 115, **dadurch gekennzeichnet, daß** die Sollfolgebeschleunigung ($a_{Fsoll}$) einen vorgegebenen Grenzwert nicht überschreitet.

**94.** Steuerungsvorrichtung insbesondere nach Anspruch 10 mit:

Abstandssensor (8-5) zum Erfassen eines Abstandes (s) zu einem vorausfahrenden Fahrzeuges (8-2),

**gekennzeichnet durch** eine Recheneinheit (8-7 - 8-10) zur Ausgabe einer Sollfolgebeschleunigung ($a_{Fsoll}$), die von dem Abstand (s) , der Relativgeschwindigkeit ($v_{rel}$) und der Absolutgeschwindigkeit ($v_{abs}$) abhängig ist.

**95.** Steuerungsvorrichtung nach Anspruch 118, **dadurch gekennzeichnet, daß** die Recheneinheit ein Dämpfungskennlinienglied (8-8) zur Ausgabe einer ersten Komponente, die von dem Abstand (s) abhängt, und ein Federkennlinienglied (8-9) zur Ausgabe einer zweiten Komponente, die von der Relativgeschwindigkeit ($v_{rel}$) abhängt, wobei beide Komponenten außerdem von der Absolutgeschwindigkeit ($v_{abs}$) abhängen, sowie einen Addierer (8-10) zum Addieren der ersten und der zweiten Komponente und Ausgabe eines Beschleunigungswertes umfaßt.

**96.** Steuerungsvorrichtung nach Anspruch 118, **dadurch gekennzeichnet, daß** die Recheneinheit ein Kennfeldglied (8-12) zur Ausgabe eines Beschleunigungswertes, der von dem Abstand (s) und von der Relativgeschwindigkeit ($v_{rel}$) abhängt, umfaßt, wobei der Beschleunigungswert außerdem von der Absolutgeschwindigkeit ($v_{abs}$) abhängt.

**97.** Steuerungsvervorrichtung nach einem der Ansprüche 118 bis 120, **gekennzeichnet durch** ein Filter (8-11) zum Glätten und zum Begrenzen des Beschleunigungswertes.

**98.** Verfahren insbesondere nach Anspruch 1 mit den Schritten:

Erfassen (9-S2) eines momentanen Abstandes (s) zu dem vorausfahrenden Fahrzeug,
Erfassen (9-S3) einer Absolutgeschwindigkeit ($v_{abs}$), Bestimmen (9-S4) des Sollabstandes ($A_{soll}$) aus der Absolutgeschwindigkeit ($v_{abs}$),
Einstellen (9-S6) des Sollabstands ($A_{soll}$),

**gekennzeichnet durch** Ausgeben (9-S7, 9-S8) eines zweiten Sollabstandes ($A_{soll}'$) bei Betätigen des Fahrpedals,
Einstellen (9-S8) des zweiten Sollabstands ($A_{soll}'$).

**99.** Verfahren nach Anspruch 122, **dadurch gekennzeichnet, daß** der zweite Sollabstand ($A_{soll}$) gegenüber dem ersten Sollabstand entsprechend der Stellung des Fahrpedals ($\varphi$) verkürzt ist.

**100.** Verfahren nach Anspruch 123, **dadurch gekennzeichnet, daß** die Verkürzung des ersten zum zweiten Sollabstand ($A_{soll}$) nicht-linear von der Stellung ($\varphi$) des Fahrpedals abhängt.

**101.** Verfahren nach Anspruch 123, **dadurch gekennzeichnet, daß** je nach Größe des zweiten Sollabstands ein optisches und/oder akustisches und/oder haptisches Warnsignal ausgegeben wird.

**102.** Steuerungsvorrichtung insbesondere nach Anspruch 10 mit
einem Abstandssensor zum Erfassen eines Abstandes (s) zu dem vorausfahrenden Fahrzeug,
einer Rechnereinheit zum Bestimmen des Sollabstandes ($A_{soll}$) aus der Absolutgeschwindigkeit ($v_{abs}$), **gekennzeichnet durch**
eine Steuereinrichtung zum Einstellen eines Sollabstands ($A_{soll}$),

eine Vorrichtung zum Ausgeben eines zweiten Sollabstandes ($A_{soll}'$) bei Betätigen des Fahrpedals an die Steuereinrichtung.

103. Verfahren zum Steuern bzw. Regeln eines Fahrzeugs insbesondere nach Anspruch 1, **gekennzeichnet durch** Ermitteln (10-S1) einer Querbeschleunigung ($a_Q$) des Fahrzeugs,
Vergleichen (10-S2) der Querbeschleunigung ($a_Q$) mit einer Referenzquerbeschleunigung ($a_{QRef}$)und Ausgeben (10-S3) eines Geschwindigkeitskorrektursignals als Beschleunigungszwischenwert ($a_{zwi}$).

104. Verfahren nach Anspruch 127, **dadurch gekennzeichnet, daß** die Grenzquerbeschleunigung ($a_{QGrenz}$) zwischen 2 und 3 m/s$^2$ liegt.

105. Verfahren nach Anspruch 126 oder 127, **dadurch gekennzeichnet, daß** das Geschwindigkeitskorrektursignal ein Änderungssignal für eine Tempomatsollgeschwindigkeit ist.

106. Verfahren nach einem der Ansprüche 126 bis 128, **gekennzeichnet durch** Bestimmen der Querbeschleunigung ($a_Q$) aus einer Gierrate und der Absolutgeschwindigkeit ($v_{abs}$) des Fahrzeugs.

107. Verfahren nach Anspruch 130, **dadurch gekennzeichnet, daß** die Gierrate aus mehreren Raddrehzahlen bestimmt wird.

108. Verfahren nach Anspruch 130, **dadurch gekennzeichnet, daß** die Gierrate aus einem Ausgangssignal von einem Lenkradstellungssensor sowie der Absolutgeschwindigkeit bestimmt wird.

109. Verfahren nach Anspruch 130, **dadurch gekennzeichnet, daß** die Gierrate aus einem Ausgangssignal von einem Gierratensensor bestimmt wird.

110. Steuerungsvorrichtung insbesondere nach Anspruch 10 zur Durchführung des Verfahrens nach Anspruch 127, **gekennzeichnet durch**
Mittel (10-2) zum Erfassen einer Querbeschleunigung ($a_Q$) des Fahrzeugs,
eine Vergleichsvorrichtung (10-3) zum Vergleichen der Querbeschleunigung mit einer Referenzquerbeschleunigung und
eine Ausgabevorrichtung (10-4) zum Ausgeben eines Geschwindigkeitskorrektursignals als Beschleunigungszwischenwert ($a_{zwi}$).

111. Steuerungsvorrichtung nach Anspruch 134, **dadurch gekennzeichnet, daß** die Mittel (10-2) zum Erfassen der Querbeschleunigung einen Gierratensensor zum Erfassen der Gierrate des Fahrzeugs umfassen.

112. Steuerungsvorrichtung nach Anspruch 134, **dadurch gekennzeichnet, daß** die Mittel (10-2) zum Erfassen einer Querbeschleunigung den Rädern des zugeordnete Drehzahlsensoren umfassen.

113. Steuerungsvorrichtung nach Anspruch 134 **dadurch gekennzeichnet, daß** die Mittel (10-2) zum Erfassen der Querbeschleunigung einen Lenkradstellungssensor umfassen.

Fig. 1

$v_{ref}$

$M_{mot}$  $M_{brems}$  1-16

1-15

1-18

1-17a  1-11a

$a_{Folge}$

1-11b

$a_{Temp}$  $a_{Lsoll}$

1-14a

1-11c

$a_{Pedal}$

1-14b

1-17b  1-17c

zB  $a$

1-11d  1-12  1-13

1-14c

EP 1 285 808 A1

Fig. 9

Fig. 10

Fig. 11

Fig. 12

EP 1 285 808 A1

EP 1 285 808 A1

**Fig. 13**

**Fig. 14**

**Fig. 15**

Fig. 16

Fig. 17

Fig. 18

Fig. 19

EP 1 285 808 A1

Fig. 20

Fig. 21

Fig. 22

Fig. 23

Fig. 24

Fig. 25

Fig. 26a

Fig. 26b

Fig. 27

**Fig. 28**

**Fig. 29**

Fig. 30

EP 1 285 808 A1

Fig. 31

Fig. 32

Fig. 33

c) $a_{F\,soll}$

Beschleunigung

b) v

Geschwindigkeit

Geschwindigkeit des vorausfahrenden Fahrzeuges

a) s, $A_{soll}$

ist-Abstand

soll-Abstand

Fig. 34

EP 1 285 808 A1

9 - S1

9 - S2

9 - S3

9 - S4

9 - S5

NEIN

9 - S6

9 - S9

NEIN

JA

9 - S7

JA

9 - S8

9 - S10

Fig. 35

10 - S1

10 - S2

10 - S3

Fig. 36

10-1       10-3       10-4

+       −

10-2

Fig. 37

**Europäisches Patentamt**

# EUROPÄISCHER RECHERCHENBERICHT

Nummer der Anmeldung

EP 02 02 0597

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 441 961 A (MITSUBISHI) 21. August 1991 (1991-08-21) * Spalte 1, Zeile 55 - Spalte 2, Zeile 42 * | 1,6,7, 10,14,15 | B60K31/00 B60K41/00 B60K41/20 G01P3/42 |
| A | * Spalte 7, Zeile 21 - Zeile 35 * | 4,13 | B60K31/04 B60K31/02 |
| X | EP 0 429 646 A (MITSUBISHI) 5. Juni 1991 (1991-06-05) * Spalte 8, Zeile 5 - Spalte 10, Zeile 16 * | 1,6,7, 10,14,15 | B60T8/00 |
| X | EP 0 484 995 A (GEN MOTORS CORP) 13. Mai 1992 (1992-05-13) * Ansprüche 1,5 * | 19,20, 23,24 | |
| A | US 5 166 881 A (AKASU MASAHIRA) 24. November 1992 (1992-11-24) * Spalte 8, Zeile 22 - Spalte 10, Zeile 26 * | 19,20, 23,24 | |
| A | EP 0 661 188 A (MAGNETI MARELLI SPA) 5. Juli 1995 (1995-07-05) * Spalte 6, Zeile 54 - Spalte 7, Zeile 31 * | 19,20, 23,24 | RECHERCHIERTE SACHGEBIETE (Int.Cl.7) B60K G01P B60T |
| A | US 5 197 562 A (SAIKI MITSUYOSHI ET AL) 30. März 1993 (1993-03-30) * Spalte 8, Zeile 32 - Spalte 9, Zeile 10 * | 19,20, 23,24 | |
| A | US 4 706 195 A (YOSHINO YASUHISA ET AL) 10. November 1987 (1987-11-10) * Spalte 6, Zeile 60 - Spalte 7, Zeile 25 * | 19,20, 23,24 | |

-/--

Der vorliegende Recherchenbericht wurde für alle Patentansprüche erstellt

| Recherchenort | Abschlußdatum der Recherche | Prüfer |
|---|---|---|
| BERLIN | 4. Dezember 2002 | Standring, M |

EPO FORM 1503 03.82 (P04C03)

**Europäisches Patentamt** **EUROPÄISCHER RECHERCHENBERICHT** **Nummer der Anmeldung** EP 02 02 0597

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 468 740 A (BECK LOTHAR ET AL) 28. August 1984 (1984-08-28) * Spalte 2, Zeile 61 - Spalte 3, Zeile 58 * | 27,28, 36,37 | |
| X | US 4 713 665 A (PHELAN JAMES J) 15. Dezember 1987 (1987-12-15) * Spalte 2, Zeile 41 - Spalte 3, Zeile 48 * | 27,28, 36,37 | |
| X | US 4 844 557 A (GIERS BERNHARD) 4. Juli 1989 (1989-07-04) * Spalte 4, Zeile 20 - Spalte 5, Zeile 20 * | 27,28, 36,37 | |
| X | GB 2 002 617 A (ERICSSON TELEFON AB L M) 21. Februar 1979 (1979-02-21) * Seite 1, Zeile 23 - Seite 2, Zeile 18 * | 27,28, 36,37 | |
| X | DE 41 29 580 A (MARGANITZ ALFRED PROF DR ING) 11. März 1993 (1993-03-11) * Seite 1, Zeile 52 - Seite 2, Zeile 9 * | 27,28, 36,37 | RECHERCHIERTE SACHGEBIETE (Int.Cl.7) |
| X | US 4 316 173 A (MATSUMURA AKIRA ET AL) 16. Februar 1982 (1982-02-16) * Spalte 3, Zeile 34 - Spalte 4, Zeile 35 * | 27,28, 36,37 | |
| X | US 4 495 913 A (GRAY LARRY O) 29. Januar 1985 (1985-01-29) * Spalte 4, Zeile 19 - Zeile 36 * | 27,28, 36,37 | |
| X | * Spalte 5, Zeile 14 - Zeile 66 * | 46,56 | |
| X | DE 44 43 219 C (DAIMLER BENZ AG) 15. Mai 1996 (1996-05-15) * Spalte 9, Zeile 31 - Spalte 10, Zeile 29 * | 46,48, 56,58 | |

-/--

Der vorliegende Recherchenbericht wurde für alle Patentansprüche erstellt

| Recherchenort | Abschlußdatum der Recherche | Prüfer |
|---|---|---|
| BERLIN | 4. Dezember 2002 | Standring, M |

EPO FORM 1503 03.82 (P04C03)

Europäisches
Patentamt

**EUROPÄISCHER RECHERCHENBERICHT**

Nummer der Anmeldung

EP 02 02 0597

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 394 954 A (TASHIRO KENJI ET AL) 7. März 1995 (1995-03-07) * Spalte 8, Zeile 37 - Zeile 68 * | 71,81 | |
| A | | 70,72, 80,82 | |
| X | DE 195 09 492 A (DAIMLER BENZ AG) 19. September 1996 (1996-09-19) * Spalte 2, Zeile 57 - Spalte 3, Zeile 36 * | 47,57 | |
| A | US 4 833 612 A (OKUNO ITARU ET AL) 23. Mai 1989 (1989-05-23) * Spalte 1, Zeile 55 - Spalte 2, Zeile 19 * | 47,57 | |
| X | DE 44 09 909 A (TEVES GMBH ALFRED) 28. September 1995 (1995-09-28) * Anspruch 1 * | 65,72 | |
| X | EP 0 548 881 A (SUMITOMO ELECTRIC INDUSTRIES) 30. Juni 1993 (1993-06-30) * Ansprüche 1,2 * | 65,72 | RECHERCHIERTE SACHGEBIETE (Int.Cl.7) |
| X | EP 0 226 803 A (BOSCH GMBH ROBERT) 1. Juli 1987 (1987-07-01) * Seite 1, Zeile 7 - Seite 2, Zeile 9 * | 65,72 | |
| X | DE 43 40 921 A (BOSCH GMBH ROBERT) 8. Juni 1995 (1995-06-08) * Seite 1, Zeile 31 - Seite 2, Zeile 9 * | 65,66, 68,69, 72,73 | |
| X | US 5 479 349 A (KATAYAMA KAZUYORI) 26. Dezember 1995 (1995-12-26) * Spalte 4, Zeile 31 - Zeile 67 * | 81,82, 86-89 | |

-/--

Der vorliegende Recherchenbericht wurde für alle Patentansprüche erstellt

| Recherchenort | Abschlußdatum der Recherche | Prüfer |
|---|---|---|
| BERLIN | 4. Dezember 2002 | Standring, M |

EPO FORM 1503 03.82 (P04C03)

**Europäisches Patentamt**

Nummer der Anmeldung

EP 02 02 0597

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 048 631 A (ETOH YOSHIYUKI) 17. September 1991 (1991-09-17) * Spalte 1, Zeile 34 - Spalte 4, Zeile 2 * | 81,88 | |
| X | EP 0 612 641 A (LUCAS IND PLC) 31. August 1994 (1994-08-31) * Anspruch 1 * * Spalte 1, Zeile 58 - Spalte 3, Zeile 6 * | 90,91, 93-95,97 | |
| X | EP 0 720 928 A (LUCAS IND PLC) 10. Juli 1996 (1996-07-10) * Seite 5, Zeile 19 - Seite 6, Zeile 24 * | 90,92, 94,96 | |
| X | FR 2 732 651 A (RENAULT) 11. Oktober 1996 (1996-10-11) * Ansprüche 1-7 * | 90,91, 94,95 | |
| X | US 5 189 619 A (ENDO NORIKAZU ET AL) 23. Februar 1993 (1993-02-23) * Spalte 7, Zeile 56 - Spalte 8, Zeile 48 * | 98,102 | |
| X | EP 0 729 860 A (EATON VORAD TECHNOLOGIES LLC) 4. September 1996 (1996-09-04) * Spalte 8, Zeile 24 - Zeile 37 * | 98,102 | RECHERCHIERTE SACHGEBIETE (Int.Cl.7) |
| A | | 99,100 | |
| X | US 5 375 060 A (NOECKER GERHARD) 20. Dezember 1994 (1994-12-20) * Anspruch 1 * | 98,102 | |
| A | US 5 400 864 A (WINNER HERMANN ET AL) 28. März 1995 (1995-03-28) * Anspruch 1 * | 98,102 | |

-/--

Der vorliegende Recherchenbericht wurde für alle Patentansprüche erstellt

| Recherchenort | Abschlußdatum der Recherche | Prüfer |
|---|---|---|
| BERLIN | 4. Dezember 2002 | Standring, M |

**Europäisches**
**Patentamt**

**EUROPÄISCHER RECHERCHENBERICHT**

Nummer der Anmeldung

EP 02 02 0597

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 42 40 557 A (KOYO SEIKO CO) 3. Juni 1993 (1993-06-03)<br><br>* Spalte 2, Zeile 37 - Spalte 3, Zeile 6 *<br>* Spalte 4, Zeile 30 - Spalte 5, Zeile 28 * | 103,106, 108,110, 113 | |
| X | US 5 029 090 A (KUHN WOLFGANG ET AL) 2. Juli 1991 (1991-07-02)<br>* Anspruch 2 * | 103,110 | |

RECHERCHIERTE
SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| BERLIN | 4. Dezember 2002 | Standring, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.............

& : Mitglied der gleichen Patentfamilie, übereinstimmendes Dokument

EPO FORM 1503 03.82 (P04C03)

## EP 1 285 808 A1

## ANHANG ZUM EUROPÄISCHEN RECHERCHENBERICHT
## ÜBER DIE EUROPÄISCHE PATENTANMELDUNG NR.

EP 02 02 0597

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-12-2002

| Im Recherchenbericht angeführtes Patentdokument | | Datum der Veröffentlichung | Mitglied(er) der Patentfamilie | | Datum der Veröffentlichung |
|---|---|---|---|---|---|
| EP 0441961 | A | 21-08-1991 | JP | 2133242 A | 22-05-1990 |
| | | | JP | 2764959 B2 | 11-06-1998 |
| | | | DE | 3889465 D1 | 09-06-1994 |
| | | | DE | 3889465 T2 | 18-08-1994 |
| | | | EP | 0441961 A1 | 21-08-1991 |
| | | | KR | 9304580 B1 | 01-06-1993 |
| | | | WO | 9005650 A1 | 31-05-1990 |
| | | | US | 5088043 A | 11-02-1992 |
| EP 0429646 | A | 05-06-1991 | JP | 1293237 A | 27-11-1989 |
| | | | JP | 1309829 A | 14-12-1989 |
| | | | DE | 3889229 D1 | 26-05-1994 |
| | | | DE | 3889229 T2 | 24-11-1994 |
| | | | EP | 0429646 A1 | 05-06-1991 |
| | | | KR | 9304603 B1 | 01-06-1993 |
| | | | WO | 8911406 A1 | 30-11-1989 |
| | | | US | 5096015 A | 17-03-1992 |
| EP 0484995 | A | 13-05-1992 | US | 5173859 A | 22-12-1992 |
| | | | DE | 69123947 D1 | 13-02-1997 |
| | | | DE | 69123947 T2 | 30-04-1997 |
| | | | EP | 0484995 A2 | 13-05-1992 |
| US 5166881 | A | 24-11-1992 | JP | 3213438 A | 18-09-1991 |
| | | | JP | 2503705 B2 | 05-06-1996 |
| | | | JP | 3217340 A | 25-09-1991 |
| | | | JP | 3217341 A | 25-09-1991 |
| | | | DE | 4100993 A1 | 25-07-1991 |
| | | | KR | 9401633 B1 | 28-02-1994 |
| EP 0661188 | A | 05-07-1995 | IT | 1261151 B | 09-05-1996 |
| | | | EP | 0661188 A1 | 05-07-1995 |
| US 5197562 | A | 30-03-1993 | JP | 4012144 A | 16-01-1992 |
| US 4706195 | A | 10-11-1987 | JP | 1680446 C | 13-07-1992 |
| | | | JP | 3044005 B | 04-07-1991 |
| | | | JP | 61006033 A | 11-01-1986 |
| US 4468740 | A | 28-08-1984 | DE | 3200529 A1 | 21-07-1983 |
| | | | GB | 2114753 A ,B | 24-08-1983 |
| | | | JP | 58122247 A | 20-07-1983 |
| US 4713665 | A | 15-12-1987 | AT | 58248 T | 15-11-1990 |
| | | | AU | 575396 B2 | 28-07-1988 |
| | | | AU | 4223385 A | 21-11-1985 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT**
**ÜBER DIE EUROPÄISCHE PATENTANMELDUNG NR.**　　　EP 02 02 0597

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-12-2002

| Im Recherchenbericht angeführtes Patentdokument | | | Datum der Veröffentlichung | Mitglied(er) der Patentfamilie | | Datum der Veröffentlichung |
|---|---|---|---|---|---|---|
| US 4713665 | A | | | CA | 1247228 A1 | 20-12-1988 |
| | | | | DE | 3580394 D1 | 13-12-1990 |
| | | | | EP | 0162646 A2 | 27-11-1985 |
| | | | | IE | 56395 B1 | 17-07-1991 |
| | | | | JP | 60253990 A | 14-12-1985 |
| | | | | KR | 9301550 B1 | 04-03-1993 |
| | | | | MX | 158166 A | 12-01-1989 |
| | | | | ZA | 8503641 A | 28-01-1987 |
| US 4844557 | A | 04-07-1989 | | DE | 3718421 A1 | 15-12-1988 |
| | | | | DE | 3865095 D1 | 31-10-1991 |
| | | | | EP | 0293561 A2 | 07-12-1988 |
| | | | | JP | 2581758 B2 | 12-02-1997 |
| | | | | JP | 63312259 A | 20-12-1988 |
| GB 2002617 | A | 21-02-1979 | | SE | 409148 B | 30-07-1979 |
| | | | | CH | 632850 A5 | 29-10-1982 |
| | | | | DE | 2833050 A1 | 01-03-1979 |
| | | | | DK | 356178 A ,B, | 13-02-1979 |
| | | | | FI | 782352 A ,B, | 13-02-1979 |
| | | | | FR | 2400212 A1 | 09-03-1979 |
| | | | | IT | 1098359 B | 07-09-1985 |
| | | | | NL | 7808152 A ,B, | 14-02-1979 |
| | | | | NO | 782748 A ,B, | 13-02-1979 |
| | | | | SE | 7709119 A | 13-02-1979 |
| DE 4129580 | A | 11-03-1993 | | DE | 4129580 A1 | 11-03-1993 |
| US 4316173 | A | 16-02-1982 | | JP | 1439312 C | 19-05-1988 |
| | | | | JP | 56000665 A | 07-01-1981 |
| | | | | JP | 62048195 B | 13-10-1987 |
| | | | | DE | 3022048 A1 | 08-01-1981 |
| | | | | GB | 2052204 A ,B | 21-01-1981 |
| US 4495913 | A | 29-01-1985 | | AU | 567921 B2 | 10-12-1987 |
| | | | | AU | 2541084 A | 20-09-1984 |
| | | | | BR | 8401160 A | 23-10-1984 |
| | | | | CA | 1217837 A1 | 07-02-1987 |
| | | | | DE | 3409173 A1 | 04-10-1984 |
| | | | | FR | 2542813 A1 | 21-09-1984 |
| | | | | GB | 2136607 A ,B | 19-09-1984 |
| | | | | MX | 159640 A | 20-07-1989 |
| | | | | ZA | 8401870 A | 31-10-1984 |
| DE 4443219 | C | 15-05-1996 | | DE | 4443219 C1 | 15-05-1996 |
| | | | | US | 5663880 A | 02-09-1997 |

EPO FORM P0461

**ANHANG ZUM EUROPÄISCHEN RECHERCHENBERICHT**
**ÜBER DIE EUROPÄISCHE PATENTANMELDUNG NR.**                    EP 02 02 0597

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-12-2002

| Im Recherchenbericht angeführtes Patentdokument | | Datum der Veröffentlichung | Mitglied(er) der Patentfamilie | | Datum der Veröffentlichung |
|---|---|---|---|---|---|
| US 5394954 | A | 07-03-1995 | JP | 2870620 B2 | 17-03-1999 |
| | | | JP | 5288092 A | 02-11-1993 |
| | | | JP | 5294168 A | 09-11-1993 |
| | | | JP | 6017689 A | 25-01-1994 |
| | | | DE | 4310346 A1 | 14-10-1993 |
| | | | GB | 2265994 A ,B | 13-10-1993 |
| DE 19509492 | A | 19-09-1996 | DE | 19509492 A1 | 19-09-1996 |
| | | | FR | 2731659 A1 | 20-09-1996 |
| | | | GB | 2298937 A ,B | 18-09-1996 |
| | | | IT | RM960165 A1 | 15-09-1997 |
| | | | US | 5665026 A | 09-09-1997 |
| US 4833612 | A | 23-05-1989 | JP | 1894296 C | 26-12-1994 |
| | | | JP | 6004389 B | 19-01-1994 |
| | | | JP | 62241735 A | 22-10-1987 |
| | | | DE | 3710891 A1 | 29-10-1987 |
| | | | KR | 9107002 B1 | 14-09-1991 |
| DE 4409909 | A | 28-09-1995 | DE | 4409909 A1 | 28-09-1995 |
| | | | WO | 9525652 A1 | 28-09-1995 |
| EP 0548881 | A | 30-06-1993 | DE | 69213687 D1 | 17-10-1996 |
| | | | DE | 69213687 T2 | 27-02-1997 |
| | | | EP | 0548881 A2 | 30-06-1993 |
| | | | JP | 5246317 A | 24-09-1993 |
| | | | KR | 271559 B1 | 15-11-2000 |
| | | | US | 5403075 A | 04-04-1995 |
| EP 0226803 | A | 01-07-1987 | DE | 3545676 A1 | 25-06-1987 |
| | | | EP | 0226803 A2 | 01-07-1987 |
| | | | JP | 2716429 B2 | 18-02-1998 |
| | | | JP | 62155162 A | 10-07-1987 |
| DE 4340921 | A | 08-06-1995 | DE | 4340921 A1 | 08-06-1995 |
| US 5479349 | A | 26-12-1995 | JP | 2696027 B2 | 14-01-1998 |
| | | | JP | 5162565 A | 29-06-1993 |
| US 5048631 | A | 17-09-1991 | KEINE | | |
| EP 0612641 | A | 31-08-1994 | DE | 69403238 D1 | 26-06-1997 |
| | | | DE | 69403238 T2 | 02-10-1997 |
| | | | EP | 0612641 A1 | 31-08-1994 |
| | | | ES | 2104271 T3 | 01-10-1997 |
| | | | US | 5495251 A | 27-02-1996 |

Für nähere Einzelheiten zu diesem Anhang : siehe Amtsblatt des Europäischen Patentamts, Nr.12/82

## ANHANG ZUM EUROPÄISCHEN RECHERCHENBERICHT
## ÜBER DIE EUROPÄISCHE PATENTANMELDUNG NR.

EP 02 02 0597

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-12-2002

| Im Recherchenbericht angeführtes Patentdokument | | Datum der Veröffentlichung | Mitglied(er) der Patentfamilie | | Datum der Veröffentlichung |
|---|---|---|---|---|---|
| EP 0720928 | A | 10-07-1996 | DE | 69501663 D1 | 02-04-1998 |
| | | | DE | 69501663 T2 | 18-06-1998 |
| | | | EP | 0720928 A2 | 10-07-1996 |
| | | | JP | 8230514 A | 10-09-1996 |
| | | | US | 5749426 A | 12-05-1998 |
| FR 2732651 | A | 11-10-1996 | FR | 2732651 A1 | 11-10-1996 |
| US 5189619 | A | 23-02-1993 | JP | 2503681 B2 | 05-06-1996 |
| | | | JP | 3092436 A | 17-04-1991 |
| | | | JP | 2700495 B2 | 21-01-1998 |
| | | | JP | 3092437 A | 17-04-1991 |
| EP 0729860 | A | 04-09-1996 | US | 5839534 A | 24-11-1998 |
| | | | AU | 4580596 A | 05-09-1996 |
| | | | BR | 9600653 A | 30-12-1997 |
| | | | CA | 2170658 A1 | 02-09-1996 |
| | | | EP | 0729860 A2 | 04-09-1996 |
| | | | JP | 8310272 A | 26-11-1996 |
| | | | US | 6076622 A | 20-06-2000 |
| | | | ZA | 9601560 A | 02-09-1996 |
| US 5375060 | A | 20-12-1994 | DE | 4209060 A1 | 23-09-1993 |
| | | | GB | 2265242 A ,B | 22-09-1993 |
| US 5400864 | A | 28-03-1995 | DE | 4200694 A1 | 15-07-1993 |
| | | | JP | 5246270 A | 24-09-1993 |
| DE 4240557 | A | 03-06-1993 | DE | 4240557 A1 | 03-06-1993 |
| | | | FR | 2684337 A1 | 04-06-1993 |
| US 5029090 | A | 02-07-1991 | DE | 3819474 C1 | 30-11-1989 |
| | | | FR | 2632577 A1 | 15-12-1989 |
| | | | GB | 2221200 A ,B | 31-01-1990 |
| | | | IT | 1231374 B | 02-12-1991 |
| | | | JP | 1950398 C | 10-07-1995 |
| | | | JP | 2037050 A | 07-02-1990 |
| | | | JP | 6076025 B | 28-09-1994 |
| | | | SE | 466302 B | 27-01-1992 |
| | | | SE | 8902041 A | 09-12-1989 |

EPO FORM P0461

Für nähere Einzelheiten zu diesem Anhang : siehe Amtsblatt des Europäischen Patentamts, Nr.12/82